(19)

**Europäisches Patentamt**
**European Patent Office**
**Office européen des brevets**

(11) **EP 3 454 090 B1**

(12) **EUROPEAN PATENT SPECIFICATION**

(45) Date of publication and mention
of the grant of the patent:
**04.11.2020  Bulletin 2020/45**

(51) Int Cl.:
**G01S 19/30** $^{(2010.01)}$

(21) Application number: **17189747.3**

(22) Date of filing: **07.09.2017**

(54) **A METHOD AND DEVICE FOR SIGNAL ACQUISITION OF A GENERALIZED BOC-MODULATED SIGNAL**

VERFAHREN UND VORRICHTUNG ZUR SIGNALERFASSUNG EINES VERALLGEMEINERTEN BOC-MODULIERTEN SIGNALS

PROCÉDÉ ET DISPOSITIF D'ACQUISITION DE SIGNAL D'UN SIGNAL MODULÉ GÉNÉRALISÉ DE TYPE BOC

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**13.03.2019  Bulletin 2019/11**

(73) Proprietor: **Airbus Defence and Space GmbH
82024 Taufkirchen (DE)**

(72) Inventors:
• **SOUALLE, Francis
  81543 München (DE)**
• **FLOCH, Jean-Jacques
  81677 München (DE)**
• **WENDEL, Jan
  81373 München (DE)**

(74) Representative: **Frenkel, Matthias Alexander
  Wuesthoff & Wuesthoff
  Patentanwälte PartG mbB
  Schweigerstrasse 2
  81541 München (DE)**

(56) References cited:
**US-A1- 2004 071 200**

EP 3 454 090 B1

**Description**

The present invention relates to a method and device for signal acquisition of a Generalized BOC-modulated signal.

The first generation of GNSS signals (GPS and GLONASS systems) were modulated with the Binary Phase Shifted Keying (BPSK(N)) pulse shape, as for the GPS CA L1 signal using a BPSK(1). Here N designates the multiplicative factor which enables to derive the actual chip rate, $f_c$, from a common reference frequency $f_0$=1.023MHz, as follows $f_c$=N×$f_0$. The drawback of the BPSK pulse shape is an unsatisfactory code ranging performance. The always growing needs in accuracy for the final position solution asked for a new generation of pulse shapes which could offer an improved ranging accuracy. For this purpose, the so-called Binary Offset Carrier (BOC)-modulated signal has been introduced. The BOC(M,N)-modulated signal is obtained by multiplying an underlying BPSK(N)-modulated signal having a chip rate $f_c$ with a cosine or sinus function oscillating at a sub-carrier frequency, $f_{sc}$=M×$f_0$, and quantised over two levels, which explains the usage for the term "Binary". The BPSK pulse shape used for the generation of the BOC(M,N)-modulated signal is called primitive pulse shape. If no quantisation is applied onto the cosine or sinus function, then a so-called Linearly Offset Carrier (LOC)-modulated signal is obtained. Examples of BOC-modulated pulse shapes of current navigation signals are the BOC(10,5) of the Galileo E6-A signals, the BOC(15,2.5) of the Galileo E1-A or the BOC(10,5) of the GPS M signals. Other examples of pulse shapes for current navigation signals can also combine two elementary BOC-modulated signals, as for example the Galileo E1-B and E1-C signals, combining each a BOC(1,1) and a BOC(6,1), or the GPS L1C signal, also combining a BOC(1,1) and a BOC(6,1). Here, two different cosine or sinus functions having each different sub-carrier frequencies $f_{sc1}$=$M_1$×$f_0$ and $f_{sc2}$=$M_2$×$f_0$ are multiplied with the underlying BPSK($N_1$) and BPSK($N_2$), where $N_2$ can be different or equal to $N_1$, yielding two elementary BOC-modulated signals BOC($M_1$,$N_1$) and BOC($M_2$, $N_2$). The elementary BOC-modulated signals are each multiplied with a complex factor $\alpha \times e^{-2\pi j((\varphi)}$ and then recombined, either using a amplitude multiplexing scheme, meaning that the elementary BOC-modulated complex signals BOC($M_1$,$N_1$)×$\alpha_1$×$e^{-2\pi j(\varphi 1)}$ and BOC($M_2$,$N_2$)×$\alpha_2$×$e^{-2\pi j(\varphi 2)}$ are added, or using a time multiplexing scheme, meaning that segments of the elementary BOC-modulated complex signals BOC($M_1 N_1$)×$\alpha_1$×$e^{-2\pi j(\varphi 1)}$ alternate with segments of the elementary BOC-modulated complex signals BOC($M_2$,$N_2$)×$\alpha_2$×$e^{-2\pi j((\varphi 2)}$. The relative power sharing of the two elementary BOC-modulated signals is achieved either by applying appropriate scaling amplitudes $\alpha_1$ and $\alpha_2$, in the case of amplitude multiplexing scheme, or by adapting the proportions between segments containing the elementary BOC-modulated complex signals BOC($M_1$,$N_1$)×$\alpha_1$×$e^{-2\pi j(\varphi 1)}$ and segments containing the elementary BOC-modulated complex signals BOC($M_2$,$N_2$)×$\alpha_2$×$e^{-2\pi j(\varphi 2)}$, in the case of timing multiplexing scheme. This example based on existing navigation signals can be extended to Generalized BOC-modulated signals, also called G-BOC, obtained by combining K elementary BOC-modulated signals either with an amplitude or a time multiplexing scheme, after having scaled them with complex factor $\alpha_k$×$e^{-2\pi j(\varphi k)}$. In the special cases of the Galileo E1-B and E1-C, or GPS L1C K=2.

The main consequence of the cosine or sinus multiplication is a wider spectral occupation. Due to this larger spectral occupation, the BOC signal offers a better immunity against multipath effects and thermal noise during tracking phase. The main draw-back of such signals is their Auto-Correlation Function (obtained by a matched replica) which contains several peaks which force to reduce the code binwidth (or equivalently the number of correlators) during the acquisition phase. This drawback is especially distinct for an acquisition of the BOC(15,2.5) signal of the Galileo E1-A.

To prevent this situation, techniques have been developed and used to enlarge a main peak of the correlation function (no more obtained by a matched filter) but at the cost of larger squaring losses which force a higher $C/N_0$ requirement.

US 2004/071200 A1 disclosess signals processing architectures for direct acquisition of spread spectrum signals using long codes. Techniques are described for achieving a high of parallelism, employing code matched filter banks and other hardware sharing. In one embodiment, upper and lower sidebands are treated as two independent signals with identical spreading codes. Cross-correlators, in preferred embodiments, are comprised of a one or more banks of CMFs for computing parallel short-time correlations (STCs) of received signal samples and replica code sequence samples, and a means for calculating the cross-correlation values utilizing discrete-time Fourier analysis of the computed STCs. One or more intermediate quantizers may optionally be disposed between the bank of code matched filters and the cross-correlation calculation means for reducing word-sizes of the STCs prior to Fourier analysis. The techniques described may be used with BOC modulated signals or with any signal having at least two distinct sidebands.

Therefore, the present invention is intended to solve the technical problem of significantly limiting the corresponding squaring losses.

The present invention is defined by the independent claims. Specific embodiments are defined by the dependent claims.

According to a first aspect of the present invention, a method for signal acquisition of a Generalized Binary Offset Carrier, G-BOC, modulated signal comprising K elementary BOC($M_k$,$N_k$)-modulated signals is provided, as defined by independent method claim 1.

For example, the detector output may indicate detection when the detector output is equal to or higher than the detection threshold.

Herein, the term hypothesis may also be understood as test hypothesis. BOC-modulated can mean the usage of a BOC pulse shape. The BOC-modulated signal can be modulated with symbols/data. If it is not modulated with symbols/data, then it serves as pilot signal. Herein the terms "detector" and "detector output" can be used interchangeably.

One of the main consequences of this disclosure is that the detector output can be made independent from a symbol included in the data modulated on the BOC-modulated signal. This has the advantage of improving acquisition performance for data modulated signals using a BOC pulse shape.

The detection threshold can be set to a probability of false alarm or a probability of missed detection.

The step of correlating can comprise a coherent integration. For conventional acquisition the coherent integration can be performed over a time duration which is limited by the duration of the symbols or data which can be modulated onto the G-BOC-modulated signal. The coherent integration can be performed over a time duration being equal or lower than a symbol duration, when symbols or data are included in data modulated on the G-BOC-modulated signal. For typical GNSS signals the symbols are derived from the data bits of information using a dedicated coding scheme such as a convolutional coding scheme. In comparison to conventional acquisition, the proposed disclosure enables to discard the constraint regarding the symbol or data duration onto the coherent integration time. For G-BOC-modulated signals which do not comprise symbol or data, no constraint related to symbol or data modulation applies to the time duration of the coherent integration.

The time duration for the coherent integration time can also depend on the dynamic of a link between a transmitter and a receiver. The transmitter can be a space-based or terrestrial GNSS or a RNSS transmitter. The receiver can be a space-based or terrestrial GNSS or a RNSS receiver respectively. Typical terrestrial RNSS transmitters are called Pseudolites. The dynamic of the link between a space-based transmitter and a terrestrial or space-based receiver is usually large, and the resulting Doppler can limit the maximal tolerated coherent time duration. The dynamic of a link between a terrestrial transmitter and a terrestrial receiver is usually much smaller, and the coherent time duration can be much longer.

A hardware group delay and/or a carrier delay can be estimated and included in the complex multiplication. The carrier delay can be based on an ionospheric effect.

It is possible that only the real part of the detector output indicates detection.

It is also possible that only a positive detector output is compared to the detection threshold and a negative detector output is discarded or ignored, for example for the step of comparing with the detection threshold.

The G-BOC-modulated signal can comprise K sub-carriers. The K sub-carriers can be multiplexed either with an amplitude or a time multiplexing scheme. Each of the K sub-carriers can be modulated with data or not. When a sub-carrier $f_{sc,k}$ is modulated with data, the data or symbol contained in the lower sideband signal corresponding to the elementary sub-carrier $f_{sc,k}$ can be identical or different to the data or symbol contained in the upper sideband signal corresponding to the elementary sub-carrier $f_{sc,k}$. At the generation of the G-BOC modulated signal, when the data is multiplied in the time domain with a cosine, $\cos(2\pi f_{sc,k}t)$ or a sinus $\sin(2\pi f_{sc,k}t)$ term operating at sub-carrier frequency $f_{sc,k}$, then an identical data is contained in the upper and lower side-band signals. The data contained in the lower and upper sideband signals corresponding to the elementary sub-carrier $f_{sc,k}$ can be different when, at the generation of the G-BOC modulated signal, the data which is multiplied in the time domain with an exponential $\exp(-2\pi f_{sc,k}t)$ standing for the lower side-band signal is different to the data which is multiplied in the time domain with an exponential $\exp(+2\pi f_{sc,k}t)$ standing for the upper side-band signal.

The data can be modulated onto the G-BOC signal by multiplying the data modulated pulse shape either with a cosine or a sinus function yielding to the same data on the upper and lower sideband signals of a sub-carrier frequency $f_{sc,k}$, or by multiplying the data modulated pulse shape with an exponential function to modulate different data on the upper and lower sideband signals of a sub-carrier frequency $f_{sc,k}$.

In particular when the G-BOC-modulated signal is modulated with I =2xK data symbols, a number of symbols or data can correspond to the number of carriers I. The two data symbols corresponding to each of the K sub-carriers can be identical or different. Each of the I carriers can have merely one symbol. A time-frequency domain pattern of the I symbols or data can be symmetrical to a central carrier of the G-BOC-modulated signal. When the time-frequency domain pattern is not symmetrical then the corresponding signal is referred to as Generalized BOC with asymmetrical data demodulation, and can be compared to an Orthogonal Frequency Division Multiplexing. In the case of K=1 sub-carriers, each symbol can be spread with one spreading sequence. In the case of K>1 subcarriers, each symbol can have a same duration as one chip of the BOC-modulated signal.

The I symbols can correspond to I Fourier components determined by a Discrete or Fast Fourier Transform. The step of combining can comprise complex multiplication of the Fourier components.

The I symbols can correspond to I Fourier components forming an asymmetrical time-frequency pattern determined by a Discrete or Fast Fourier Transform. The step of combining can comprise selecting pairs of the I symbols over time such that their values is identical and their frequencies are symmetrical to the central carrier of the G-BOC-modulated signal. Further, the step of combining can comprise multiplying the selected pairs with a correction factor accounting for the time offset between each of the selected pairs. Further, the step of combining can comprise complex multiplying the corrected I Fourier components.

According to a second aspect of the present invention, a computer program which when carried out on a processor of a device for signal acquisition of a generalized binary offset carrier, G-BOC, causes the processor to carry out the method according to the first aspect is provided.

According to a third aspect of the present invention, a storage device storing a computer program according to the second aspect is provided.

According to a fourth aspect of the present invention, a device for signal acquisition of a Generalized Binary Offset Carrier, G-BOC, modulated signal comprising K elementary BOC(Mk,Nk)-modulated signals is provided, as defined by independent device claim 14.

The present invention offers significant advantages w.r.t. a Double Side Band, DSB, method, for applications 1) with limited effects from the ionosphere and 2) with low dynamic of the emitter-receiver link (transmitter-receiver link).

Even if the foregoing described aspects with respect to the method were only described for the method, these aspects can further relate to the foregoing described device and vice versa.

The present invention will be further described in more detail hereinafter with reference to the figures.

Figure 1      schematically illustrates a GNSS receiver;

Figure 2      schematically illustrates an acquisition scheme for Binary Phase Shift Keying, BPSK, signals;

Figure 3      schematically illustrates an Auto-Correlation Function, ACF, for a BPSK(2.5) pulse shape;

Figure 4      schematically illustrates an acquisition scheme for Binary Offset Carrier, BOC, signals;

Figure 5      schematically illustrates an Auto-Correlation Function (ACF) for a BOC(5, 2.5) signal;

Figure 6      schematically illustrates a Dual Side Band, DSB, acquisition scheme;

Figure 7      schematically illustrates the detector output for the DSB acquisition according to the scheme presented in figure 6;

Figure 8      schematically illustrates an acquisition scheme according to an embodiment of the present invention;

Figure 9      schematically illustrates a dwell time diagram for a non-coherent integration time and for a varying coherent integration time for a SBP detector;

Figure 10      schematically illustrates squaring losses due to the non-coherent summations for mitigation of symbol flips;

Figure 11      schematically illustrates a R.O.C. Curve for a BOC(5,2.5) signal;

Figure 12      schematically illustrates a R.O.C. Curve for a BOC(15,2.5) signal;

Figure 13      schematically illustrates Doppler Mis-Alignment Losses for the DSB and the SBP detector applied to BOC acquisition;

Figure 14      schematically illustrates power spectral density, PSD, of the BOC(5,2.5) and intermediate signal used for DSB and SBP detector;

Figure 15      schematically illustrates the absolute value of the Matched Filter, DSB and SBP detector (BOC(5,2.5));

Figure 16      schematically illustrates the power spectral density, PSD, of the BOC(15,2.5) and intermediate signal used for DSB and SBP detector;

Figure 17      schematically illustrates the absolute value of the Matched Filter, DSB and SBP detector for (BOC(15,2.5));

Figure 18A      schematically illustrates a distribution for the DSB in the "H0" and "H1" hypotheses for BOC(15,2.5) for 25 dB-Hz;

Figure 18B    schematically illustrates a distribution for the SBP Detector in the "H0" and "H1" hypotheses for BOC(15,2.5) for 25 dB-Hz;

Figure 19A    schematically illustrates a Distribution for the DSB in the "H0" and "H1" hypotheses for BOC(15,2.5) for 30 dB-Hz;

Figure 19B    schematically illustrates a Distribution for the SBP Detector in the "H0" and "H1" hypotheses for BOC(15,2.5) for 30 dB-Hz;

Figure 20A    schematically illustrates a distribution for the DSB in the "H0" and "H1" hypotheses for BOC(15,2.5) for 35 dB-Hz;

Figure 20B    schematically illustrates a Distribution for the SBP Detector in the "H0" and "H1" hypotheses for BOC(15,2.5) for 35 dB-Hz;

Figure 21    schematically illustrates a Model for the SBP detector output in the "H0" and "H1" hypotheses;

Figure 22    schematically illustrates the sequencing of the spreading codes involved in the generation of a Generalized BOC signal using an time multiplexing, with K = 3 elementary BOC($M_k$,$N_k$) signals;

Figure 23    schematically illustrates a scheme applied for the acquisition of a Generalized BOC signal with K =2 and according to an embodiment of the present invention;

Figure 24    schematically illustrates the independency of the four noise contributions involved in the calculation of the generalized SBP detector applicable to a Generalized BOC modulated signal with K=2;

Figure 25    schematically illustrates the generation of a G-BOC$^{AS}$ signal;

Figure 26    schematically illustrates a Time-Frequency Domain Pattern of Modulated Symbols of a G-BOC$^{AS}$ signal;

Figure 27    schematically illustrates a Time-Frequency Domain Pattern of Modulated Symbols of a G-BOC$^{AS}$ signal according to an embodiment of the present invention; and

Figure 28    schematically illustrates a Time-Frequency Domain Pattern of Modulated Symbols of a G-BOC$^{AS}$ signal according to an embodiment of the present invention.

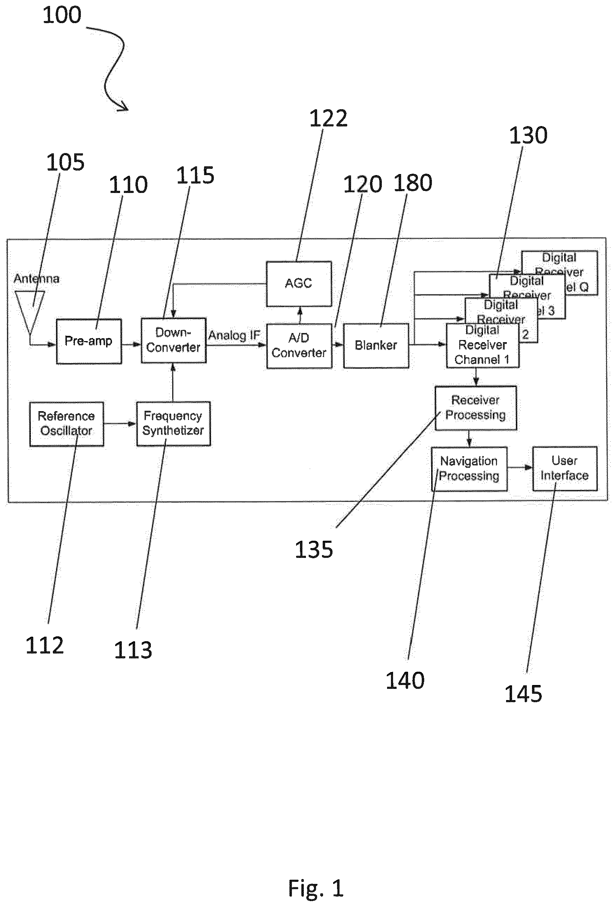

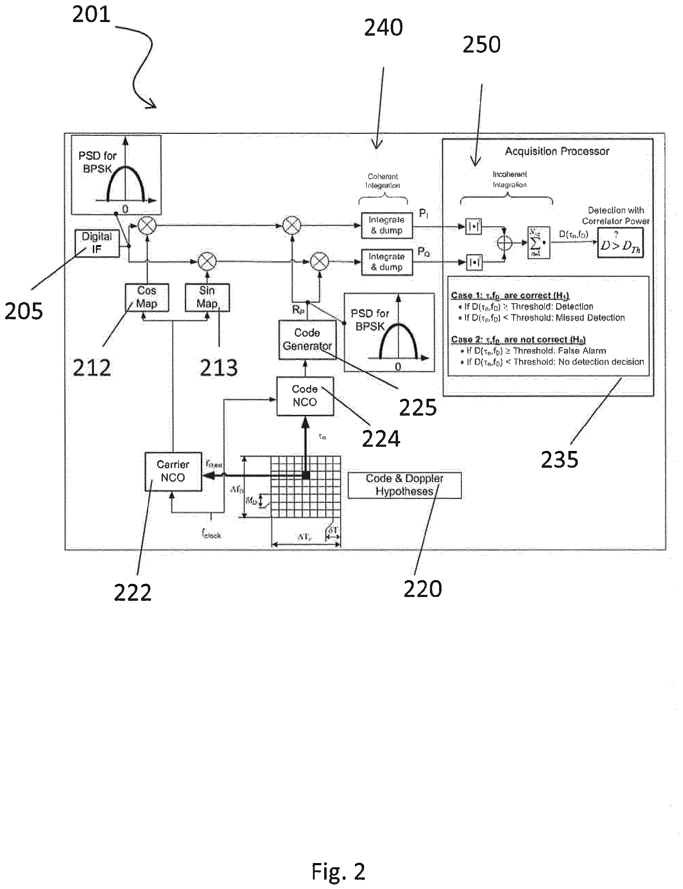

Figure 1 schematically illustrates a GNSS receiver 100. Here, the main functional blocks are briefly discussed. A signal can be received via an antenna 105, which is then fed to a pre-amplifier stage 110, whose aim is to increase the received signal to a level (voltage) compatible with the following functional blocks of the receiver front-end. The pre-amplifier stage 110 can comprise a single or several amplifiers mounted in cascade, and the first amplifier called Low Noise Amplifier (LNA) is usually characterised by a small Noise Figure (NF). The signal in an RF domain, for example 1575.42 MHz for the Galileo E1-B signal, is first down-converted to an Intermediate Frequency (IF). This down-conversion is usually performed in analogue by the Down-Converter 115 before the Analogue to Digital Converter, A/D Converter 120, but could also be performed in a digital domain, if the sampling frequency of the A/D Converter 120 is large enough following Nyquist condition. To perform down-conversion, the signal in the RF domain is multiplied with a cosine having a frequency (IF-RF), for example IF-1575.42 MHz. The frequency (IF-RF) is generated via a Frequency Synthesizer 113 driven by a Reference Oscillator 112. Then the down-converted signal being in an IF domain is sampled by the A/D Converter 120. It is usual to call the part before the A/D Converter 120, the "Analogue Front-End" and the part following the A/D Converter 120 the "Digital Front-End". In order to adapt the power of the received signal in near real time, an Automatic Gain Control, AGC 122, monitors a power level of the samples and provides an information to multiply the received signal in the RF domain with a variable gain, for example into the Down-Converter 115 as illustrated in the figure 1. Finally, the output of the A/D Converter 120 is fed to a blanker 180 whose aim is to set the samples, which contain pulsed interferences with high power on top of the received signals, to e.g. 0. In figure 1 the blanker 180 is implemented in the digital front-end, but in other receiver implementations, the blanker 180 can be implemented in the analogue front-end. After blanking, the digital samples are then provided to Q Digital Receiver Channels 130, where Q represents the number of line-of-sight transmitter signals, for example satellite signals, necessary to be tracked in order to calculate a position, with a required position and timing performance. Usually, the more channels exist the better the position accuracy. Each of the Q Digital Receiver Channels 130 aims at processing the signal in the IF domain by first wiping-off the remaining carrier frequency IF, and by providing the different correlator channels, which are necessary for signal acquisition but also for a code and carrier estimation and navigation data demodulation. The present invention focusses on acquisition processing. The aim of the acquisition of a CDMA signal is to coarsely estimate the code delay and the Doppler frequency of the received signal. The estimated code delay and Doppler frequency are usually called code (delay) and Doppler (frequency) hypotheses respectively. For this purpose, a set of code delay hypotheses and Doppler frequency hypotheses is tested. For each pair of code delay/Doppler frequency hypotheses a replica is firstly generated by shifting the spreading sequence with the corresponding code delay and multiplying this shifted sequence with a carrier modulated at the Doppler frequency hypothesis. Then the received signal is correlated with the replica generated for the code delay and Doppler frequency hypotheses. Finally, the corresponding correlation is squared to build the acquisition detector, which is an equivalent to a power estimator. This detector output is compared to a threshold either set according to a desired Probability of False Alarm (PFA) caused by unavoidable thermal noise and possibly combined with correlation contributions from other received signals different from the one to be acquired, or set according to a probability of missed-detection (PMD). A situation called a cold start exists, when no information about the code delay and Doppler frequency of the received signal is available. All code delay hypotheses corresponding to the whole spreading sequence have to be searched. Typical order of magnitude for the code delay to be searched corresponds to the spreading code duration, for example 1ms (equivalent to the 1023 chip sequence) for the GPS C/A signals and 4ms for the Galileo E1-B and (equivalent to the 4092 chip sequence).Typical order of magnitude for the Doppler to be searched is $\pm 10$ KHz. To limit the combined Code and Doppler mis-alignment losses during the correlation process to a few dBs, usually 1 to 3 dB, one code delay hypothesis is usually tested every $T_c/2$ or $T_c/4$, where $T_c$ is the chip duration, and one Doppler hypothesis is tested every 50 to 100Hz. As an example for a GPS C/A signal having a spreading sequence containing 1023 chips, at least 2046 code delay hypotheses can be tested. Those sampling intervals for the code delay and Doppler frequency hypotheses are called respectively Code and Doppler binwidths. In order to improve the performances for the acquisition process, it is possible to add non-coherently the detector outputs for successive correlations of the received signal with the replica generated with the same Code delay and Doppler frequency hypothesis to be tested. Due to the non-coherent summations, so called squaring losses have to be taken into account. To avoid such squaring losses, it is possible to increase a coherent integration time. The coherent integration is one configuration parameter for computing the correlation of the received signal with the replica. The replica and received signals can be correlated over a longer correlation time, but in that case the Doppler mis-alignment losses increases. The appropriate configuration setting of the acquisition scheme, such as code delay and Doppler binwidths, coherent correlation time, number of non-coherent summations, PFA and PMD rate, etc., depends on a choice of a receiver manufacturer. For BPSK signals, the acquisition scheme is further explained in figure 2.

Figure 2 schematically illustrates an acquisition scheme for Binary Phase Shift Keying, BPSK, signals, formerly explained and based on a digital receiver channel introduced in figure 1. A BPSK(N) designates a Binary Phase Shift Keying modulation for the chips, with a chip rate, $f_c$, equal to $f_c = N \times f_0$, where N designates the multiplicative factor applied to the common reference frequency $f_0 = 1.023$MHz. Typical BPSK signals are the GPS L1 C/A with a BPSK(1) and the GPS L5 signals with a BPSK(10). A received signal in the IF domain provided by the functional block Digital IF 205 is separated into an in-phase component and a quadrature component via a respective cosine and sine function provided by the Cos Map 212 and the Sin Map 213 by use of a Carrier NCO 222 which is offset by a Doppler frequency hypothesis 220. Both in-phase and quadrature components are then correlated with a replica generated on the basis of a code delay hypothesis via a Code NCO 224 and a Code Generator 225. The correlation comprises a step of coherent integration 240. For signal detection, an incoherent integration 250 is performed for each of the correlation results. This incoherent integration 250 comprises the step of squaring of the correlator outputs of the in-phase and quadrature components and the step of summing and combining the $N_{NC}$ squared outputs of the in-phase and quadrature components. $N_{NC}$ designates the number of non-coherent summations. The results are summed up to form, $D_{MF}$,

$$D_{NC}^{MF} = \sum_{}^{N_{NC}} (\left| CCF_{In} \right|^2 + \left| CCF_{Quad} \right|^2 ),$$

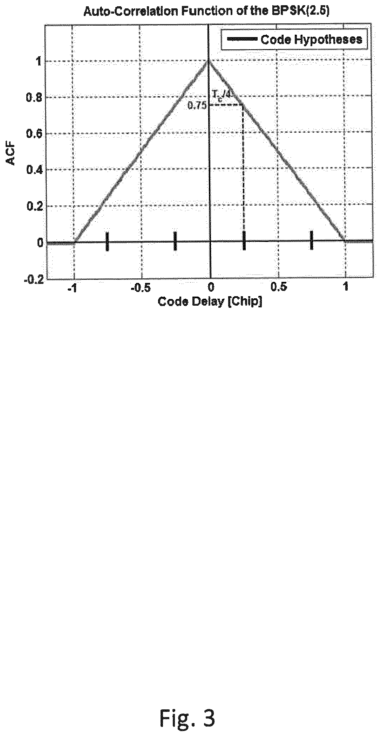

which is usually called detector output. The Matched Filter Detector output, $D_{MF}$, is then compared to a detection threshold. These steps are performed in an acquisition processor 235. A respective Correlation result for an exemplary BPSK signal is shown in figure 3.

Figure 3 schematically illustrates an Auto-Correlation Function (ACF) for a BPSK(2.5) pulse shape, which is used to detect the presence of the signal for the Code delay and Doppler frequency hypotheses. In this illustrative example, two hypotheses per chip are tested, each highlighted as dark lines at $\pm 0.25$ and $\pm 0.75$ chip on the X-axis. Further, the replica in figure 3 has Zero-Doppler mis-alignment. The figure also highlights the worst case alignment between the actual position of the correlation function and code hypothesis grid. Here the Code-Misalignment losses (2.5dB = -20*log(0.75)) are therefore evaluated for the code delay of $T_c/4$.

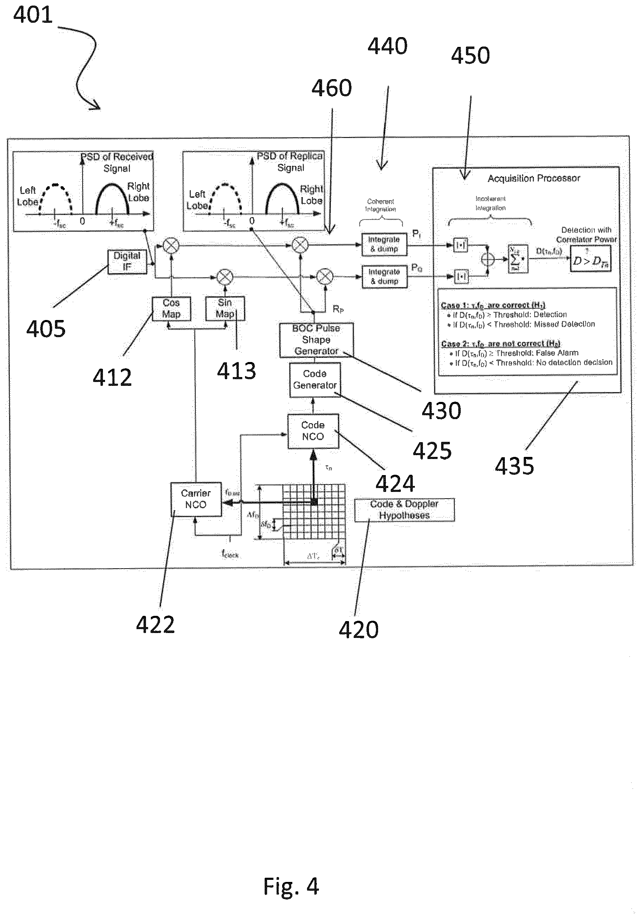

Figure 4 schematically illustrates an acquisition scheme for Binary Offset Carrier, BOC, signals. The new generation of GNSS signals, for example in systems like Galileo, GPS, COMPASS, a pulse shape modulation, called BOC(M,N) is used. For example, the Galileo PRS signals are modulated with a BOC(10,5) for the E6-PRS signals and a BOC(15,2.5) for the E1-PRS signals, and GPS M-signals are modulated with a BOC(10,5). BOC(M,N) signals have a chip rate of N×1.023 MCps and a so-called sub-carrier at M×1.023 MHz. This BOC(M,N) pulse shape is generated by multiplying the spreading sequence modulated with a primitive BPSK(N) pulse shape having the chip rate, $f_c$, of N×1.023 MCps with a cosine or sinus function oscillating at a sub-carrier frequency, $f_{sc}$, at $f_{sc}$=M×1.023 MHz frequency, and digitised with one bit, only +1 and -1 levels, which is referred to as "binary". If no quantisation is applied onto the cosine or sinus function, then a so-called Linearly Offset Carrier (LOC)-modulated signal is obtained. The main consequence of the application of sub-carrier is that the spectral representation of a BOC(M,N) has two main side-lobes distant of +M×1.023 MHz and -M×1.023 MHz with respect to the central carrier frequency, while the spectral representation of a BPSK(N) signal has a single main lobe at the central carrier frequency. BOC(M,N) signals are known to be more robust against thermal noise and multipath effects, when considering tracking performances. This is due to their wider bandwidth directly depending on M. When considering acquisition performances, it could also be possible to apply a matched filter acquisition strategy already proposed for the BPSK modulated signal in figure 2. This matched filter acquisition strategy is presented on figure 4 for BOC-modulated signals with its respective functional blocks.

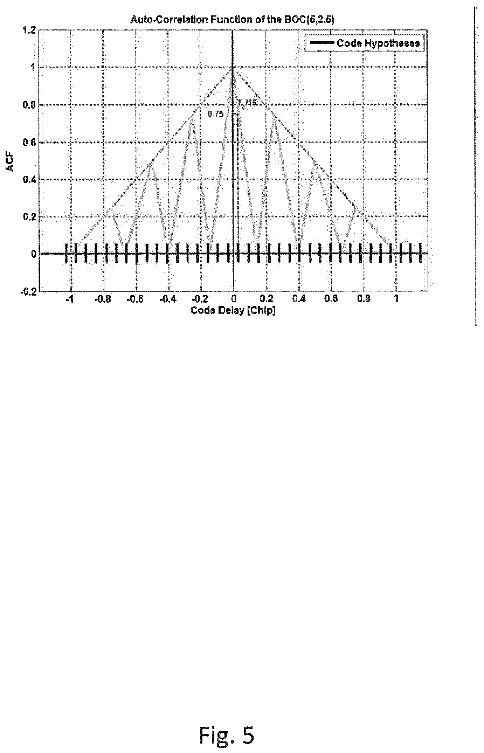

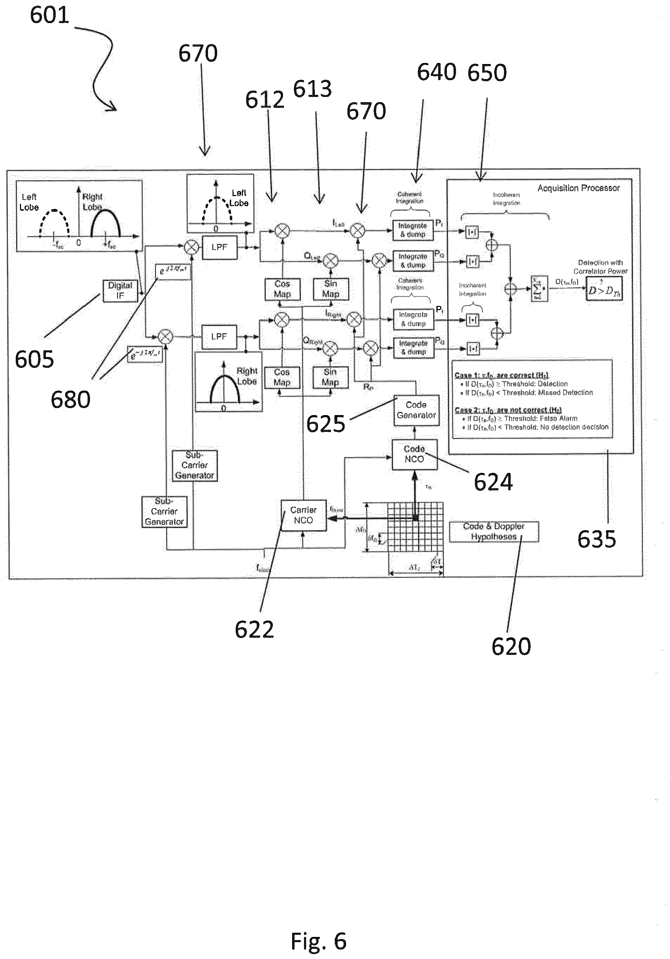

Figure 5 schematically illustrates an Auto-Correlation Function (ACF) for a BOC(5, 2.5) signal. If one applies the same acquisition scheme for a BOC signal according to figure 4 as for the BPSK signal according to figure 2, namely a matched filter replica, where the replica uses a BOC pulse shape, then the central peak of the correlation function becomes narrower. This is illustrated on figure 5 for the special case of a BOC(5,2.5) signal. It can be effectively observed that for the same Code Mis-alignment losses (2.5 dB = -20*log(0.75)), the code binwidth becomes 4 times smaller, and therefore the number of code hypotheses becomes 4 times larger. This affects the number of dark lines illustrated in figure 5 on the X-axis. Further, the replica in figure 5 has Zero-Doppler mis-alignment. If one considers a BOC(M,N) where the ratio between the chip rate (N×1.023 MCps) and the sub-carrier (M×1.023 MHz) is higher, as for example the BOC(15,2.5) of the Galileo E1-A signals, then the binwidth becomes even smaller for the same mis-alignment losses, which can concretely lead to an unacceptable number of hardware correlators. In figure 5, the exemplary binwidth ensuring 2.5dB of Code mis-alignment losses is $T_c/8$ instead of $T_c/2$ as in the case of the BPSK(2.5) signal. To avoid such a situation, there is an alternative and well-recognized acquisition method shown in figure 6.

Figure 6 schematically illustrates a Dual Side Band, DSB, acquisition scheme. For the "left spectral side lobe", the respective lower spectral sideband of the BOC signal, the input BOC signal is up-converted, for example by multiplication with an exponential which is itself generated by a sub-carrier generator 680, and then filtered with a Low Pass (LP) Filter at baseband 670, before being correlated with a replica modulated with a BPSK(N) pulse shape having the same chip rate, N×1.023 MCps, as the BOC signal and also the same spreading sequence, leading to the $CCF_{Left}$ correlation function, namely $R_{Left}^{Up}(\Delta\tau, \varepsilon_{f_D})$. In that case, the correlation 640 for "left spectral side lobe" of the BOC signal is used for acquisition. Herein the in-phase and quadrature components of the correlator are squared and summed to form the non-coherent correlation a $CCF_{Left} = |CCF_{In}|^2 + |CCF_{Quad}|^2$. By summing non-coherently $N_{NC}$ such successive non-coherent correlations, $D_{NC}^{SSB} = \sum^{N_{NC}} \left|CCF_{Left}\right|^2$, a first detector output is thus generated. This corresponds to a so-called Single Side Band (SSB) acquisition. In an ideal case, without filtering effects, the absolute (and normalised) value of the correlation function almost corresponds to the correlation function of a BPSK(N) pulse shape having the same chip rate N×1.023 MCps. Now by processing only half of the BOC signal, the energy of the detector output becomes half smaller. Therefore, to improve the energy of the detector, the same procedure is applied to the "right spectral side lobe" of the BOC(M,N) signal (first down-conversion, for example by multiplication of an exponential which is itself generated by the sub-carrier generator 680, second LPF 670 and third correlation with a BPSK(N) replica 640), leading to the $CCF_{Right}$ correlation function, namely $R_{Right}^{Down}(\Delta\tau, \varepsilon_{f_D})$. Then the absolute value for both correlation functions is squared and added non-coherently: $D_1^{DSB} = \left|CCF_{Left}\right|^2 + \left|CCF_{Right}\right|^2$. This corresponds to the Dual Sided-Band (DSB) acquisition. As for the matched filter acquisition $N_{NC}$ non-coherent and successive correlations can be summed up and the output of the squared and non-coherently added correlation functions to $D_{DSB}$ with

$$D_{NC}^{DSB} = \sum^{N_{NC}} (\left|CCF_{Left}\right|^2 + \left|CCF_{Right}\right|^2)$$

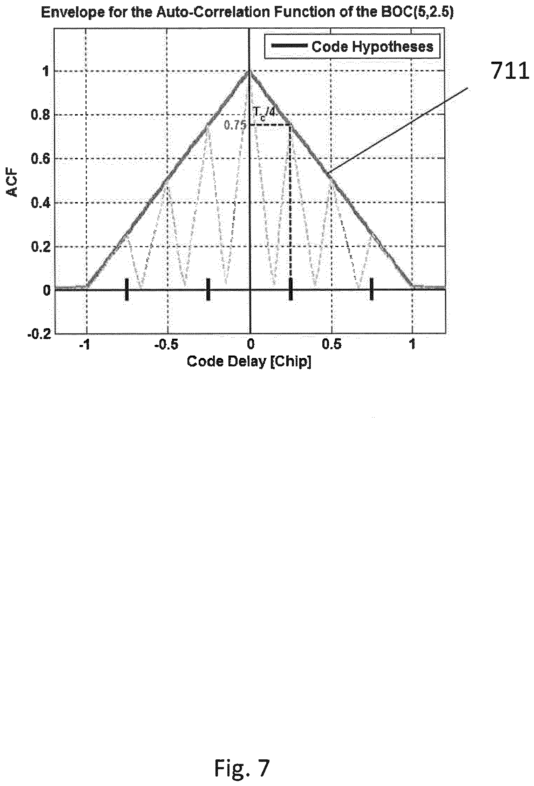

which is usually called detector output. An exemplary detector output is shown in the following figure 7.

Figure 7 schematically illustrates the square root detector output (shown as line 711 in figure 7) for the DSB acquisition according to the scheme presented in figure 6. The corresponding square root of the detector, $D_{NC}^{DSB}$, generated with the DSB acquisition to a BOC(M,N) can be identified to the detector, $D_{NC}^{MF}$, for an ACF for a BPSK(N) pulse shape. As a consequence, it is possible to apply the same binwidth as for the BPSK(N) acquisition method, leading to a more reasonable number of code delay hypotheses to be tested, especially for a high M/N ratio. The replica in this exemplary result has Zero-Doppler mis-alignment. An analytical expression of the Dual Side Band (DSB) detector output derived is given by the following equation 1 (here a stochastic contribution from the thermal noise and eventual interferences is not presented):

(Equation 1)

$$D_1^{DSB}(\Delta\tau, \varepsilon_{f_D}) = P_{Rx}(\mathrm{sinc}(\pi\varepsilon_{f_D}T_{\mathrm{int}}))^2 R(\Delta\tau + \tau_{iono} - \tau_{GD}^{Rx})^2$$

$T_{\mathrm{int}}$ represents the coherent integration time. $\varepsilon_{fd}$ represents a Doppler estimation error between the true Doppler and its tested value. $\Delta\tau$ represents a Code estimation error between the true Code delay and its tested value. $\tau_{GD}$ represents a hardware group delay. $\tau_{iono}$ represents a delay caused by the ionosphere. As for the acquisition of the BPSK(N) signal it is possible to add non-coherently $N_{NC}$ $D_1^{DSB}(\Delta\tau, \varepsilon_{f_D})$ detector outputs, all tested for the same Code and Doppler frequency hypotheses. The main drawback is, that each single DSB detector output requires an additional non-coherent summation, originating from the non-coherent combination of the left and right correlation functions, when compared to the BOC matched acquisition approach. Thus, the so-called squaring losses increase with the number of non-coherent summations, $N_{NC}$.

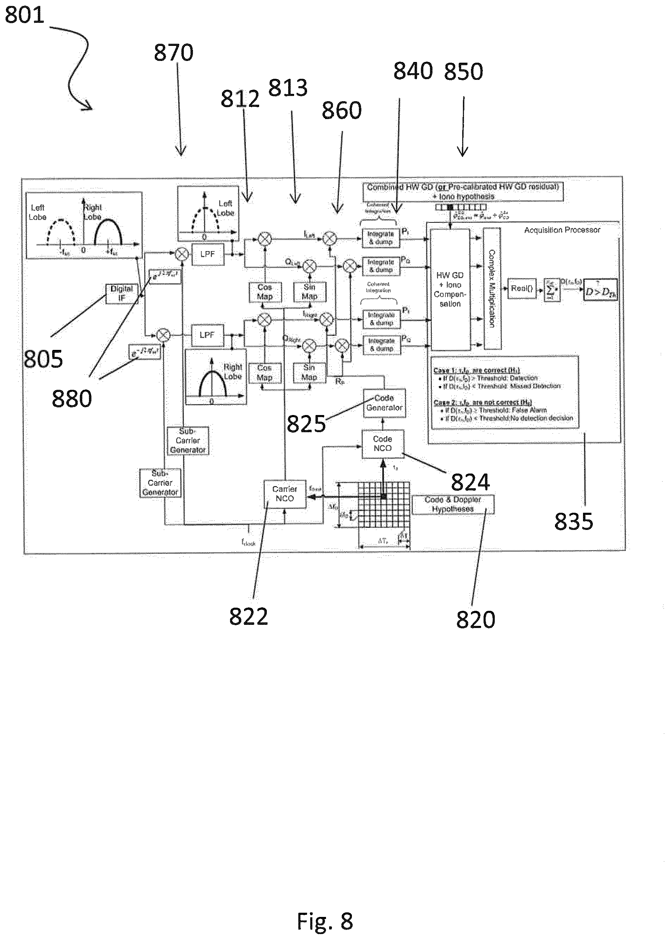

Figure 8 schematically illustrates an acquisition scheme according to an embodiment of the present invention. If the number of code delay and Doppler frequency hypotheses can be reduced by use of the DSB approach, one identified drawback is the larger squaring losses. Furthermore, by squaring the corresponding detector outputs an additional and degrading contribution comes from a variance of the thermal noise (and interferences). It means that even if the wrong code delay and Doppler frequency hypotheses are proposed, the distribution of the DSB detector output has not a zero-average but an average depending on the noise variance, and which can degrade the probability of false alarm.

To circumvent both degrading effects, it is therefore proposed to process the correlator outputs for "Left-Sided" and "Right-Sided" Spectral Lobes (lower and upper sideband) of the BOC signals in a different way than for the SSB or DSB schemes. Here, both correlations are no more squared and added ($|CCF_{Left}|^2 + |CCF_{Right}|^2$), but are multiplied with each other: $D_1^{SBP} = CCF_{Left} \times CCF_{Right}$. Because $CCF_{Left}$ and $CCF_{Right}$ are complex, a complex multiplication is performed. The analytical expression of the detector output, which may also be called Side Band Product (SBP) detector output, derived in that way is given by the following equation (here again the stochastic contribution from the thermal noise and eventual interferences is not presented):

(Equation 2)

$$D_1^{SBP}(\Delta\tau, \varepsilon_{f_D}) = \frac{P_{Rx}}{2} e^{j(2(\varphi_{iono}+\varphi_{GD}^{Rx})-2\pi\varepsilon_{f_D}\times T_{\mathrm{int}})} \cdot (\mathrm{sinc}(\pi\varepsilon_{f_D}T_{\mathrm{int}}))^2 R(\Delta\tau + \tau_{iono} - \tau_{GD}^{Rx})^2$$

$\varphi^{Rx}_{GD}$ represents the effect of the hardware group delay onto the carrier. $\varphi_{iono}$ represents the carrier delay caused by the ionosphere. By applying this alternative definition of the detector output for the BOC signals the following advantages can be identified:

- In case the BOC-modulated signal is modulated with symbols or data, because both left and right side lobes are modulated with the same symbol (GNSS data), by multiplying $CCF_{Left}$ and $CCF_{Right}$ the corresponding detector $D_{SBP}$ does not depend on the symbol any more. Assuming no noise, the sign of $D_{SBP}$ would be always positive. It means that in presence of noise, only half of the detector distribution shall be investigated. With thermal noise, it also means therefore that all positive values of the detector output could be accounted. It means that the setting of the detection threshold w.r.t. the false alarm rate, can be based on the positive part of the detector values even if the $D_{SBP}$ takes both positive and negative values.

- The GPS M signals, Galileo E1-A (PRS), E6-A (PRS) or the Galileo (OS) signals (this later signal uses the combination of a BOC(1,1) representing 10/11 of the aggregate power and a BOC(6,1) having 1/11 of the aggregate power and is categorized in the "Generalized BOC-modulated signals" described herein), are modulated with data/symbols. For example the E1-B OS signal is a data channel with symbol duration of 4ms. As a consequence, it is not possible to integrate coherently over a time duration larger than the symbol duration, since the symbol flips with a 50% occurrence might lead to a total collapse of the correlation output calculated over a coherent integration time spreading over more than 1 symbol. By using the acquisition scheme according to the embodiment of the present innovation according to figure 8, this constraint does not apply anymore, because the new detector output $D_{SBP}$ is not affected by the symbol (immune to the symbol effect). Therefore, it is possible to integrate coherently over a much longer time duration. A possible limitation applying to the maximal time duration for the coherent integration is driven by the dynamic of a Transmitter-Receiver Link. This limitation is higher for Satellite-based GNSS, but this limitation becomes much smaller for Terrestrial RNSS applications, for example for Pseudolites. Therefore, for terrestrial systems using CDMA signals, modulated with BOC pulse shapes, acquisition can be performed by integrating over a much longer coherent integration time, and especially for data modulated signals.

- Because a LPF has been applied for the generation of the $CCF_{Left}$ and $CCF_{Right}$ before the correlation process, the corresponding additive noise contributions of the $CCF_{left}$ and $CCF_{Right}$ can be considered as independent. As a consequence the average of the new detector output $D_{SBP}$ does not depend on noise power, as for the Dual Side Band detectors, and the corresponding distribution of the Side Band Power detector is evenly centred. Again, this is not the case when applying the standard DSB acquisition scheme. This is due to fact that the average of the DSB detector output directly depending on the noise variance (see explanation for figure 6).

For applications, where the transmitter is a satellite, if the RF-link crosses atmospheric layers with high ionospheric activity (for a corresponding RF carrier frequency), then it is shown that the value of the detector output $D_{SBP}$ contains a multiplicative, and a complex factor which depends on the ionosphere ($e^{j(2\varphi iono)}$), as observed in (Equation 2). The ionosphere leads to a delay which applies to the phase of the complex signal, and depends on the Total Electron Content (TEC) of the link crossing the ionosphere. This multiplicative term prevents the possibility to test only the real part of the detector output $D_{SBP}$. It must be highlighted that the ionosphere leads to another delay affecting the code, which is also observed for the conventional DSB detector (see (Equation 1) and (Equation 2)). For links which do not cross the ionosphere, or an RF-links for which the delay caused by the ionosphere is negligible for the specific carrier frequency, then the multiplicative term does not exist or is negligible, and it is possible to only compare the real part of the detector output $D_{SBP}$ with a threshold set according to a specified PFA or PMD level. To circumvent the effect of the ionosphere, either a ionosphere delay on the carrier can be considered as negligible ($e^{j(2\varphi iono)} \approx 1$) or an estimation of the ionosphere delay, $\hat{\varphi}_{iono}$, is subtracted from a true ionosphere delay on the carrier. The residual can again be considered as negligible: $e^{j2(\varphi iono - \hat{\varphi}iono)} \approx 1$. (Equation 2) shows that the value of the detector output $D_{SBP}$ also contains a multiplicative, and complex factor which depends on the hardware group delay $e^{j(2\varphi_{GD}^{Rx})}$. As for the group delay caused by a ionospheric effect, this multiplicative term prevents the possibility to test only the real part of the $D_{SBP}$ detector output. To circumvent the effect of this hardware group delay, either the hardware group delay can be considered as negligible $\left( e^{j(2\varphi_{GD}^{Rx})} \approx 1 \right)$ or a pre-calibration enables to estimate the hardware group delay (with $\hat{\varphi}_{GD}^{Rx}$) which can be subtracted from the true hardware group delay. The residual can again be considered as negligible: $e^{j2(\varphi_{GD}^{Rx} - \hat{\varphi}_{GD}^{Rx})} \approx 1$. To circumvent the effect of both ionosphere and hardware group delays, another strategy can be used to simultaneously mitigate the effect of an un-calibrated group delay and ionospheric delays onto the carrier. A third dimension is then introduced, beside the code and Doppler frequency to be tested, with the combination of both the tested ionospheric carrier delay, ($\hat{\varphi}_{iono}$) and the tested hardware group delay $\left( \hat{\varphi}_{GD}^{Rx} \right)$ which results into a tested variable $\hat{\varphi}_{GD,iono}^{Rx} = \left[ \hat{\varphi}_{iono} + \hat{\varphi}_{GD}^{Rx} \right]$. As a consequence, by introducing this variable to be tested, it is possible to multiply the corresponding detector output with a complex term,

$e^{-j(2\times\hat{\varphi}_{GD,iono}^{Rx})}$. This accounts for the tested combined delay $\hat{\varphi}_{GD,iono}^{Rx}$. For a correct hypothesis for $\hat{\varphi}_{GD,iono}^{Rx}$ then

$e^{j(2([\varphi_{iono}+\varphi_{GD}^{Rx}]-\hat{\varphi}_{GD,iono}^{Rx}))} \approx 1$. In that case, the detection is performed by the real part of $D_{SBP}$, as expressed by the following equation:

**(Equation 3)**

$$real(D_1^{SBP}(\Delta\tau,\varepsilon_{f_D},\hat{\varphi}_{GD,iono}^{Rx})) = \left\{ \begin{array}{l} real(\dfrac{P_{Rx}}{2} e^{j(2([\varphi_{iono}+\varphi_{GD}^{Rx}]-\hat{\varphi}_{GD,iono}^{Rx})-2\pi\varepsilon_{f_D}\times T_{int})} \times \\ (sinc(\pi\varepsilon_{f_D}T_{int}))^2 R(\Delta\tau+\tau_{iono}-(\tau_{GD}^{Rx}-\hat{\tau}_{GD}^{Rx}))^2) \end{array} \right\}$$

with $\hat{\varphi}_{GD,iono}^{Rx}=[\hat{\varphi}_{iono}+\hat{\varphi}_{GD}^{Rx}]$. On figure 8, an additional input to the acquisition block 835 is introduced to account for the combined tested group delay and ionospheric delay. From (Equation 2), it is shown that the analytical expression for the detector output $D_{SBP}$ contains an additional complex and multiplicative term which is a function of the Doppler mis-alignment ($e^{-j2\pi\varepsilon_{f_D}\times T_{int}}$). This term acts in a similar way to the term $e^{j2(\varphi_{iono}+\varphi_{GD}^{Rx})}$, previously mentioned. By retaining the real part of the detector output, as expressed by (Equation 3), it is shown that in order to keep the Doppler mis-alignment losses at a same level for the $D_{DSB}$ scheme (with a $(sinc(\varepsilon_{fd}\times T_{int})^2$ term) and for the detector output $D_{SBP}$ (with a $(sinc(\varepsilon_{fd}\times T_{int})^2 \times cos(\varepsilon_{fd\times}T_{int}))$, the maximally tolerated Doppler mis-alignment needs to be about 2.7 times smaller for the SBP detector ($D_{SBP}$) than for the DSB detector ($D_{DSB}$). This puts an additional constraint onto the dynamic of the transmitter-receiver link. Because the ionosphere delay and the hardware group delay on a one side, and the Doppler mis-alignment on the other side impact the carrier, and lead to a complex multiplicative term $e^{j(2(\varphi_{iono}+\varphi_{GD}^{Rx})-2\pi\varepsilon_{f_D}\times T_{int})}$ into the expression of the SBP detector, then an ambiguity between an angle ($\varphi^{Rx}_{GD}+\varphi_{iono}$) and the residual Doppler $\varepsilon_{fd}\times T_{int}$ has to be solved.

It appears that the present invention offers significant advantages w.r.t. the DSB method, for applications 1) with limited effects caused by the ionosphere and 2) with low dynamic of the transmitter-receiver link, for example applications with terrestrial transmitters and receivers (even mounted on a platform) with reasonable dynamic. Another possible use of the proposed innovation is covered by indoor applications where transmitters are pseudolites. As far as the effect of the hardware group delay is concerned, this one shall be either negligible, or the calibration error shall be limited.

For such indoor systems, it could be envisaged to apply the SBP detector for the acquisition of the signals having the same structure as the Galileo E1-B signals, meaning a data modulated signal, with a BOC(1,1) (combined with a BOC(6,1)) and a symbol rate of 4ms. In order to ensure satisfactory PMD and PFA levels at low carrier-to-noise ratio (C/N$_0$) which is an actual situation for indoor applications, it is necessary to extend the integration time over many symbols. Now, to annihilate the degrading effects of the symbol changes for an extended coherent integration, a conventional acquisition strategy comprises summing non-coherently the elementary DSB detector outputs calculated over 4ms. For the application of the SBP detector it is possible to simply extend the coherent integration over the 4ms symbol transitions. This enables to significantly improve the acquisition sensitivity, which is advantageous when the received signal power is attenuated by the walls as for indoor applications. It is shown below that the Receiver Operational Curves (R.O.C), which relates the PFA as function of the PMD for a varying detection threshold, almost overlap for a coherent integration time of 4ms.

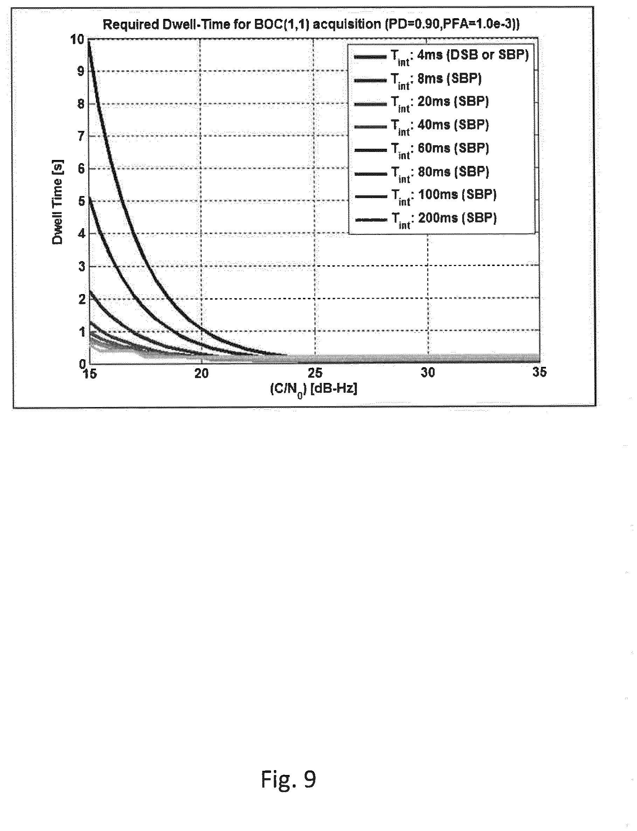

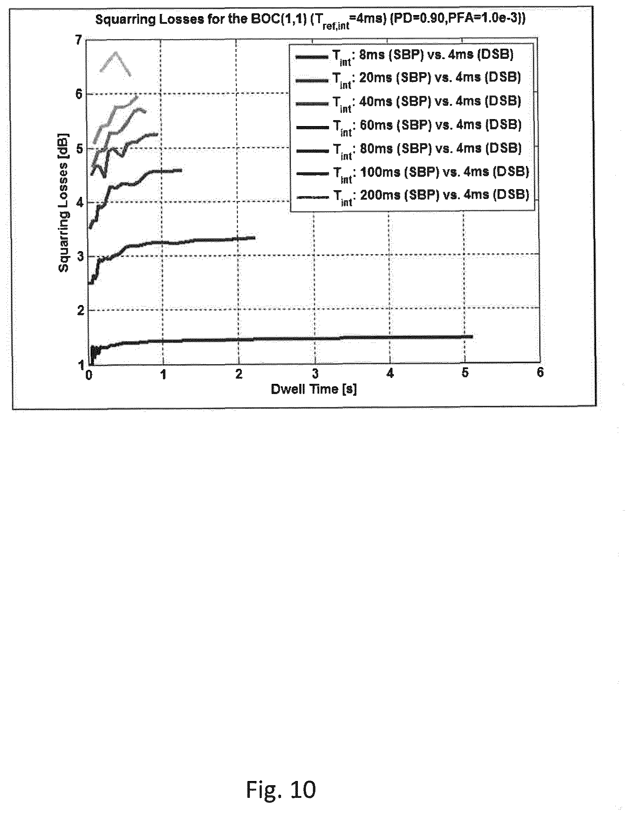

Figure 9 schematically illustrates a dwell time diagram for a non-coherent integration time and for a varying coherent integration time for the SBP detector. The dwell time is defined as the product of the number of non-coherent summations with the duration of the coherent integration, and represents the aggregate coherent and non-coherent time needed to ensure that both required PFA and PMD probabilities are fulfilled. By extending the dwell time either for the DSB detector, or for the SBP detector to ensure the same PFA and PMD levels, the resulting dwell time becomes smaller for the SBP detector than for the DSB. Figure 9 illustrates the required dwell-time necessary to ensure a PFA = 0.001 and a PMD = 0.9 either for a 4ms coherent integration used for both DSB and SBP detector cases (in the case of the DSB only non-coherent summations of 4ms are applied) or for coherent integration times, exceeding the symbol transitions, with 8ms, or 20ms or 40ms, ..., or 200ms (for the SBP detector). From this figure the degrading effects of the so-called squaring losses due to the non-coherent summation of the 4ms coherent integration can be deduced, which is represented on figure 10.

Figure 10 schematically illustrates the squaring losses due to the non-coherent summations which can be used for mitigation of symbol flips when applying the DSB acquisition scheme. As a consequence, for very low C/N$_0$ levels as those experienced in indoor, it is posssible to gain around 5 dB to 7dB for (C/N$_0$) around 15 dB-Hz (typical in Indoor scenarios), and to work at a reasonable dwell time around 200ms, which is reasonable for transmitter receiver links with low dynamic .

In order to improve the detection performances of the SBP detector, it is proposed to modify the decision strategy, by remarking that the expected value of the detector output is positive when the correct corresponding Code and Doppler frequency hypotheses are tested ("H1" case). This alternative detection strategy can be summarised as follows:

- If the detector output is positive and is above the detection threshold, the "1" ("hit") is allocated.
- If the detector output is positive and is below the detection threshold, the "0" ("discard") is allocated.
- If the detector output is negative then no decision is taken, the SBP detector output is discarded, and another evaluation of the detector output for the same Code and Doppler frequency hypotheses is performed.

For a comparison of this alternative SBP detector strategy, it is important to state that by introducing consecutive tests (for the "negative SBP detector outputs"), a decision is delayed, and therefore the Mean-Time-To-Acquire (MTTA) too. Here a rough evaluation of this impact comprises a multiplication with a factor 1.5 with the MTTA obtained without discarding the negative SBP detector outputs (since on average, 50% of the SBP detector outputs are negative for "H0" case, which mainly impacts the MTTA). The improvement brought by this alternative decision strategy is evaluated based on Monte-Carlo simulations. Undertaken Monte-Carlo simulations resulted in a Receiver Operational Curve (R.O.C.) which provides the Probability of Detection as function of the Probability of False Alarm.

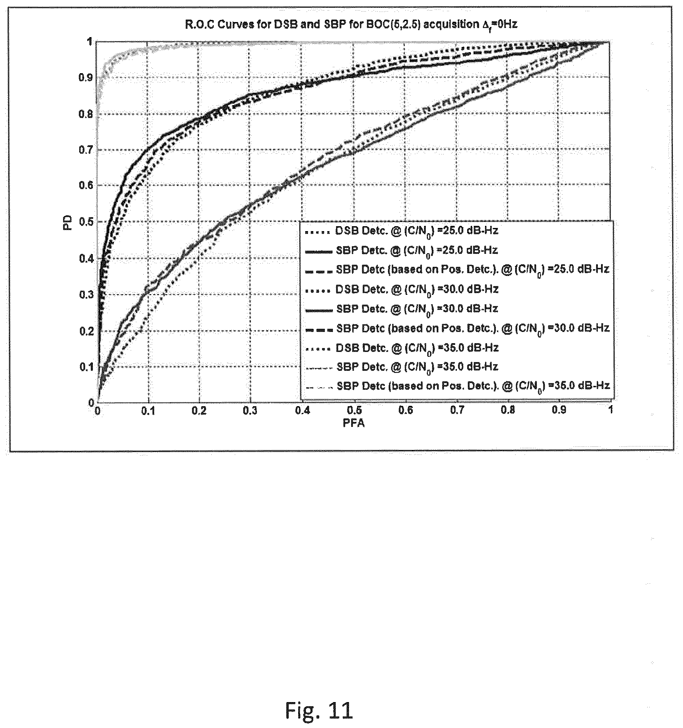

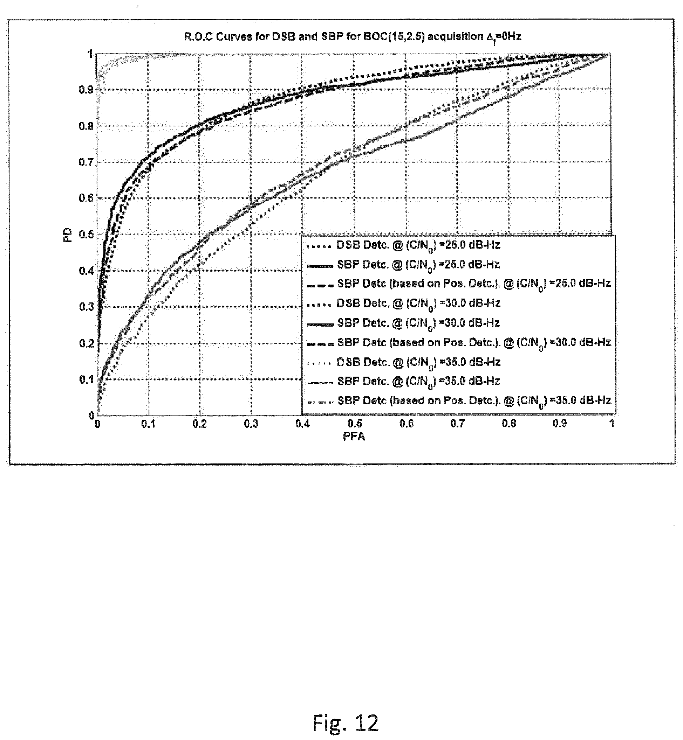

Figure 11 and 12 schematically illustrate R.O.C. Curves for BOC(5,2.5) and BOC(15,2.5) respectively for different values of the input (C/N$_0$) ratios. Here the contributions of the ionospherical effect ($\varphi_{iono}$=0), receiver group delay (($\varphi^{Rx}_{GD}$=0) and Doppler ($\varepsilon_{fd}$=0) are not considered, and only Code estimation error $\Delta\tau$ and thermal noise are accounted for the R.O.C determination. A coherent integration of 4ms was applied. From the R.O.C. curves, the following statements can be derived:

- No (major) difference in performance exists between the DSB and the SBP detector (the SBP detector using both positive and negative outputs). At 25 dB-Hz, it is observable that the R.O.C. of the DSB and SBP detectors are almost overlapping (and crosses around the point (PFA=0.5, PD=0.7)). For larger C/N$_0$ almost no difference exist neither. This means that a factor of 2 in amplitude which is lost in the SBP detector amplitude w.r.t. DSB one

$$\left( D_1^{DSB}(\Delta\tau,0) = P_{Rx}R(\Delta\tau)^2 \right. \text{ while } D_1^{SBP}(\Delta\tau,0) = \frac{P_{Rx}}{2}R(\Delta\tau)^2 \left. \right), \text{ is compensated by the orthogonality be-}$$

tween noise contribution in the left and right correlation $\left( R_{Right}^{Down}(\Delta\tau,0) \right.$ and $R_{Left}^{Up}(\Delta\tau,0) \left. \right),$ using mathematical formulations described later in this disclosure). Hence, for a coherent integration time equal to the symbol duration both detector types are equivalent.

Now, the main advantage of the SBP detector resides in the possibility to integrate over a much longer coherent integration time when compared to the DSB, and this enables to overcome squaring losses.

- By applying the alternative detection strategy based on the SBP detector, but focusing only onto the "positive SBP detector outputs" (dashed line on figures 11 and 12), then an improvement of the R.O.C. performances is achieved. Again, this improvement of detection performance comes along with a ~50% larger MTTA as stated above.

It is further described, how to derive and describe the mathematical models for the detector output, in order to justify the improvements in acquisition performances, obtained by the SBP detector according to an embodiment of the present invention. The influence of the ionosphere and receiver onto the code (group) delay and carrier offset affecting the elementary correlation outputs for the left and right side lobes of the BOC(M,N) power spectral density, PSD, is analysed. The corresponding derivation can help to introduce and justify an expression for the detector output according to an embodiment of the present invention, which is insensitive to such effects. For this purpose, a noise free environment is firstly considered. Then, the appropriate expression of the new detector output is derived, the effect of the noise is accounted, and especially the better immunity of the SBP detector against noise is explained.

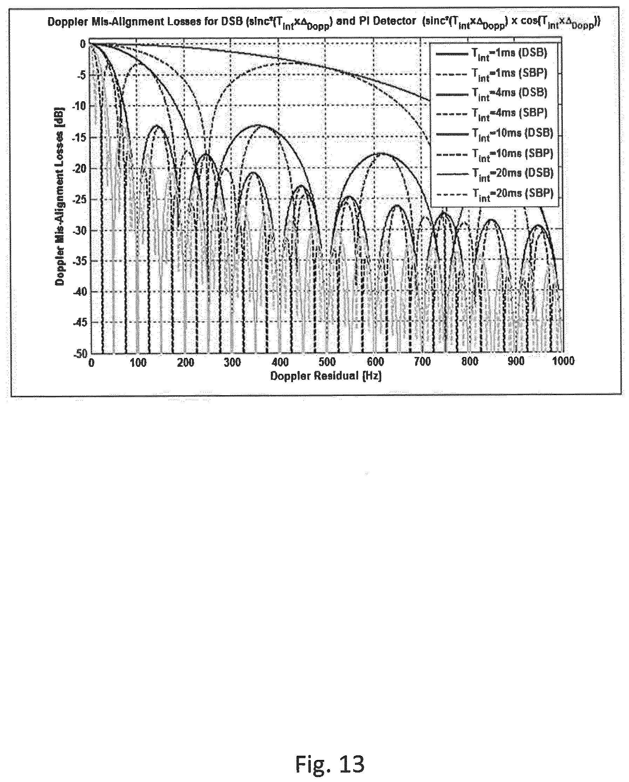

Figure 13 schematically illustrates the Doppler Mis-Alignment Losses for the DSB and the SBP detector applied to BOC acquisition. Figure 13 represents the Doppler Mis-Alignment losses either for the DSB (sinc($\varepsilon_{fd}T_{int}$)$^2$) or the SBP detector (sinc($\varepsilon_{fd}T_{int}$)$^2 \times$ cos($\varepsilon_{fd}T_{int}$)) as function of the product $\varepsilon_{fd}T_{int}$. It can be verified that the losses become larger when applying the SBP detector. The following table provides the maximal Doppler error in the tested Doppler hypotheses (half of the Doppler binwidth), also called Doppler residual on the figure, and tolerated to not exceed Doppler mis-alignment losses of 1 or 2 dB.

| 1 dB of Doppler Mis-Alignment Losses | | | 2 dB of Doppler Mis-Alignment Losses | | |
|---|---|---|---|---|---|
| $\varepsilon_{Dopp}$ [Hz] DSB | $\varepsilon_{Dopp}$ [Hz] SBP | Ratio | $\varepsilon_{Dopp}$ [Hz] DSB | $\varepsilon_{Dopp}$ [Hz] SBP | Ratio |
| 262 | 98 | 2,7 | 366 | 134 | 2,7 |
| 66 | 25 | 2,6 | 92 | 34 | 2,7 |
| 27 | 10 | 2,7 | 37 | 14 | 2,6 |
| 14 | 5 | 2,8 | 19 | 7 | 2,7 |

The Doppler error shall be approximately 2.7 times smaller when applying the SBP detector, when compared to the DSB. It means that the dynamic of the Transmitter-Receiver link can represent a higher limitation for the acquisition when using the SBP detector. For applications with terrestrial transmitters and a receiver mounted on a platform with reasonable dynamic, this limitation can be regarded as acceptable. This would be for example the case for Indoor applications.

In the following, a Detector Output Expression is derived when accounting carrier, code and group delays due to the ionosphere and the receiver, but without accounting for the thermal noise (Noise-Free Environment). The expression of the received signal at RF and using complex notations is given by:

(Equation 4)

$$S(t) = \sqrt{P_{Rx}} \cdot e^{j\left(2\pi(f_{carr}+f_D)\cdot(t-\tau)+\varphi_{iono}+\varphi_{GD}^{Rx}+\varphi_0^{Rx}\right)} \sum d(t-\tau+\tau_{iono}-\tau_{GD}^{Rx}).p_{BOC}\left(t-\tau+\tau_{iono}-\tau_{GD}^{Rx}\right).c(t-\tau+\tau_{iono}-\tau_{GD}^{Rx})$$

$P_x$ represents a received power. $f_{carr}$ is a central carrier frequency (e.g. 1575.42MHz). $f_D$ is a Doppler offset according to radial velocity. $\varphi_{iono}$ is a contribution to the carrier phase offset caused by the ionosphere, which can be rewritten to:

$$\varphi_{iono}[rad] = \frac{2\pi \times 40.3 \times TEC}{c_0 \times f_{carr}}$$

$\varphi^{Rx}_{GD}$ is a contribution to the carrier phase offset from the receiver hardware, also called group delay. $\tau_{iono}$ is a contribution to the carrier phase offset from the ionosphere, which can be rewritten to:

$\varphi^{Rx}_0$ is an initial phase of the carrier at reception and which is usually depending on an initial phase $\varphi^{Tx}_0$ at signal generation, on-board the satellite for example, and which is itself unambiguously defined. A typical value assignment for $\varphi^{Tx}_0$ is zero which means that the zero-crossing of the carrier wave corresponds to a front-edge of a chip, yielding a so-called Code-Carrier Coherency. It means that the hardware contribution of the generation chain $\varphi^{Tx}_{GD}$ at satellite level needs to be specified to ensure that $\varphi^{Tx}_0$ stays equal to zero or close to zero over the range of on-board temperature variations. Because the impacts of the ionospherical effects (with $\varphi_{iono}$), the receiver hardware (with $\varphi^{Rx}_{GD}$) and the Doppler ($f_D \times (t-\tau)$) are accounted into the carrier phase, the initial phase $\varphi^{Rx}_0$ at reception can be then identified to the initial phase $\varphi^{Tx}_0$ at transmission. Other unambiguous definitions of the initial carrier phase $\varphi^{Tx}_0$ can also be proposed, but the principle would remain and again $\varphi^{Rx}_0$ could be identified to $\varphi^{Tx}_0$ meaning that $\varphi^{Rx}_0$ is also known at reception side, and does not correspond to a parameter to be estimated during the acquisition process, as it is the case for the code delay $\tau$ and the Doppler offset $f_d$. In the following $\varphi^{Rx}_0$ is therefore be set to 0, and does not appear in the following

$$\tau_{iono}[s] = -\varphi_{iono}[s] = -\frac{40.3 \times TEC}{f_{carr}^2}$$

equations anymore. ("Phase in advance", while "code is delayed").

$\tau^{Rx}_{GD}$ is a contribution to the code phase offset from the receiver hardware. c(t) is a spreading code sequence. d(t) is a symbol which is modulated (spread) with the spreading sequence c(t). In this expression the spreading sequence can be periodical as for the Galileo E1-B with a period of 4ms, or non-periodical. Furthermore, when it is periodical the spreading sequence period usually corresponds to one symbol duration. In the absence of a modulated symbol such as for the pilot Galileo E1-C signal, the term d(t) does not exist. $p_{BOC}$ is a pulse shape corresponding to a BOC(M,N) modulation, with sub-carrier $f_{sc}$ (15×1.023MHz for the Galileo L1-A PRS signals), and is expressed as

(Equation 5)

$$p_{BOC}(t) = sign\left(\cos(2\pi f_{sc}(t)\right)$$

In this expression a cosine function, $\cos(2\pi f_{sc}(t)$, has been applied to generate the pulse shape $p_{BOC}(t)$. A similar expression for the pulse shape $p_{BOC}(t)$ can be derived when apply a sinus function, $\sin(2\pi f_{sc}(t)$, in place of the cosine function, $\cos(2\pi f_{sc}(t)$. The description proposed for the sinus function would apply in the same way as the description now presented and applying the cosine function.

For the simplified model of (Equation 4) the contribution of other GNSS signals transmitted by other satellites are not accounted, neither the other signal components transmitted by the same satellite as the one transmitting the signal of interest to be acquired. Both types of additional GNSS signals (from the other satellites or the same satellite) would lead to additional cross-correlations which can be omitted as a first approximation. The $p_{BOC}(t)$ pulse can be expressed in a simplified way (neglecting higher harmonics which are suppressed by front-end filters) as:

(Equation 6)

$$p_{BOC}(t) = \sqrt{2}.\cos(2\pi f_{sc}t).p_{Rect}(t) = \sqrt{2}.\frac{e^{2\pi j f_{sc}(t)} + e^{-2\pi j f_{sc}(t)}}{2}.p_{Rect}(t).$$

Where $p_{rect}(t)$ represents the primitive BPSK pulse shape in the generation of the $p_{BOC}$ pulse and where the multiplication with sqrt(2) is necessary to ensure $E\{|p_{BOCF}|^2\}=1$. Incorporating the former expression into (Equation 4) yields:

(Equation 7)

$$S(t) = \sqrt{P_{Rx}}.e^{j\left(2\pi(f_{carr}+f_D)(t-\tau)+\varphi_{iono}+\varphi_{GD}^{Rx}\right)}$$

$$\sum d(t-\tau+\tau_{iono}-\tau_{GD}^{Rx}) \times \left( \frac{e^{(2\pi j f_{sc}(t-\tau+\tau_{iono}-\tau_{GD}^{Rx}))} + e^{(-2\pi j f_{sc}(t-\tau+\tau_{iono}-\tau_{GD}^{Rx}))}}{\sqrt{2}} \times p_{Rect}(t-\tau+\tau_{iono}-\tau_{GD}^{Rx}) \times c(t-\tau+\tau_{iono}-\tau_{GD}^{Rx}) \right)$$

This expression can be decomposed into a contribution based on negative spectral content ("left side-lobe" of the BOC PSD), and into a contribution based on positive spectral content ("right side-lobe" of the BOC PSD).

Furthermore, down-conversion to base-band is also applied by multiplying with exponential term at frequency carrier ($\times e^{-j(2\pi fcarrt)}$):

(Equation 8)

$$S^{BB}(t) = S^{BB}_{Right}(t) + S^{BB}_{Left}(t) \text{ with}$$

$$S^{BB}_{Left}(t) = \sqrt{P_{Rx}}.e^{j\left(2\pi f_D \cdot (t-\tau) + \varphi_{iono} + \varphi^{Rx}_{GD}\right)} \sum \frac{d(t-\tau+\tau_{iono}-\tau^{Rx}_{GD})}{\sqrt{2}} \times e^{(-2\pi j f_{sc}(t-\tau+\tau_{iono}-\tau^{Rx}_{GD}))} \times p_{Rect}(t-\tau+\tau_{iono}-\tau^{Rx}_{GD}) \times c(t-\tau+\tau_{iono}-\tau^{Rx}_{GD})$$

$$S^{BB}_{Right}(t) = \sqrt{P_{Rx}}.e^{j\left(2\pi f_D \cdot (t-\tau) + \varphi_{iono} + \varphi^{Rx}_{GD}\right)} \sum \frac{d(t-\tau+\tau_{iono}-\tau^{Rx}_{GD})}{\sqrt{2}} \times e^{(2\pi j f_{sc}(t-\tau+\tau_{iono}-\tau^{Rx}_{GD}))} \times p_{Rect}(t-\tau+\tau_{iono}-\tau^{Rx}_{GD}) \times c(t-\tau+\tau_{iono}-\tau^{Rx}_{GD})$$

The "left side-Lobe" (resp. "right side-Lobe") signal is then up-converted (resp. down-converted) to the central carrier frequency ($\times e^{j(2\pi fsct)}$ and $\times e^{-j(2\pi fsct)}$):

(Equation 9)

$$S^{Up}(t) \rightarrow S^{Up}_{Left}(t), S^{Down}(t) \rightarrow S^{Down}_{Right}(t) \text{ with}$$

$$S^{Up}_{Left}(t) = S_{Left}(t)e^{2\pi j f_{sc}t} = \sqrt{P_{Rx}}.e^{j\left(2\pi f_D \cdot (t-\tau) + \varphi_{iono} + \varphi^{Rx}_{GD}\right)} \sum \frac{d(t-\tau+\tau_{iono}-\tau^{Rx}_{GD})}{\sqrt{2}} e^{(-2\pi j f_{sc}(-\tau+\tau_{iono}-\tau^{Rx}_{GD}))} p_{Rect}(t-\tau+\tau_{iono}-\tau^{Rx}_{GD}) c(t-\tau+\tau_{iono}-\tau^{Rx}_{GD})$$

$$S^{Down}_{Right}(t) = S_{Right}(t)e^{-2\pi j f_{sc}t} = \sqrt{P_{Rx}}.e^{j\left(2\pi f_D \cdot (t-\tau) + \varphi_{iono} + \varphi^{Rx}_{GD}\right)} \sum \frac{d(t-\tau+\tau_{iono}-\tau^{Rx}_{GD})}{\sqrt{2}} e^{(2\pi j f_{sc}(-\tau+\tau_{iono}-\tau^{Rx}_{GD}))} p_{Rect}(t-\tau+\tau_{iono}-\tau^{Rx}_{GD}) c(t-\tau+\tau_{iono}-\tau^{Rx}_{GD})$$

Finally, Low-Pass Filtering is applied to retain the main lobe of the equivalent BPSK(N) PSD. Thereby, the contribution of the "right side-Lobe" (resp. left-side Lobe") after up-conversion (resp. down-conversion) is removed.

(Equation 10)

$$S^{Up}_{Left}(t) \rightarrow S^{Up,LPF}_{Left}(t), S^{Down}_{Left}(t) \rightarrow S^{Down,LPF}_{Right}(t) \text{ with}$$

$$S^{Up,LPF}_{Left}(t) = h_{LPF}(t) * S^{Up}_{Left}(t) = \sqrt{P_{Rx}}.e^{j\left(2\pi f_D \cdot (t-\tau) + \varphi_{iono} + \varphi^{Rx}_{GD}\right)} \sum \frac{d(t-\tau+\tau_{iono}-\tau^{Rx}_{GD})}{\sqrt{2}} e^{(-2\pi j f_{sc}(-\tau+\tau_{iono}-\tau^{Rx}_{GD}))} p_{Rect}(t-\tau+\tau_{iono}-\tau^{Rx}_{GD}) c(t-\tau+\tau_{iono}-\tau^{Rx}_{GD})$$

$$S^{Down,LPF}_{Right}(t) = h_{LPF}(t) * S^{Down}_{Right}(t) = \sqrt{P_{Rx}}.e^{j\left(2\pi f_D \cdot (t-\tau) + \varphi_{iono} + \varphi^{Rx}_{GD}\right)} \sum \frac{d(t-\tau+\tau_{iono}-\tau^{Rx}_{GD})}{\sqrt{2}} e^{(2\pi j f_{sc}(-\tau+\tau_{iono}-\tau^{Rx}_{GD}))} p_{Rect}(t-\tau+\tau_{iono}-\tau^{Rx}_{GD}) c(t-\tau+\tau_{iono}-\tau^{Rx}_{GD})$$

Once these pre-processing operations carried out, both signals are correlated with the replica. The replica is generated with a BPSK(N) signal using the same spreading sequence as the BOC(M,N) signal, and applies an hypothesis for the code $\hat{\tau}$ and an hypothesis for the Doppler $\hat{f}_D$, the so-called code delay hypothesis and Doppler frequency hypothesis, and an initial phase $\hat{\varphi}^{Rx}_0$ :

(Equation 11)

$$S_{rep}(t, \hat{\tau}, \hat{f}_D) = e^{j2\pi \hat{f}_D \cdot (t-\hat{\tau}) + \hat{\varphi}^{Rx}_0} \sum p_{rect}(t-\hat{\tau}) \times a(t-\hat{\tau}).$$

It is to be noted that because initial phase $\hat{\varphi}^{Rx}_0$ is known unambiguously, it does not need to be estimated (as it is the case for the code and Doppler hypotheses) and from the aforementioned convention regarding the Code-Carrier Coherency, it can be set to $\hat{\varphi}^{Rx}_0 = 0$ as already explained in the description of (Equation 4) for the actual initial phase of the received signal, $\varphi^{Rx}_0$ . Therefore this variable does not appear in the following equations anymore.

The correlation between the "left-side lobe" component and the replica is given by:

(Equation 12)

$$R_{Left}^{Up}(\Delta\tau,\varepsilon_{f_D}) = \frac{1}{T_{int}}\int_0^{T_{int}} S_{Left}^{Up,LPF}(t)S_{rep}^*(t,\hat{\tau},\hat{f}_D)dt$$

$$R_{Left}^{Up}(\Delta\tau,\varepsilon_{f_D}) = \frac{\sqrt{P_{Rx}}}{T_{int}}\cdot\int_0^{T_{int}}\left[ e^{j(2\pi f_D\cdot(t-\tau)+\varphi_{iono}+\varphi_{GD}^{Rx})}\sum\frac{d(t-\tau+\tau_{iono}-\tau_{GD}^{Rx})}{\sqrt{2}}e^{(-2\pi j f_{sc}(-\tau+\tau_{iono}-\tau_{GD}^{Rx}))}p_{Rect}(t-\tau+\tau_{iono}-\tau_{GD}^{Rx})c(t-\tau+\tau_{iono}-\tau_{GD}^{Rx}) \\ e^{-j2\pi\hat{f}_D\cdot(t-\hat{\tau})}\quad\quad\sum p_{rect}(t-\hat{\tau})\times a(t-\hat{\tau})dt \right]$$

$$R_{Left}^{Up}(\Delta\tau,\varepsilon_{f_D}) = \frac{1}{T_{int}}\sqrt{\frac{P_{Rx}}{2}}e^{-2\pi j f_{sc}(-\tau+\tau_{iono}-\tau_{GD}^{Rx})}e^{j(\varphi_{iono}+\varphi_{GD}^{Rx})}\int_0^{T_{int}}\left[ e^{j2\pi f_D\cdot(t-\tau)}\sum d(t-\tau+\tau_{iono}-\tau_{GD}^{Rx})p_{Rect}(t-\tau+\tau_{iono}-\tau_{GD}^{Rx})c(t-\tau+\tau_{iono}-\tau_{GD}^{Rx}) \\ e^{-j2\pi\hat{f}_D\cdot(t-\hat{\tau})}\quad\quad\sum p_{rect}(t-\hat{\tau})\times a(t-\hat{\tau})dt \right]$$

$$R_{Left}^{Up}(\Delta\tau,\varepsilon_{f_D}) = \frac{1}{T_{int}}\sqrt{\frac{P_{Rx}}{2}}e^{-2\pi j f_{sc}(-\tau+\tau_{iono}-\tau_{GD}^{Rx})}e^{j(\varphi_{iono}+\varphi_{GD}^{Rx})}\int_0^{T_{int}}\left[ e^{j2\pi f_D t}e^{-j2\pi f_D\cdot\tau}\sum d(t-\tau+\tau_{iono}-\tau_{GD}^{Rx})p_{Rect}(t-\tau+\tau_{iono}-\tau_{GD}^{Rx})c(t-\tau+\tau_{iono}-\tau_{GD}^{Rx}) \\ e^{-j2\pi\hat{f}_D t}e^{j2\pi\hat{f}_D\cdot\hat{\tau}}\quad\quad\sum p_{rect}(t-\hat{\tau})\times a(t-\hat{\tau})dt \right]$$

The (true) code delay is $\tau$ and the (true) Doppler frequency is $f_D$, while their hypothesis are labelled as $\hat{\tau}$ and $\hat{f}_D$. As a consequence, the error in the code and frequency hypothesis are: $\Delta\tau = \hat{\tau} - \tau$ and $\varepsilon_{fD} = \hat{f}_D - f_D$. Using these estimation errors the following product can be expressed as:

(Equation 13)

$$e^{-j2\pi f_D\cdot\tau}\times e^{j2\pi\hat{f}_D\cdot\hat{\tau}} = e^{-j2\pi f_D\cdot\tau}\times e^{j2\pi(f_D+\varepsilon_{f_D})(\tau+\Delta\tau)} = e^{j2\pi f_D\Delta\tau}e^{j2\pi\varepsilon_{f_D}\tau}e^{j2\pi\varepsilon_{f_D}\Delta\tau} \approx e^{j2\pi f_D\Delta\tau}e^{j2\pi\varepsilon_{f_D}\tau}$$

The order of magnitude of the:

- code error $\Delta\tau$, can be expressed in fractions of $\mu s$;
- the periodicity of duration $T_p$ of the absolute code delay, $\tau$, can be expressed in ms which corresponds to the code period (the $CCF(\tau+T_p) = CCF(\tau), T_p = 4ms$ for the Galileo E1-B code for example);
- Doppler error, $\varepsilon_{fD}$, can be usually expressed in $10^{th}$ or $100^{th}$ of Hz; and
- the absolute Doppler frequency $f_d$ can extend up to 10KHz (with dynamic of the receiver platform).

As a consequence $e^{j2\pi f D\Delta\tau} \approx 1$, $e^{j2\pi\varepsilon f D\tau} \approx 1$ and the correlation function can be simplified as

$$R_{Left}^{Up}(\Delta\tau,\varepsilon_{f_D}) = \frac{1}{T_{int}}\sqrt{\frac{P_{Rx}}{2}}e^{-2\pi j f_{sc}(-\tau+\tau_{iono}-\tau_{GD}^{Rx})}e^{j(\varphi_{iono}+\varphi_{GD}^{Rx})}\int_0^{T_{int}}\left[ e^{j2\pi(f_D-\hat{f}_D)t}\sum d(t-\tau+\tau_{iono}-\tau_{GD}^{Rx})p_{Rect}(t-\tau+\tau_{iono}-\tau_{GD}^{Rx})c(t-\tau+\tau_{iono}-\tau_{GD}^{Rx}) \\ \sum p_{rect}(t-\hat{\tau})\times c(t-\hat{\tau})dt \right]$$

When using the following simplification:

**(Equation 14)**

$$\int_0^{T_{int}} e^{j2\pi(f_D - \hat{f}_D)t}\,dt = \int_0^{T_{int}} e^{-j2\pi\varepsilon_{f_D}t}\,dt = -T_{int}\,e^{-j2\pi\varepsilon_{f_D}\times\frac{T_{int}}{2}}\cdot\sin c(\pi\varepsilon_{f_D}T_{int})$$

One yields:

**(Equation 15)**

$$R_{Left}^{Up}(\Delta\tau,\varepsilon_{f_D}) = -\sqrt{\frac{P_{Rx}}{2}}d(t-\tau+\tau_{iono}-\tau_{GD}^{Rx})e^{-2\pi jf_{sc}(-\tau+\tau_{iono}-\tau_{GD}^{Rx})}e^{j(\varphi_{iono}+\varphi_{GD}^{Rx})}.e^{-j2\pi\varepsilon_{f_D}\times\frac{T_{int}}{2}}\cdot\text{sinc}(\pi\varepsilon_{f_D}T_{int})\cdot R(\Delta\tau+\tau_{iono}-\tau_{GD}^{Rx})$$

Where the auto-correlation function for the spreading code modulated with the pulse shape p(t), as a BPKS(N), is given by:

**(Equation 16)**

$$R(\Delta\tau+\tau_{iono}-\tau_{GD}^{Rx}) = \frac{1}{T_{int}}\int_0^{T_{int}}\left[\sum p_{rect}(t-\hat{\tau})c(t-\hat{\tau})\times p_{\text{Re}ct}(t-\tau+\tau_{iono}-\tau_{GD}^{Rx})c(t-\tau+\tau_{iono}-\tau_{GD}^{Rx})dt\right]$$

Similar operations for the calculation of the correlation with the "right-side Lobe" can be applied:

**(Equation 17)**

$$R_{Right}^{Down}(\Delta\tau,\varepsilon_{f_D}) = \frac{1}{T_{int}}\int_0^{T_{int}} S_{Right}^{Down,LPF}(t)S_{rep}^*(t,\hat{\tau},\hat{f}_D)dt$$

After some mathematical simplifications:

**(Equation 18)**

$$R_{Right}^{Down}(\Delta\tau,\varepsilon_{f_D}) = -\sqrt{\frac{P_{Rx}}{2}}d(t-\tau+\tau_{iono}-\tau_{GD}^{Rx})e^{2\pi jf_{sc}(-\tau+\tau_{iono}-\tau_{GD}^{Rx})}e^{j(\varphi_{iono}+\varphi_{GD}^{Rx})}.e^{-j2\pi\varepsilon_{f_D}\times\frac{T_{int}}{2}}\cdot\text{sinc}(\pi\varepsilon_{f_D}T_{int})\cdot R(\Delta\tau+\tau_{iono}-\tau_{GD}^{Rx})$$

Conventional Dual Side Band (DSB) acquisition forms the following detector:

**(Equation 19)**

$$D_1^{DSB}(\Delta\tau,\varepsilon_{f_D}) = \left\|R_{Right}^{Down}(\Delta\tau,\varepsilon_{f_D})\right\|^2 + \left\|R_{Left}^{Up}(\Delta\tau,\varepsilon_{f_D})\right\|^2$$

$$D_1^{DSB}(\Delta\tau,\varepsilon_{f_D}) = \frac{P_{Rx}}{2}(\text{sinc}(\pi\varepsilon_{f_D}T_{int})\cdot R(\Delta\tau+\tau_{iono}-\tau_{GD}^{Rx}))^2 + \frac{P_{Rx}}{2}(\text{sinc}(\pi\varepsilon_{f_D}T_{int})\cdot R(\Delta\tau+\tau_{iono}-\tau_{GD}^{Rx}))^2$$

which yields finally to:

## (Equation 20)

$$D_1^{DSB}(\Delta\tau,\varepsilon_{f_D}) = P_{Rx}(\text{sinc}(\pi\varepsilon_{f_D}T_{int})^2 \cdot R(\Delta\tau + \tau_{iono} - \tau_{GD}^{Rx})^2$$

The SBP detector may be understood as an alternative detector to the previously described DSB detector. The detector output results from multiplying $R_{Down}^{Up}(\Delta\tau,\varepsilon_{f_D})$ with $R_{Left}^{Up}(\Delta\tau,\varepsilon_{f_D})$ (here a complex multiplication is applied), instead of adding the squared absolute values.

The detector output may be described in terms of some of the mathematical expressions already introduced above.

## (Equation 21)

$$D_1^{SBP}(\Delta\tau,\varepsilon_{f_D}) = R_{Right}^{Down}(\Delta\tau,\varepsilon_{f_D}) \times R_{Left}^{Up}(\Delta\tau,\varepsilon_{f_D})$$

$$D_1^{SBP}(\Delta\tau,\varepsilon_{f_D}) = \sqrt{\frac{P_{Rx}}{2}}d(t-\tau+\tau_{iono}-\tau_{GD}^{Rx})e^{-2\pi j f_{sc}(-\tau+\tau_{iono}-\tau_{GD}^{Rx})}e^{j(\varphi_{iono}+\varphi_{GD}^{Rx})}.e^{-j2\pi\varepsilon_{f_D}\times\frac{T_{int}}{2}} \cdot \text{sinc}(\pi\varepsilon_{f_D}T_{int}) \cdot R(\Delta\tau+\tau_{iono}-\tau_{GD}^{Rx})$$

$$\sqrt{\frac{P_{Rx}}{2}}d(t-\tau+\tau_{iono}-\tau_{GD}^{Rx})e^{2\pi j f_{sc}(-\tau+\tau_{iono}-\tau_{GD}^{Rx})}e^{j(\varphi_{iono}+\varphi_{GD}^{Rx})}.e^{-j2\pi\varepsilon_{f_D}\times\frac{T_{int}}{2}} \cdot \text{sinc}(\pi\varepsilon_{f_D}T_{int}) \cdot R(\Delta\tau+\tau_{iono}-\tau_{GD}^{Rx})$$

This yields to the following expression for the SBP detector:

## (Equation 22)

$$D_1^{SBP}(\Delta\tau,\varepsilon_{f_D}) = \frac{P_{Rx}}{2}e^{j(2(\varphi_{iono}+\varphi_{GD}^{Rx})-2\pi\varepsilon_{f_D}\times T_{int})} \cdot (\text{sinc}(\pi\varepsilon_{f_D}T_{int}))^2 R(\Delta\tau + \tau_{iono} - \tau_{GD}^{Rx})^2$$

Hence it appears that w.r.t. to a conventional detector:

- A reduction by a factor of 2 of the detector output is observed.

- An additional exponential accounting for the combined effects of the ionosphere, receiver group delay but also the Doppler Estimation Error appears: $e^{j(2(\varphi_{iono}+\varphi_{GD}^{Rx})-2\pi\varepsilon_{f_D}\times T_{int})}$.

Furthermore, it can be verified that through the multiplication, the symbol d(t) disappears from the expression of the detector output (SBP Detector) (in a similar way that the symbol d(t) disappears from the SSB and DSB detector expression, through the squaring operation).

For applications where the transmitter-receiver link is not affected by ionosphere, either because the transmitter is located on the earth, or below the ionospheric layers, or because the ionosphere does not lead to a delay for the applied RF carrier frequency, then the expression for the $D_1^{SBP}(\Delta\tau,\varepsilon_{f_D})$ reduces to (note that the $\tau_{iono}$ is also suppressed from the correlation, R(·)):

## (Equation 23)

$$D_1^{SBP}(\Delta\tau,\varepsilon_{f_D}) = \frac{P_{Rx}}{2}e^{j(2\varphi_{GD}^{Rx}-2\pi\varepsilon_{f_D}\times T_{int})} \cdot (\text{sinc}(\pi\varepsilon_{f_D}T_{int}))^2 \cdot R(\Delta\tau - \tau_{GD}^{Rx})^2$$

For receivers whose hardware group delay is calibrated ($\varphi^{Rx}{}_{GD}$ and $\tau^{Rx}_{GD}$ is a priori known and can be suppressed from (Equation 23), or for receivers whose hardware group delay is negligible, it is possible to correct this contribution and the former expression results in:

(Equation 24)

$$D_1^{SBP}(\Delta\tau,\varepsilon_{f_D}) = \frac{P_{Rx}}{2}e^{-j2\pi\varepsilon_{f_D}\times T_{int}} \cdot (\text{sinc}(\pi\varepsilon_{f_D}T_{int}))^2 \cdot R(\Delta\tau)^2$$

Therefore, by selecting the real part of this detector, the detector output yields:

(Equation 25)

$$D_{1,Real}^{SBP}(\Delta\tau,\varepsilon_{f_D}) = \text{Real}(D_1^{SBP}(\Delta\tau,\varepsilon_{f_D})) = \frac{P_{Rx}}{2}\cos(2\pi\varepsilon_{f_D}\times T_{int})\times(\text{sinc}(\pi\varepsilon_{f_D}T_{int}))^2 R(\Delta\tau)^2$$

Again when comparing this reduced expression of $D_{1,Real}^{SBP}(\Delta\tau,\varepsilon_{f_D})$ with the one of the $D_1^{DSB}(\Delta\tau,\varepsilon_{f_D})$ it appears again that two effects can be observed:

- a reduction by a factor of 2 of the detector output; and
- an additional cosine term ($\cos(2\pi\varepsilon_{fD}\times T_{int})$).

If the transmitter-receiver link is affected by ionosphere meaning that $\varphi_{iono}$ is non-negligible and/or if the hardware group delay onto the carrier phase, $\varphi^{RX}{}_{GD}$, is non-negligible, or if the residual of the hardware group delay cannot be negligible, then a Non-Coherent Side Band Product Detector can be proposed as follows:

(Equation 26)

$$\left\|D_1^{SBP}(\Delta\tau,\varepsilon_{f_D})\right\| = \sqrt{\left((D_1^{SBP}(\Delta\tau,\varepsilon_{f_D}))\right)^2} = \frac{P_{Rx}}{2}(\text{sinc}(\pi\varepsilon_{f_D}T_{int}))^2 R(\Delta\tau)^2$$

It has to be noted that up to now a single non-coherent summation was applied to derive the expression of the Side Band Product Detector. As for the Single and Dual Side Band Detectors it is however possible to add non-coherently different SBP detectors computed on successive coherent integration times yielding:

(Equation 27)

$$D_{NC}^{SBP} = \sum^{N_{NC}}\left\|D_1^{SBP}(\Delta\tau,\varepsilon_{f_D})\right\|^2$$

As an alternative to the first definition of the detector, the complex multiplication between the $R_{Right}^{Down}(\Delta\tau,\varepsilon_{f_D})$ correlation term and the complex conjugate of the $R_{Left}^{Up}(\Delta\tau,\varepsilon_{f_D})$ correlation term is also proposed, yielding to the corresponding expression

(Equation 28)

$$D_{1,Conj}^{SBP}(\Delta\tau,\varepsilon_{f_D}) = R_{Right}^{Down}(\Delta\tau,\varepsilon_{f_D})\times\overline{R}_{Left}^{Up}(\Delta\tau,\varepsilon_{f_D})$$

(Equation 29)

$$D_{1,Conj}^{SBP}(\Delta\tau,\varepsilon_{f_D}) = \sqrt{\frac{P_{Rx}}{2}}d(t-\tau+\tau_{iono}-\tau_{GD}^{Rx})e^{-2\pi jf_{sc}(-\tau+\tau_{iono}-\tau_{GD}^{Rx})}e^{j(\varphi_{iono}+\varphi_{GD}^{Rx})}.e^{-j2\pi\varepsilon_{f_D}\times\frac{T_{int}}{2}}\cdot\sin c(\pi\varepsilon_{f_D}T_{int})\cdot R(\Delta\tau+\tau_{iono}-\tau_{GD}^{Rx})$$

$$\sqrt{\frac{P_{Rx}}{2}}d(t-\tau+\tau_{iono}-\tau_{GD}^{Rx})e^{-2\pi jf_{sc}(-\tau+\tau_{iono}-\tau_{GD}^{Rx})}e^{-j(\varphi_{iono}+\varphi_{GD}^{Rx})}.e^{j2\pi\varepsilon_{f_D}\times\frac{T_{int}}{2}}\cdot\sin c(\pi\varepsilon_{f_D}T_{int})\cdot R(\Delta\tau+\tau_{iono}-\tau_{GD}^{Rx})$$

(Equation 30)

$$D_{1,Conj}^{SBP}(\Delta\tau,\varepsilon_{f_D}) = \frac{P_{Rx}}{2}e^{-4\pi jf_{sc}(-\tau+\tau_{iono}-\tau_{GD}^{Rx})}\cdot(\text{sinc}(\pi\varepsilon_{f_D}T_{int}))^2 R(\Delta\tau+\tau_{iono}-\tau_{GD}^{Rx})^2$$

When compared to the expression of (Equation 22) it appears that this alternative detector is no more sensitive to the impact of the ionosphere, hardware group delay onto the carrier phase, and of the Doppler mis-alignment, all expressed in the term $e^{j(2(\varphi_{iono}+\varphi_{GD}^{Rx})-2\pi\varepsilon_{f_D}\times T_{int})}$ in the DSB expression of (Equation 22). Now the impact of ionosphere and hardware group delay onto the code appears with the additional term $e^{-4\pi jf_{sc}(-\tau+\tau_{iono}-\tau_{GD}^{Rx})}$. Furthermore, the product of the sub-carrier frequency $f_{sc}$ and the actual code delay $\tau$ influences the detector output too. As a consequence both versions of the new detector output $D_1^{SBP}(\Delta\tau,\varepsilon_{f_D})$ and $D_{1,Conj}^{SBP}(\Delta\tau,\varepsilon_{f_D})$ are complementary for to their robustness and sensitivity w.r.t. degradation parameters, but both are totally immune to the modulated symbol or data which is not the case of the DSB detector.

Here again it is possible to improve the acquisition performances by adding non-coherently different SBP detectors using the complex conjugate operation and computed on successive coherent integration times yielding:

(Equation 31)

$$D_{NC,Conj}^{SBP} = \sum^{N_{NC}}\left\|D_{1,Conj}^{SBP}(\Delta\tau,\varepsilon_{f_D})\right\|^2$$

In order to illustrate the principle of the Side-Band Product (SBP), the aforementioned derivations were based on a BOC signal generated with a BPSK pulse shape, as primitive pulse shape in the generation of the BOC pulse shape. Now, they can be extended to other primitive pulse shapes such as Square-Root Raised Cosine (SRRC), as described by the following equation which is equivalent to (Equation 6):

(Equation 32)

$$p_{BOC}(t) = \sqrt{2}.\cos(2\pi f_{sc}t).p_{SRRC}(t) = \sqrt{2}.\frac{e^{2\pi jf_{sc}(t)}+e^{-2\pi jf_{sc}(t)}}{2}.p_{SRRC}(t)$$

In the following, a derivation of the $D_{SBP}$ Detector Output, now when accounting for the thermal noise, is derived. Concentration is given to the contribution of the thermal noise (and potential Radio Frequency Interferences) onto the expression of the SBP detector. For simplification, the effects of the ionosphere and receiver group delay are not accounted here.

First, a model for reception is discussed. The same model at reception as for (Equation 4) is applied but with the following modifications:

• an impact of ionosphere and hardware receiver is no more accounted;

- the model at baseband is applied (exp(j2πf$_{carr}$t) is removed; and
- an additional term n$_{th}$(t) accounting for the noise is considered.

n$_{th}$(t) represents the additional thermal noise with double sided power spectral density N$_0$. The corresponding base-band representation of the received signal can be written as (ignoring multipath effects):

(Equation 33)

$$S(t) = \sqrt{P_{Rx}}.e^{j2\pi(f_{carr})(t-\tau)}\sum d(t-\tau)p_{BOC}(t-\tau).c(t-\tau) + n_{th}(t)$$

In the following a Model for the SBP Detector applied to the BOC signal is discussed. As explained above, the first step to generate the detector output comprises:

1) down-converting the right spectral side lobe (resp. up-converting the left spectral side lobe) of the BOC signal to the central frequency (here 0 if the signal was initially at base-band)
2) filtering with a Low Pass Filter (LPF),
3) correlating with the BPSK replica modulated with the same spreading sequence c(t), in order to generate the correlation function of the right spectral lobe (resp. left spectral lobe).

The following four equations represent respectively, the real and imaginary parts of the correlation outputs of the signal contributions from the left and right spectral side lobes. The *sinc* term has been deduced based on an approximation regarding the phase variations caused by the Doppler (frequency) $\varepsilon_{fD}$ during the coherent integration time T$_{int}$, as explained for the derivation of (Equation 14).

(Equation 34)

$$A_{In}^{Left}(t) = \left[\sqrt{\frac{P_{Rx}}{2}}\left(d_l(t-\tau)R_{c_k,c_k}(\Delta\tau)\right)\times\cos(\pi\varepsilon_{f_D}T_{int} - \Delta\varphi + 2\pi f_{sc}\tau)\times\mathrm{sinc}(\varepsilon_{f_D}T_{int}) + \frac{1}{T_{int}}\int_0^{T_{int}}\tilde{n}_c^{left}(t)\times c_l(t-\Delta\tau)dt\right]$$

(Equation 35)

$$A_Q^{Left}(t) = \left[-\sqrt{\frac{P_{Rx}}{2}}\left(d_l(t-\tau)R_{c_l,c_l}(\Delta\tau)\right)\times\sin(\pi\varepsilon_{f_D}T_{int} - \Delta\varphi + 2\pi f_{sc}\tau)\times\mathrm{sinc}(\varepsilon_{f_D}T_{int}) + \frac{1}{T_{int}}\int_0^{T_{int}}\tilde{n}_s^{left}(t)\times c_l(t-\Delta\tau)dt\right]$$

(Equation 36)

$$A_{In}^{Right}(t) = \left[\sqrt{\frac{P_{Rx}}{2}}\left(d_l(t-\tau)R_{c_l,c_l}(\Delta\tau)\right)\times\cos(\pi\varepsilon_{f_D}T_{int} - \Delta\varphi - 2\pi f_{sc}\tau)\times\mathrm{sinc}(\varepsilon_{f_D}T_{int}) + \frac{1}{T_{int}}\int_0^{T_{int}}\tilde{n}_c^{Right}(t)\times c_l(t-\Delta\tau)dt\right]$$

(Equation 37)

$$A_Q^{Right}(t) = \left[-\sqrt{\frac{P_{Rx}}{2}}\left(d_l(t-\tau)R_{c_l,c_l}(\Delta\tau)\right)\times\sin(\pi\varepsilon_{f_D}T_{int} - \Delta\varphi - 2\pi f_{sc}\tau)\times\mathrm{sinc}(\varepsilon_{f_D}T_{int}) + \frac{1}{T_{int}}\int_0^{T_{int}}\tilde{n}_s^{Right}(t)\times c_l(t-\Delta\tau)dt\right]$$

$\Delta\tau$ represents the code offset between the replica and the received signal. $\Delta\varphi$ represents the phase offset between the replica and the received signal. This is equal to $\Delta\varphi = \varphi_0^{Rx} - \hat{\varphi}_0^{Rx}$, where $\varphi_0^{Rx}$ and $\hat{\varphi}_0^{Rx}$ represent, respectively, the initial phase offset of the received and of the replica signals. As explained above, a corresponding initial value is defined unambiguously, based on the Code-Carrier Coherency constraint and can be set to 0, without modifying the later derivations. As a consequence, in the following $A\varphi = 0$.

$\varepsilon_{fd}$ represents the frequency offset (Doppler) between the replica and the received signal. $R_{ci,ci}(\Delta\tau)$ represents the Auto-Correlation Function between a code $c_k$ and the code $c_k$ offset by $\Delta\tau$ and can be expressed with the simplified notation $R(\Delta\tau)$ as:

$$R_{c_i,c_i}(\Delta\tau) = \frac{1}{T_{int}}\int_0^{T_{int}} c_i(t)c_i(t-\Delta\tau)dt = R(\Delta\tau)$$

$T_{int}$ corresponds to the coherent correlation/integration time which usually covers the spreading code period duration ($T_{int}=L\times T_c$). $\tilde{n}_c^{left}(t)$, $\tilde{n}_s^{left}(t)$, $\tilde{n}_c^{right}(t)$, $\tilde{n}_s^{right}(t)$ represent respectively the noise contributions for the in-phase component of the negative spectral contribution, for the quadrature component of the negative spectral contribution, for the in-phase components of the positive spectral contribution and for the quadrature component of the positive spectral contribution. L is equal to a code length or period (4096 for the Galileo E1-B or signals). The code length may be a number of chips per spreading code period, or a symbol duration. It must be noted that for non-periodical codes, L corresponds to the number of chips which cover a coherent integration time, $T_{int}$. Here, the corresponding variables are Gaussian distributed (with double-sided power spectral density $N_o/4$). To derive such simplified models of the correlator outputs, the following assumptions have been considered:

- half of the received signal power is contained into the left spectral lobe and half of the received power is contained to the right spectral lobe; and
- the BOC signal is equal to the sum of a BPSK signal offset with $f_{sc}$ Hz and another BPSK signal offset with $-f_{sc}$ Hz).

## (Equation 38)

$$p_{BOC}(t) \approx \sqrt{2}.\cos(2\pi f_{sc}t).p_{Rect}(t) = \sqrt{2}.\frac{e^{2\pi j f_{sc}(t)} + e^{-2\pi j f_{sc}(t)}}{2} \cdot p_{Rect}(t)$$

For the second step, the expression for the Side Band Product (SBP) detector (the detector output) applied to the acquisition of the BOC signal is obtained by applying a complex multiplication between the complex correlation outputs for the Left and Right Spectral Lobe of the input signal:

## (Equation 39)

$$D_1^{SBP}(t) = \left(A_{In}^{Left}(t) + jA_Q^{Left}(t)\right) \times \left(A_{In}^{Right}(t) + jA_{Quad}^{Right}(t)\right)$$

## (Equation 40)

$$D_1^{SBP}(t) = \left(A_{In}^{Left}(t) \times A_{In}^{Right}(t) - A_Q^{Left}(t) \times A_Q^{Right}(t)\right) + j\left(A_{In}^{Left}(t) \times A_Q^{Right}(t) + A_Q^{Left}(t) \times A_{In}^{Right}(t)\right)$$

The real part of the detector can be expressed as:

(Equation 41)

$$D_{1,Det}^{SBP,Real}(t) = \left( \sqrt{\frac{P_{Rx}}{2}} R(\Delta\tau) \times \cos(\pi\varepsilon_{f_D}T_{\text{int}} + 2\pi f_{sc}\tau) \times \text{sinc}(\varepsilon_{f_D}T_{\text{int}}) + \frac{1}{T_{\text{int}}}\int_0^{T_{\text{int}}} \tilde{n}_c^{left}(t) \times c_l(t-\Delta\tau)dt \right) \times$$

$$\left( \sqrt{\frac{P_{Rx}}{2}} R(\Delta\tau) \times \cos(\pi\varepsilon_{f_D}T_{\text{int}} - 2\pi f_{sc}\tau) \times \text{sinc}(\varepsilon_{f_D}T_{\text{int}}) + \frac{1}{T_{\text{int}}}\int_0^{T_{\text{int}}} \tilde{n}_c^{Right}(t) \times c_l(t-\Delta\tau)dt \right) -$$

$$\left( -\sqrt{\frac{P_{Rx}}{2}} R(\Delta\tau) \times \sin(\pi\varepsilon_{f_D}T_{\text{int}} + 2\pi f_{sc}\tau) \times \text{sinc}(\varepsilon_{f_D}T_{\text{int}}) + \frac{1}{T_{\text{int}}}\int_0^{T_{\text{int}}} \tilde{n}_s^{left}(t) \times c_l(t-\Delta\tau)dt \right) \times$$

$$\left( -\sqrt{\frac{P_{Rx}}{2}} R(\Delta\tau) \times \sin(\pi\varepsilon_{f_D}T_{\text{int}} - 2\pi f_{sc}\tau) \times \text{sinc}(\varepsilon_{f_D}T_{\text{int}}) + \frac{1}{T_{\text{int}}}\int_0^{T_{\text{int}}} \tilde{n}_s^{Right}(t) \times c_l(t-\Delta\tau)dt \right)$$

The real part of the detector output can be decomposed into a deterministic and a stochastic contribution.

The deterministic contributions of the real part of the detector output can be defined as:

(Equation 42)

$$D_{1,Det}^{SBP,Real}(t) = \left( \sqrt{\frac{P_{Rx}}{2}} R(\Delta\tau) \times \cos(\pi\varepsilon_{f_D}T_{\text{int}} + 2\pi f_{sc}\tau) \times \text{sinc}(\varepsilon_{f_D}T_{\text{int}}) \right) \times \left( \sqrt{\frac{P_{Rx}}{2}} R(\Delta\tau) \times \cos(\pi\varepsilon_{f_D}T_{\text{int}} - 2\pi f_{sc}\tau) \times \text{sinc}(\varepsilon_{f_D}T_{\text{int}}) \right) -$$

$$\left( \sqrt{\frac{P_{Rx}}{2}} R(\Delta\tau) \times \sin(\pi\varepsilon_{f_D}T_{\text{int}} + 2\pi f_{sc}\tau) \times \text{sinc}(\varepsilon_{f_D}T_{\text{int}}) \right) \times \left( \sqrt{\frac{P_{Rx}}{2}} R(\Delta\tau) \times \sin(\pi\varepsilon_{f_D}T_{\text{int}} - 2\pi f_{sc}\tau) \times \text{sinc}(\varepsilon_{f_D}T_{\text{int}}) \right)$$

(Equation 43)

$$D_{1,Det}^{SBP,Real}(t) = \frac{P_{Rx}}{2} \times R^2(\Delta\tau) \times \text{sinc}^2(\varepsilon_{f_D}T_{\text{int}}) \times \begin{bmatrix} (\cos(\pi\varepsilon_{f_D}T_{\text{int}} + 2\pi f_{sc}\tau) \times \cos(\pi\varepsilon_{f_D}T_{\text{int}} - 2\pi f_{sc}\tau)) - \\ (\sin(\pi\varepsilon_{f_D}T_{\text{int}} + 2\pi f_{sc}\tau) \times \sin(\pi\varepsilon_{f_D}T_{\text{int}} - 2\pi f_{sc}\tau)) \end{bmatrix}$$

Using the trigonometric simplification $\cos(\alpha) \times \cos(\beta) - \sin(\alpha) \times \sin(\beta) = \cos(\alpha + \beta)$ with $\alpha = (\pi\varepsilon_{fD}T_{\text{int}} + 2\pi f_{sc}\tau)$ and $\beta = (\pi\varepsilon_{fD}T_{\text{int}} - 2\pi f_{sc}\tau)$ yields

(Equation 44)

$$D_{1,Det}^{SBP,Real}(t) = \frac{P_{Rx}}{2} \times R^2(\Delta\tau) \times \text{sinc}^2(\varepsilon_{f_D}T_{\text{int}}) \times \cos(2\pi\varepsilon_{f_D}T_{\text{int}})$$

The expression for the stochastic contribution of the real part of the detector output can be defined as:

(Equation 45)

$$D_{1,Stoch}^{SBP,Real}(t) = \left( \sqrt{\frac{P_{Rx}}{2}} \, R(\Delta\tau) \times \cos(\pi\varepsilon_{f_D}T_{\text{int}} + 2\pi f_{sc}\tau) \times \text{sinc}(\varepsilon_{f_D}T_{\text{int}}) \times \frac{1}{T_{\text{int}}}\int_0^{T_{\text{int}}} \widetilde{n}_c^{Right}(t) \times c_l(t-\Delta\tau)dt \right) +$$

$$\left( \sqrt{\frac{P_{Rx}}{2}} \, R(\Delta\tau) \times \cos(\pi\varepsilon_{f_D}T_{\text{int}} - 2\pi f_{sc}\tau) \times \text{sinc}(\varepsilon_{f_D}T_{\text{int}}) \times \frac{1}{T_{\text{int}}}\int_0^{T_{\text{int}}} \widetilde{n}_c^{left}(t) \times c_l(t-\Delta\tau)dt \right) +$$

$$\frac{1}{T_{\text{int}}}\int_0^{T_{\text{int}}} \widetilde{n}_c^{Right}(t) \times c_l(t-\Delta\tau)dt \, \frac{1}{T_{\text{int}}}\int_0^{T_{\text{int}}} \widetilde{n}_c^{left}(t) \times c_l(t-\Delta\tau)dt \, -$$

$$\left( -\sqrt{\frac{P_{Rx}}{2}} \, R(\Delta\tau) \times \sin(\pi\varepsilon_{f_D}T_{\text{int}} + 2\pi f_{sc}\tau) \times \text{sinc}(\varepsilon_{f_D}T_{\text{int}}) \times \frac{1}{T_{\text{int}}}\int_0^{T_{\text{int}}} \widetilde{n}_s^{Right}(t) \times c_l(t-\Delta\tau)dt \right) +$$

$$\left( -\sqrt{\frac{P_{Rx}}{2}} \, R(\Delta\tau) \times \sin(\pi\varepsilon_{f_D}T_{\text{int}} - 2\pi f_{sc}\tau) \times \text{sinc}(\varepsilon_{f_D}T_{\text{int}}) \times \frac{1}{T_{\text{int}}}\int_0^{T_{\text{int}}} \widetilde{n}_s^{left}(t) \times c_l(t-\Delta\tau)dt \right) +$$

$$\frac{1}{T_{\text{int}}}\int_0^{T_{\text{int}}} \widetilde{n}_s^{Right}(t) \times c_l(t-\Delta\tau)dt \times \frac{1}{T_{\text{int}}}\int_0^{T_{\text{int}}} \widetilde{n}_s^{left}(t) \times c_l(t-\Delta\tau)dt$$

On average, the elementary contributions in the former expression for the stochastic part of the real part of the detector output vanishes, because the noise contribution is centred and therefore

$$E\left( \frac{1}{T_{\text{int}}}\int_0^{T_{\text{int}}} \widetilde{n}_c^{Right}(t) \times c_k(t-\Delta\tau)dt \right) = 0 \, , \quad E\left( \frac{1}{T_{\text{int}}}\int_0^{T_{\text{int}}} \widetilde{n}_c^{left}(t) \times c_k(t-\Delta\tau)dt \right) = 0 \, ,$$

$$E\left( \frac{1}{T_{\text{int}}}\int_0^{T_{\text{int}}} \widetilde{n}_s^{Right}(t) \times c_k(t-\Delta\tau)dt \right) = 0 \text{ and } E\left( \frac{1}{T_{\text{int}}}\int_0^{T_{\text{int}}} \widetilde{n}_s^{left}(t) \times c_k(t-\Delta\tau)dt \right) = 0 \, .$$

The noise contributions for the negative and positive spectral components of the noise (after Low Pass Filtering) are uncorrelated. And therefore:

$$E\left( \frac{1}{T_{\text{int}}}\int_0^{T_{\text{int}}} \widetilde{n}_c^{Right}(t) \times c_l(t-\Delta\tau)dt \, \frac{1}{T_{\text{int}}}\int_0^{T_{\text{int}}} \widetilde{n}_c^{left}(t) \times c_l(t-\Delta\tau)dt \right) = 0$$

and

$$E\left( \frac{1}{T_{\text{int}}}\int_0^{T_{\text{int}}} \widetilde{n}_s^{Right}(t) \times c_l(t-\Delta\tau)dt \times \frac{1}{T_{\text{int}}}\int_0^{T_{\text{int}}} \widetilde{n}_s^{left}(t) \times c_l(t-\Delta\tau)dt \right) = 0 \, .$$

As a conclusion, the real part of the detector output has an average equal to

## (Equation 46)

$$D_{1,Det}^{SBP,\text{Real},H1}(t) = \frac{P_{Rx}}{2} R^2(\Delta\tau) \times \cos(2(\pi\varepsilon_{f_D}T_{\text{int}})) \times \text{sinc}^2(\varepsilon_{f_D}T_{\text{int}})$$

and is applicable when the correct code/Doppler hypothesis is met ("Hit"). This corresponds to the so called "H1" case. In case, an incorrect Code or Doppler hypothesis is proposed, the former expression is modified by setting $P_{rx}=0$ (no signal present). This corresponds to the "H0" case.

## (Equation 47)

$$D_{1,Det}^{SBP,\text{Real},H0}(t) = 0$$

Similarly the imaginary part of the detector is expressed by:

## (Equation 48)

$$D_{1,Det}^{SBP,\text{Imag}}(t) = \left( \sqrt{\frac{P_{Rx}}{2}} R(\Delta\tau) \times \cos(\pi\varepsilon_{f_D}T_{\text{int}} + 2\pi f_{sc}\tau) \times \text{sinc}(\varepsilon_{f_D}T_{\text{int}}) + \frac{1}{T_{\text{int}}}\int_0^{T_{\text{int}}} \tilde{n}_c^{left}(t) \times c_l(t-\Delta\tau)dt \right) \times$$

$$\left( -\sqrt{\frac{P_{Rx}}{2}} R(\Delta\tau) \times \sin(\pi\varepsilon_{f_D}T_{\text{int}} - 2\pi f_{sc}\tau) \times \text{sinc}(\varepsilon_{f_D}T_{\text{int}}) + \frac{1}{T_{\text{int}}}\int_0^{T_{\text{int}}} \tilde{n}_s^{Right}(t) \times c_l(t-\Delta\tau)dt \right) +$$

$$\left( -\sqrt{\frac{P_{Rx}}{2}} R(\Delta\tau) \times \sin(\pi\varepsilon_{f_D}T_{\text{int}} + 2\pi f_{sc}\tau) \times \text{sinc}(\varepsilon_{f_D}T_{\text{int}}) + \frac{1}{T_{\text{int}}}\int_0^{T_{\text{int}}} \tilde{n}_s^{left}(t) \times c_l(t-\Delta\tau)dt \right) \times$$

$$\left( \sqrt{\frac{P_{Rx}}{2}} R(\Delta\tau) \times \cos(\pi\varepsilon_{f_D}T_{\text{int}} - 2\pi f_{sc}\tau) \times \text{sinc}(\varepsilon_{f_D}T_{\text{int}}) + \frac{1}{T_{\text{int}}}\int_0^{T_{\text{int}}} \tilde{n}_c^{Right}(t) \times c_l(t-\Delta\tau)dt \right)$$

Again, the imaginary part of the detector output can be decomposed in a deterministic and a stochastic contribution:

## (Equation 49)

$$D_{1,Det}^{SBP,\text{Imag}}(t) = \left( \sqrt{\frac{P_{Rx}}{2}} R(\Delta\tau) \times \cos(\pi\varepsilon_{f_D}T_{\text{int}} + 2\pi f_{sc}\tau) \times \text{sinc}(\varepsilon_{f_D}T_{\text{int}}) \right) \times \left( -\sqrt{\frac{P_{Rx}}{2}} R(\Delta\tau) \times \sin(\pi\varepsilon_{f_D}T_{\text{int}} - 2\pi f_{sc}\tau) \times \text{sinc}(\varepsilon_{f_D}T_{\text{int}}) \right) +$$

$$\left( -\sqrt{\frac{P_{Rx}}{2}} R(\Delta\tau) \times \sin(\pi\varepsilon_{f_D}T_{\text{int}} + 2\pi f_{sc}\tau) \times \text{sinc}(\varepsilon_{f_D}T_{\text{int}}) \right) \times \left( \sqrt{\frac{P_{Rx}}{2}} R(\Delta\tau) \times \cos(\pi\varepsilon_{f_D}T_{\text{int}} - 2\pi f_{sc}\tau) \times \text{sinc}(\varepsilon_{f_D}T_{\text{int}}) \right)$$

## (Equation 50)

$$D_{1,Det}^{SBP,\text{Imag}}(t) = \frac{P_{Rx}}{2} \times R^2(\Delta\tau) \times \text{sinc}^2(\varepsilon_{f_D}T_{\text{int}}) \times \begin{bmatrix} \left(\cos(\pi\varepsilon_{f_D}T_{\text{int}} + 2\pi f_{sc}\tau) \times \sin(\pi\varepsilon_{f_D}T_{\text{int}} - 2\pi f_{sc}\tau)\right) + \\ \left(\sin(\pi\varepsilon_{f_D}T_{\text{int}} + 2\pi f_{sc}\tau) \times \cos(\pi\varepsilon_{f_D}T_{\text{int}} - 2\pi f_{sc}\tau)\right) \end{bmatrix}$$

Using again the trigonometric simplification

$$\cos(\alpha) \times \sin(\beta) + \sin(\alpha) \times \cos(\beta) = \sin(\alpha + \beta) \text{ with } \alpha = (\pi\varepsilon_{f_D} T_{\text{int}} + 2\pi f_{sc}\tau)$$

and

$$\beta = (\pi\varepsilon_{f_D} T_{\text{int}} - 2\pi f_{sc}\tau) \text{ yields}$$

yields

(Equation 51)

$$D_{1,Det}^{SBP,\text{Imag}}(t) = -\frac{P_{Rx}}{2} R^2(\Delta\tau) \times \text{sinc}(\Delta f T_{\text{int}})^2 \times \sin(2\pi\varepsilon_{f_D} T_{\text{int}})$$

It can be verified that the expressions for the real and imaginary parts of the deterministic contribution of the SBP detector are in line with the expression of (Equation 22). The expression for the stochastic contribution of the imaginary part of the detector output can be defined as:

(Equation 52)

$$D_{1,Stoch}^{SBP,\text{Imag}}(t) = \left( \sqrt{\frac{P_{Rx}}{2}} R(\Delta\tau) \times \cos(\pi\varepsilon_{f_D} T_{\text{int}} + 2\pi f_{sc}\tau) \times \text{sinc}(\varepsilon_{f_D} T_{\text{int}}) \frac{1}{T_{\text{int}}} \int_0^{T_{\text{int}}} \tilde{n}_s^{Right}(t) \times c_l(t - \Delta\tau) dt \right) +$$

$$\left( -\sqrt{\frac{P_{Rx}}{2}} R(\Delta\tau) \times \sin(\pi\varepsilon_{f_D} T_{\text{int}} - 2\pi f_{sc}\tau) \times \text{sinc}(\varepsilon_{f_D} T_{\text{int}}) \frac{1}{T_{\text{int}}} \int_0^{T_{\text{int}}} \tilde{n}_c^{left}(t) \times c_l(t - \Delta\tau) dt \right) +$$

$$\frac{1}{T_{\text{int}}} \int_0^{T_{\text{int}}} \tilde{n}_c^{left}(t) \times c_l(t - \Delta\tau) dt \frac{1}{T_{\text{int}}} \int_0^{T_{\text{int}}} \tilde{n}_s^{Right}(t) \times c_l(t - \Delta\tau) dt -$$

$$\left( -\sqrt{\frac{P_{Rx}}{2}} R(\Delta\tau) \times \sin(\pi\varepsilon_{f_D} T_{\text{int}} + 2\pi f_{sc}\tau) \times \text{sinc}(\varepsilon_{f_D} T_{\text{int}}) \frac{1}{T_{\text{int}}} \int_0^{T_{\text{int}}} \tilde{n}_c^{Right}(t) \times c_l(t - \Delta\tau) dt \right) +$$

$$\left( \sqrt{\frac{P_{Rx}}{2}} R(\Delta\tau) \times \cos(\pi\varepsilon_{f_D} T_{\text{int}} - 2\pi f_{sc}\tau) \times \text{sinc}(\varepsilon_{f_D} T_{\text{int}}) \frac{1}{T_{\text{int}}} \int_0^{T_{\text{int}}} \tilde{n}_s^{left}(t) \times c_l(t - \Delta\tau) dt \right) +$$

$$\frac{1}{T_{\text{int}}} \int_0^{T_{\text{int}}} \tilde{n}_s^{left}(t) \times c_l(t - \Delta\tau) dt \frac{1}{T_{\text{int}}} \int_0^{T_{\text{int}}} \tilde{n}_c^{Right}(t) \times c_l(t - \Delta\tau) dt$$

Similarly, on average, the contributions for the stochastic part of the imaginary part of the detector output vanishes because the noise contribution is centred and therefore

$$E\left( \frac{1}{T_{\text{int}}} \int_0^{T_{\text{int}}} \tilde{n}_c^{Right}(t) \times c_l(t - \Delta\tau) dt \right) = 0 , \quad E\left( \frac{1}{T_{\text{int}}} \int_0^{T_{\text{int}}} \tilde{n}_c^{left}(t) \times c_l(t - \Delta\tau) dt \right) = 0 ,$$

$$E\left(\frac{1}{T_{int}}\int_0^{T_{int}}\widetilde{n}_s^{Right}(t)\times c_i(t-\Delta\tau)dt\right)=0 \text{ and } E\left(\frac{1}{T_{int}}\int_0^{T_{int}}\widetilde{n}_s^{left}(t)\times c_i(t-\Delta\tau)dt\right)=0.$$

Again, the noise contributions for the negative and positive spectral components of the noise (after Low Pass Filtering) are uncorrelated. And therefore:

$$\mathrm{E}\left(\frac{1}{T_{int}}\int_0^{T_{int}}\widetilde{n}_c^{left}(t)\times c_i(t-\Delta\tau)dt\frac{1}{T_{int}}\int_0^{T_{int}}\widetilde{n}_s^{Right}(t)\times c_i(t-\Delta\tau)dt\right)=0$$

and

$$E\left(\frac{1}{T_{int}}\int_0^{T_{int}}\widetilde{n}_s^{left}(t)\times c_i(t-\Delta\tau)dt\frac{1}{T_{int}}\int_0^{T_{int}}\widetilde{n}_c^{Right}(t)\times c_i(t-\Delta\tau)dt\right)=0.$$

As a conclusion, the imaginary part of the detector output has an average equal to

(Equation 53)

$$D_{1,Det}^{SBP,\text{Imag},\text{H1}}(t)=-\frac{P_{Rx}}{2}R^2(\Delta\tau)\times\text{sinc}(\Delta fT_{int})^2\times\sin(2\pi\varepsilon_{f_D}T_{int})$$

and is applicable when the correct code/Doppler hypothesis is met ("Hit"). This corresponds to the so called "H1" case. In case an incorrect Code or Doppler hypothesis is proposed, the former expression is modified by setting $P_{rx}=0$ (no signal present). This corresponds to the "H0" case.

(Equation 54)

$$D_{1,Det}^{SBP,\text{Imag},\text{H0}}(t)=0$$

It can be verified, that by combining the deterministic contributions for the real (Equation 46) and imaginary (Equation 53) parts of the detector output, the general expression of (Equation 22) is found again.

As a conclusion, in presence of thermal noise, for the "H0" hypothesis (wrong Code and Doppler frequency hypotheses), the detector output can be modelled as stochastic complex variable having both a real and imaginary part centred (i.e. 0 average). This represents an important differentiator w.r.t. the conventional SSB or DSB whose average equals to the variance of the integrated noise over the coherent integration.

In the following, results from simulations are discussed. According to figures 11 and 12 Monte-Carlo simulations for two examples of BOC signals are presented, a BOC(15,2.5) similar to the Galileo PRS signal, and a BOC(5,2.5) used for comparison. First, the main characteristics such like the magnitude of three (main) detector outputs (matched filter, DSB and SBP detector) are discussed without considering thermal noise. Furthermore, only the effect of the code delay is analysed meaning that the Doppler (frequency) error is set to zero ($\varepsilon_{fd}=0$), as well as the un-calibrated group delay ($\varphi^{Rx}G_D=0$), and ionospherical delay (($\varphi_{Iono}=0$), meaning $e^{j(2(\varphi_{iono}+\varphi_{GD}^{Rx})-2\pi\varepsilon_{f_D}\times T_{int})}=1$. The following table 1 summarises the most important parameters:

Table 1: Simulation Parameters

| Pulse Shape | • BOC(15,2.5) ("sin" option) |
|---|---|

(continued)

|  | • BOC(5,2.5) ("sin" option) |
| --- | --- |
| Coherent Integration Time | • 4ms |
| Detector | • Matched detector<br>• DSB<br>• SBP (and SBP comparison of positive detector output) |
| Tested ($C/N_0$) at correlator input | • 25 dB-Hz<br>• 30 dB-Hz<br>• 35 dB-Hz |
| Monte-Carlo Trials | • 2000 |
| Doppler error | • $\varepsilon_{fd} = 0$ |
| un-calibrated group delay | • $\varphi^{RX}_{GD} = 0$ |
| ionospherical effect | • $\varphi_{Iono} = 0$ |

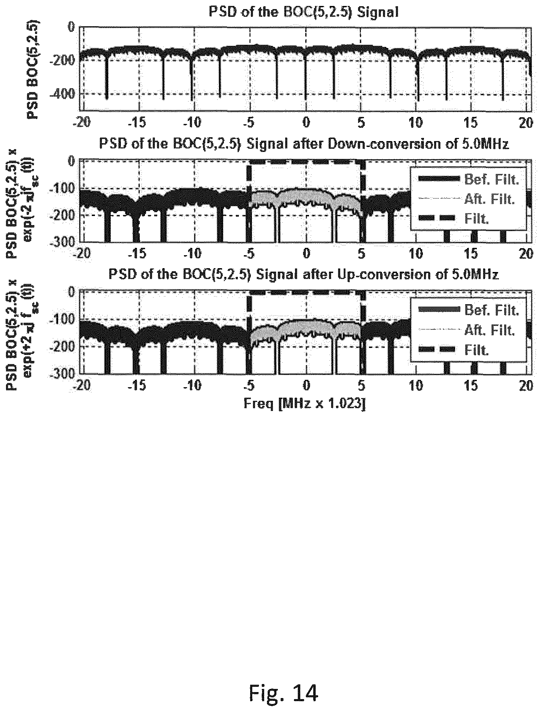

Figure 14 schematically illustrates the Power Spectral Density, PSD, of the BOC(5,2.5) and intermediate signal used for DSB and SBP detector generation. Figure 14 represents the PSD for the BOC(5,2.5) as well as the PSD for left and (resp. right) side lobes, once having being up- (resp. down-) converted to baseband. On the upper part, the PSD is shown for the BOC(5,2.5) signal. On the middle part the PSD is shown for the BOC(5,2.5) after spectral offsetting (to the right) and filtering. Here, the LPF two-sided bandwidth, which is represented with dashed line, is set to four times the chip rate (10MHz) in order to retain as much as possible power from the left spectral contribution of the BOC(5,2.5) PSD (and not starting integrating over the right spectral part). On the lower part the PSD is shown for the BOC(5,2.5) after spectral offsetting (to the left) and filtering. Again, the LPF two-sided bandwidth is also set to four times the chip rate (10MHz).

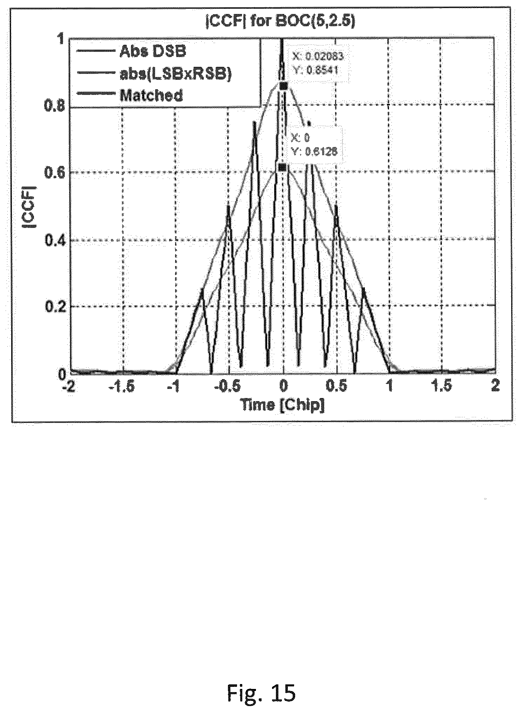

Figure 15 schematically illustrates the square root of the absolute value of the Matched Filter, DSB and SBP detectors (BOC(5,2.5)). Figure 15 represents:

- the detector characteristics obtained for a matched filter acquisition;

- the detector characteristics obtained for a DSB acquisition; and

- the detector characteristics obtained for a SBP detector acquisition.

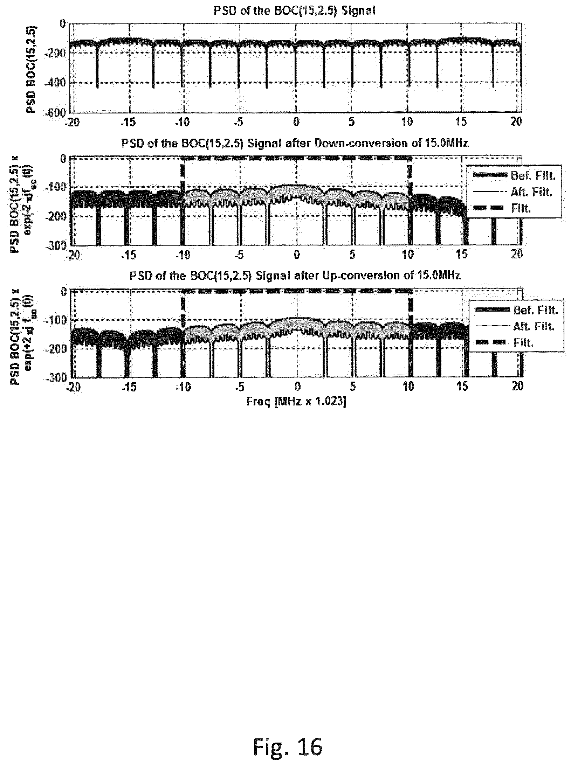

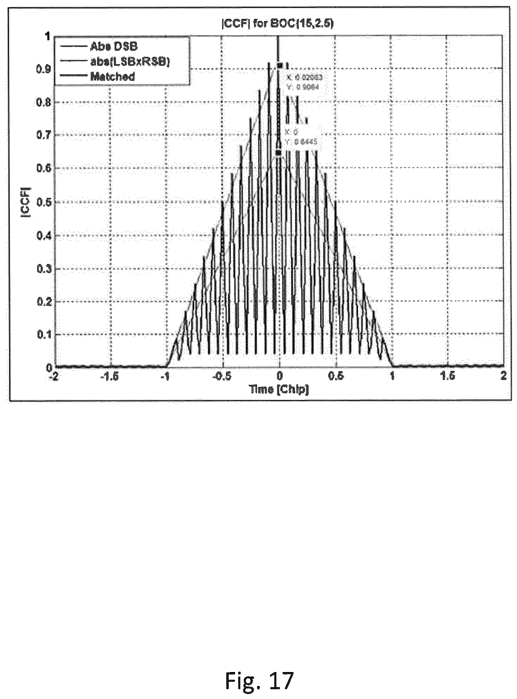

The maximum of the DSB detector equals 0.85 while the maximum of the matched filter detector is 1. This power loss of 1.4 dB is due to the LP filtering applied for generation of the DSB. Similarly, the peak of the SBP detector equals 0.61, when compared to the 0.85 of the DSB, which corresponds to the sqrt(2) scaling factor derived when applying the square root of the the analytical expression for the SBP detector in (Equation 1). Similar curves can be generated for BOC(15,2.5). On Figure 16, the two-sided bandwidth of the LP filter is set to eight times the chip rate (or 20MHz), in order to keep as much as possible of the left (resp. right) spectral content of the BOC(15,2.5) without integrating spectral components of the right (resp. left) spectral content. The main outcomes from these curves are that the LP filtering losses, deduced from the main correlation peak amplitude, are smaller than for BOC(15,2.5) as shown in figures 16 and 17, simply because the bandwidth of 20 MHz is larger, and it is possible to keep more side lobes of the equivalent BPSK (at base-band). The number of peaks for the match filter approach is 3 times larger for the BOC(15,2.5) than for the BOC(5,2.5), as a consequence of the higher ratio between sub-carrier and chip rate frequencies. On Figure 17, it can be again verified that the ratio between the peak obtained with the DSB and the one obtained with the SBP detector (0.906/0.6445) is equal to sqrt(2), as anticipated from the analytical expressions, (Equation 2).

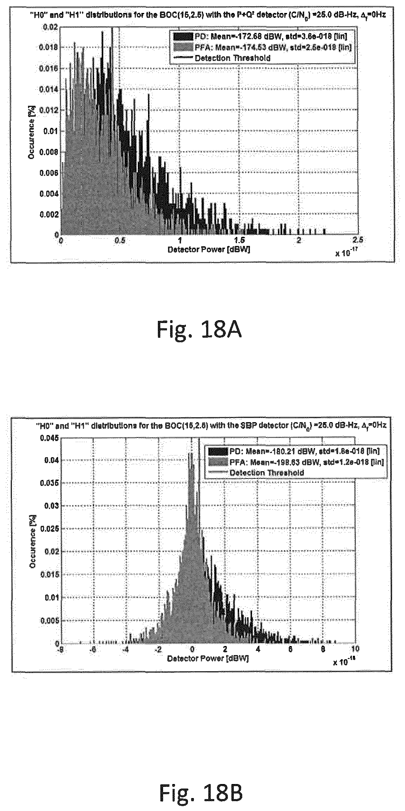

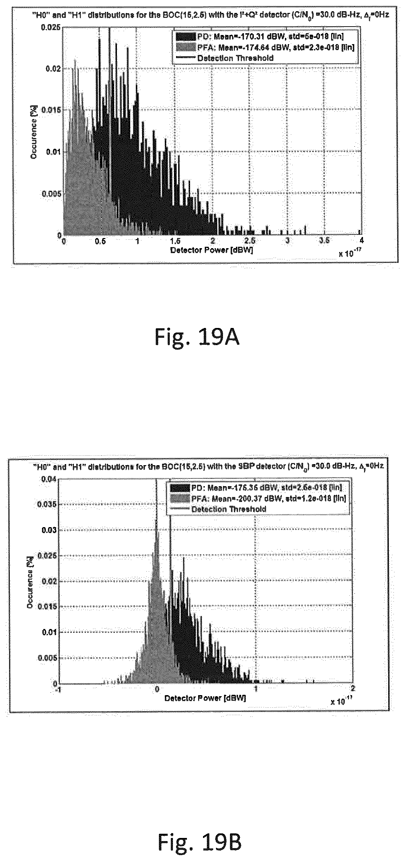

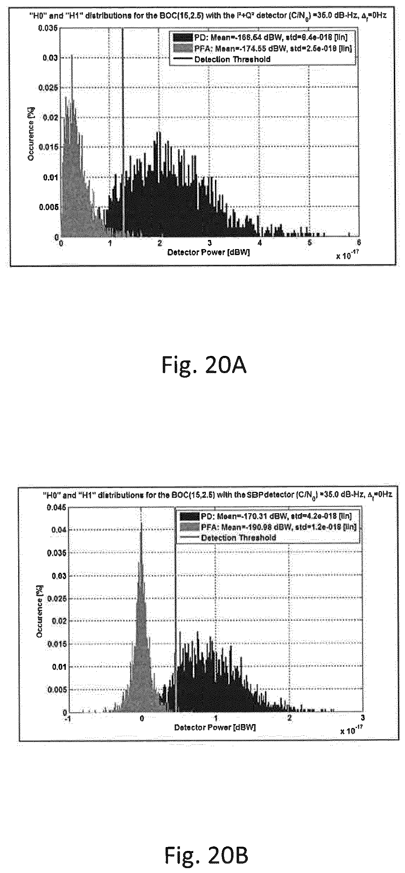

The following figures represent the distributions in the "H0" (wrong tested hypothesis) and "H1" (right tested hypothesis) case, for the BOC(15,2.5) signal and for a ($C/N_0$) of 25dB-Hz, 30 dB-Hz and 35 dB-Hz. Figure 18A and 18B schematically illustrate a distribution for the DSB (figure 18A) and SBP Detector (figure 18B) in the "H0" and "H1" hypotheses for a BOC(15,2.5) and for 25 dB-Hz. Figure 19A and 19B schematically illustrate a distribution for the DSB (figure 19A) and SBP Detector (figure 19B) in the "H0" and "H1" hypotheses for a BOC(15,2.5) and for 30 dB-Hz. Figure 20A and 20B schematically illustrate a Distribution for the DSB (figure 20A) and SBP Detector (figure 20B) in the "H0" and "H1" hypotheses for a BOC(15,2.5) and for 35 dB-Hz. Similar curves can be generated for the BOC(5,2.5) case.

The following statements can be derived:

- for the DSB detector, as expected both "H0" and "H1" distributions are positive, since they are based on a power detector; and
- for the SBP detector, it appears that the "H0" distribution is centred. The "H1" distribution is slightly shifted for a $C/N_0$ of 25 dB-Hz. This shift starts to be more distinct for a $C/N_0$ of 30 dB-Hz. Furthermore, the both "H0" and "H1" distributions can take negative and positive values due to the presence of the noise. Now again the expected or averaged value in the "H1" shall be positive.

The analysis of the corresponding distributions for the SBP detector enable to propose another improvement based on the usage of the SBP detector. It was highlighted that in the "H1" hypothesis (correct hypothesis), the SBP detector output shall be always positive on average, regardless of the modulated symbol. This characteristic is applied to propose an alternative detection strategy. This one comprises introducing a "third" decision state, as follows:

- if the detector output is positive and is above the detection threshold, "1" ("hit") is allocated;
- if the detector output is positive and is below the detection threshold, "0" ("discard") is allocated; and
- if the detector output is negative then no decision is taken, the SBP detector output is discarded, and another evaluation of the detector output for the same Code and Doppler frequency hypotheses is performed.

In order to determine how this alternative decision rule can impact the R.O.C curve, the following example is proposed:

For the first detection iteration bringing a SBP detector value, called $\pi_1$, generated with the first slice samples of $T_{int}s$:

- In the "H0" case:

  ○ if the detector output is positive and above the detection threshold, then the trial participates to the "PFA", with probability of $Prob(\pi_1 > Th | \pi_1 > 0, H0)$ (=$Prob(\pi_1 > Th | H0)$ since Th>0); and
  ○ if the detector output is negative, no decision is taken and the decision is "reported" to the second detection iteration, applying the same set of Code and Doppler hypotheses. This event has a probability of $Prob(\pi_1 < 0 | H0)$.
  ○ if the detector output is between 0 and the detection threshold, Th, it is decided that another set of Code and Doppler hypotheses has to be tested. This event has a probability of $Prob(0 < \pi_1 < Th | H0)$.

- In the "H1" case:

  ○ if the detector output is positive and higher than the detection threshold, then the corresponding trial participates to the "PD", with a probability of $Prob(\pi_1 > Th | H1)$; and
  ○ if the detector output is negative, no decision is taken and the decision is "reported" to the second detection iteration, applying the same set of Code and Doppler hypotheses. This event has a probability of $Prob(\pi_1 < 0 | H1)$.
  ○ if the detector output is between 0 and the detection threshold, it is decided that another set of Code and Doppler hypotheses has to be tested, then the corresponding trial participates to the Probability of Missed Detection "PMD", with a probability of $Prob(0 < \pi_1 < Th | H1)$.

For the second detection iteration, applying the same set of Code and Doppler hypotheses, and bringing a SBP detector value $\pi_2$ generated with the second slice samples of $T_{int}s$:

- In the "H0" case:

  ○ if the detector output is positive and above the detection threshold, then the trial participates to the "PFA", with a probability of

$$Prob(\pi_2 > Th | H0) \times Prob(\pi_1 < 0 | H0),$$

  and
  ○ if the detector output is negative, no decision is taken and the decision is "reported" to the third detection iteration, applying the same set of Code and Doppler hypotheses. This event has a probability of

$$\text{Prob}(\pi_2<0|H0)\times\text{Prob}(\pi_1<0|H0)=(\text{Prob}(\pi<0|H0))^2.$$

- if the detector output is between 0 and the detection threshold, it is decided that another set of Code and Doppler hypotheses has to be tested. This event has a probability of $\text{Prob}(0<\pi_2<\text{Th}|H0)\times \text{Prob}(\pi_1<0|H0)$.

• In the "H1" case:

- if the detector output is positive and below the detection threshold, then the trial participates to the "PD", with a probability of

$$\text{Prob}(\pi_2>\text{Th}|H1)\times\text{Prob}(\pi_1<0|H1);$$

and
- if the detector output is negative, no decision is taken and the decision is "reported" to the third detection iteration, applying the same set of Code and Doppler hypotheses. This event has a probability of $\text{Prob}(\pi_2<0|H1)\times\text{Prob}(\pi_1<0|H1) =(\text{Prob}(\pi<0|H1))^2$.
- if the detector output is between 0 and the detection threshold, it is decided that another set of Code and Doppler hypotheses has to be tested, then the corresponding trial participates to the Probability of Missed Detection "PMD", with a probability of $\text{Prob}(0<\pi_2<\text{Th}|H1)\times\text{Prob}(\pi_1<0|H1)$.

For the third detection iteration, applying the same set of Code and Doppler hypotheses, and bringing a SBP detector value $\pi_3$ and generated with the third slice samples of $T_{int}$s:

• In the "H0" case:

- if the detector output is positive and above the detection threshold, then the trial participates to the "PFA", with probability $\text{Prob}(\pi_3>\text{Th}|H0)\times(\text{Prob}(\pi<0|H0))^2$; and
- if the detector output is negative, no decision is taken and the decision is "reported" to the fourth detection iteration, applying the same set of Code and Doppler hypotheses. This event has a probability of

$$(\text{Prob}(\pi_3<0|H0)\times\text{Prob}(\pi_2<0|H0)\times\text{Prob}(\pi_1<0|H0)=(\text{Prob}(\pi<0|H0))^3.$$

- if the detector output is between 0 and the detection threshold, it is decided that another set of Code and Doppler hypotheses has to be tested. This event has a probability of

$$\text{Prob}(0<\pi_3<\text{Th}|H0)\times\text{Prob}(\pi_2<0|H0)\times\text{Prob}(\pi_1<0|H0)=\text{Prob}(0<\pi<\text{Th}|H0)\times(\text{Prob}(\pi<0|H0))^2.$$

• In the "H1" case:

- if the detector output is positive and below the detection threshold, then the trial participates to the "PD", with probability of

$$\text{Prob}(\pi_3>\text{Th}|H1)\times(\text{Prob}(\pi<0|H1))^2;$$

and
- if the detector output is negative, no decision is taken and the decision is "reported" to the fourth detection iteration, applying the same set of Code and Doppler hypotheses. This event has a probability of

$$(\text{Prob}(\pi_3<0|H1)\times\text{Prob}(\pi_2<0|H1)\times\text{Prob}(\pi_1<0|H1)=(\text{Prob}(\pi<0|H1))^3.$$

- if the detector output is between 0 and the detection threshold, it is decided that another set of Code and Doppler hypotheses has to be tested, then the corresponding trial participates to the Probability of Missed Detection "PMD", with a probability of $\text{Prob}(0<\pi_3<\text{Th}|\text{H1})\times\text{Prob}(\pi_2<0|\text{H1})\times\text{Prob}(\pi_1<0|\text{H1})=\text{Prob}(0<\pi<\text{Th}|\text{H1})\times(\text{Prob}(\pi<0|\text{H1}))^2$.

This iterative principle can be repeated over successive iterations and estimations of the SBP detector output for the same code and Doppler frequency hypotheses. Therefore, the aggregate PFA and PMD levels can be deduced.

(Equation 55)

$$PFA = P(\pi > Th \mid H_0) + P(\pi > Th \mid H_0)P(\pi < 0 \mid H_0) + .. + P(\pi > Th \mid H_0)P(\pi < 0 \mid H_0)^N$$
$$= P(\pi > Th \mid H_0) \times \left[1 + P(\pi < 0 \mid H_0) + P(\pi < 0 \mid H_0)^2 + .. + P(\pi < 0 \mid H_0)^N\right]$$
$$= P(\pi > Th \mid H_0) \times \left[\frac{1 - P(\pi < 0 \mid H_0)^{N+1}}{1 - P(\pi < 0 \mid H_0)}\right]$$

(Equation 56)

$$PD = P(\pi > Th \mid H_1) + P(\pi > Th \mid H_1)P(\pi < 0 \mid H_1) + .. + P(\pi > Th \mid H_1)P(\pi < 0 \mid H_1)^N$$
$$= P(\pi > Th \mid H_1) \times \left[1 + P(\pi < 0 \mid H_1) + P(\pi < 0 \mid H_1)^2 + .. + P(\pi < 0 \mid H_1)^N\right]$$
$$= P(\pi > Th \mid H_1) \times \left[\frac{1 - P(\pi < 0 \mid H_1)^{N+1}}{1 - P(\pi < 0 \mid H_1)}\right]$$

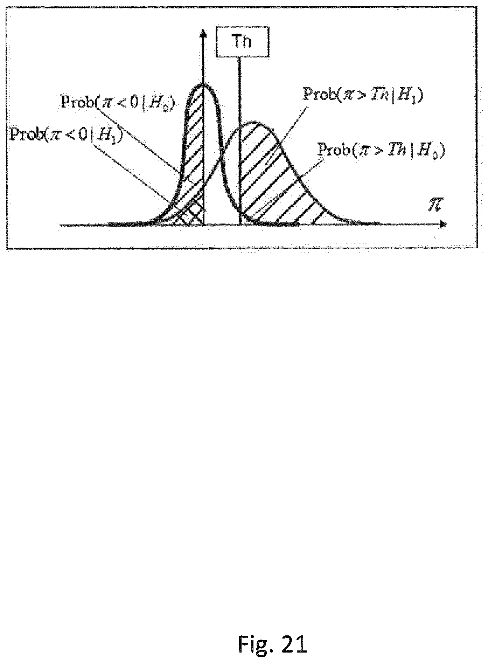

For a fair comparison of the SBP detector strategy w.r.t. the conventional DSB strategy, it is important to state that by introducing successive tests (for the "negative SBP detector outputs"), one delays the decision, and therefore the Mean-Time-To-Acquire (MTTA). Here a "rough" evaluation of this impact comprises a multiplication with a factor 1.5 corresponding to 50% degradation of the MTTA (since on average, 50% of SBP detector outputs are negative for "H0" case, which mainly impacts the MTTA). As a consequence, this option can be somehow compared to a "double dwell time strategy" applied to a DSB (even if this former one impacts even more the MTTA, since two consecutive decisions are always taken because DSB outputs are always positive). The four probabilities, constitutive of the former modified PFA and PD equations are drawn on the figure 21. Figure 21 schematically illustrates a model for the SBP detector output in the "H0" and "H1" hypotheses. Based on the distributions generated with the MC simulation it is possible to evaluate these PFA and PD.

One usual and well recognized method to compare detector performances comprises evaluating the Receiver Operational Curves (R.O.C) representing the Probability of Detection (PD) as function of the Probability of False Alarm (PFA) for a varying detection threshold value. To derive these R.O.C. curves both PFA and PD are calculated for a varying detection threshold symbolised with a line designated as Th in figure 21. The area above the threshold for the "H0" (resp. "H1") distribution represents the PFA (resp. PD) and is evaluated for each value of the detection threshold.

In the following, the concept of the Sided Band Product detector for BOC-modulated signals is extended to the case of the Generalized-BOC-modulated signals, also called G-BOC, on the one side, and on the other side to the case of a G-BOC with asymmetrical data demodulation, G-BOC^AS which can be compared to an Orthogonal Frequency Division Multiplexing (OFDM) signals.

The Generalized-BOC signal is obtained as the combination of different elementary BOC($M_k,N_k$)-modulated signals. The following equation provides the generic expression of a modulated Generalized BOC-Modulated signal obtained by applying an amplitude multiplexing scheme:

(Equation 57)

$$s_{GBOC_{AM}}(t) = \sqrt{2P_{Rx}} \times \sum_{k=1}^{K} d_k(t) \times \alpha_k \times \exp(j\varphi_k) \times \cos(2\pi j f_{sc,k} t) \times c_k(t) \times p_k(t)$$

In this expression K represents the number of sub-carrier frequencies. $f_{sc,k}$ represents each sub-carrier frequency. $c_k(t)$ represents the spreading sequence constituted of binary symbols, called chips, and whose values depend on time t. Typical spreading sequences are pseudo-random noise sequences such as the Gold codes applied for the GPS CA signals or so-called memory codes, but still periodical codes, such as the Galileo E1-B and codes. The $p_k(t)$ is a pulse shape modulating the chips of the spreading sequences which is applied for each sub-carrier frequency and which can be a BPSK($N_k$) pulse shape with a chip rate $f_{c,k} = N \times f_0$. This pulse shape $p_k(t)$ can be different for each elementary BOC($M_k, N_k$)-modulated signal. $d_k(t)$ is a data symbol applied to each sub-carrier frequency. In case no data symbol is modulated, the corresponding BOC($M_k, N_k$)-modulated signal is called a pilot one. P is the aggregate power for multiplexed signal. Furthermore, in the expression of (Equation 57) an amplitude multiplexing scheme has been used for the combination of the K elementary BOC-modulated signals, and a cosine function, $\cos(2\pi j f_{sc,k} t)$, has been applied to multiply the pulse shape $p_k(t)$. An equivalent expression for a G-BOC signal can be derived when apply a sinus function, $\sin(2\pi f_{sc,k} t)$, in place of the cosine function, $\cos(2\pi j f_{sc,k} t)$. Finally a complex multiplicative factor $\alpha_k \times e^{(j\varphi k)}$ is used on a one side to allot to each elementary BOC($M_k, N_k$)-modulated signal a fraction of the aggregate power P using the scaling factor $\alpha_k$ and on the other side to set each of the elementary BOC-modulated signal to the In-Phase or Quadrature component using the angle $\varphi_k$ is the complex exponential argument.

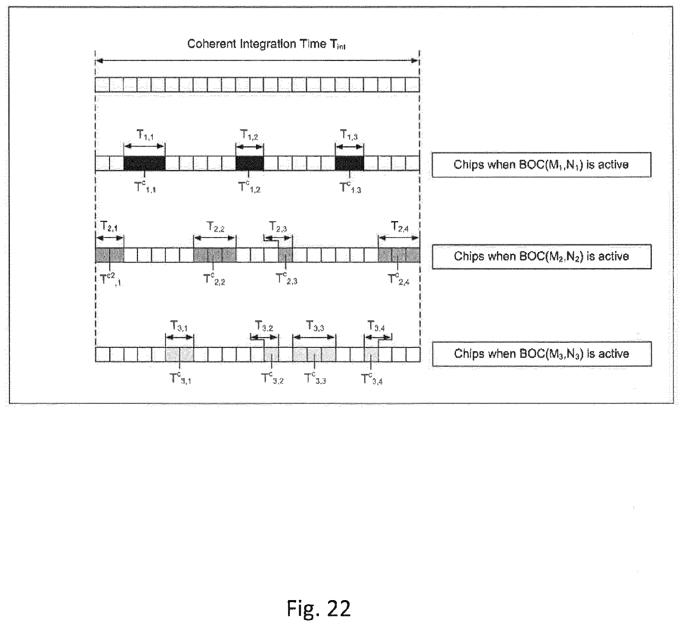

Alternatively to the amplitude multiplexing scheme, a time multiplexing scheme can also be used. Several mathematical notations can be proposed to express the time multiplexing version of the G-BOC. Here, it is proposed to use the spreading code sequence value to explicitly express the time interval when each elementary BOC($M_k, N_k$)-modulated signal is active, while the (K-1) others are not. For this, one denotes by $\{T_{k,u}\}_{1 \leq u \leq Uk}$ the ensemble of the time intervals when the elementary BOC($M_k, N_k$)-modulated signal is active. Figure 22 illustrates the case of a time multiplexing comprising K=3 elementary BOC($M_k, N_k$)-modulated signals. For this example, the simplified case where all three elementary BOC($M_k, N_k$)-modulated signals have the same chip rate is considered ($N_1 = N_2 = N_3$), and therefore the chip duration is identical for all three elementary BOC($M_k, N_k$)-modulated signals. The underlying spreading sequence which is applied during the coherent integration time, $T_{int}$, is shown on the top of the figure 22. Then for each elementary BOC($M_k, N_k$)-modulated signal, the time intervals $\{T_{k,u}\}_{1 \leq u \leq Uk}$ are depicted for k=1, 2 and 3. Furthermore, for each time interval, $T_{k,u}$, the corresponding interval centre is denoted $T^c_{k,u}$. Based on these conventions, the spreading sequence allotted to each elementary BOC($M_k, N_k$)-modulated signal is a so-called three-valued sequence, composed on a one side of the binary symbols of the underlying spreading sequence when the elementary BOC($M_k, N_k$)-modulated signal is active, and on the other side of a 0 value when the elementary BOC($M_k, N_k$)-modulated signal is not activated. This can be described with the following equation:

(Equation 58)

$$c_k^{TM}(t) \begin{cases} c_k(t) \ for \ t \in \{T_{k,u}\}_{1 \leq u \leq U^k} \\ 0 \ for \ t \notin \{T_{k,u}\}_{1 \leq u \leq U^k} \end{cases}$$

Based on the corresponding formalism it is possible present the expression for the G-BOC-modulated signal obtained with the time multiplexing scheme as follows:

(Equation 59)

$$s_{GBOC_{TM}}(t) = \sqrt{2P_{Rx}} \times \sum_{k=1}^{K} d_k(t) \times \exp(j\varphi_k) \times \cos(2\pi j f_{sc,k} t) \times c_k^{TM}(t) \times p_k(t)$$

The relative power ratio between the K different elementary BOC($M_k$,$N_k$)-modulated signals is then obtained with the ratio, $\beta_k$, between the cumulated duration of the time intervals $\{T_{k,u}\}_{0 \leq u \leq U}$ over the coherent integration time, $T_{int}$ and the coherent integration time. This ratio $\beta_k$ can also be related to the amplitude coefficient $\alpha_k$ applied for the amplitude multiplexing scheme as follows.

**(Equation 60)**

$$\beta_k = \frac{\sum_{u=1}^{U} dur(T_{k,u})}{\sum_{k=1}^{K}\left(\sum_{u=1}^{U} dur(T_{k,u})\right)} = \frac{\sum_{u=1}^{U} dur(T_{k,u})}{T_{\text{int}}} = \alpha_k^2$$

Where the operator *dur*(T) evaluates the duration of the interval T.

As a matter of fact the amplitude coefficient, introduced for the amplitude multiplexing scheme, $\alpha_k$, does not appear in the expression of the time multiplexing scheme since the power ratio between the different elementary BOC($M_k$,$N_k$) signals is expressed with the coefficient $\beta_k$ wich can be related to coefficient $\alpha_k$ of the amplitude multiplexing scheme

In the case of a Generalized BOC-modulated signal using the amplitude multiplexing scheme, the extension of the SBP-Detector comprises multiplying the correlator outputs for the left side lobe with the correlator outputs for the right side lobe for each elementary BOC($M_k$,$N_k$)-modulated signal. The corresponding products are summed up to generate the aggregate detector output (SBP detector) for the Generalized BOC-modulated signal constituted of the K elementary BOC-modulated signals. The expression for the aggregate detector output obtained by applying the former steps is now presented.

The following equations provides the expression of the correlator output for the left $\left(R_{P_k}^{Left}(t)\right)$ and right $\left(R_{p_k}^{Right}(t)\right)$ side lobes, for the elementary BOC($M_k$,$N_k$)-modulated signal.

**(Equation 61)**

$$R_{P_k}^{Left}(\Delta\tau,\varepsilon_{f_d}) = -\alpha_k \times \sqrt{\frac{P_{Rx}}{2}} \times \left(d_l(t - \tau + \tau_{iono} - \tau_{GD}^{Rx})R_{c_l,c_l}^{P_k}(\Delta\tau + \tau_{iono} - \tau_{GD}^{Rx})\right) \times$$

$$e^{-2\pi j f_{sc}(-\tau+\tau_{iono}-\tau_{GD}^{Rx})} \times e^{j(\varphi_{iono}+\varphi_{GD}^{Rx}-\pi\varepsilon_{f_D}T_{int})} \times \mathrm{sinc}(\varepsilon_{f_D}T_{\text{int}})$$

$$R_{p_k}^{Right}(\Delta\tau,\varepsilon_{f_d}) = -\alpha_k \times \sqrt{\frac{P_{Rx}}{2}} \times \left(d_l(t - \tau + \tau_{iono} - \tau_{GD}^{Rx})R_{c_l,c_l}^{P_k}(\Delta\tau + \tau_{iono} - \tau_{GD}^{Rx})\right) \times$$

$$e^{2\pi j f_{sc}(-\tau+\tau_{iono}-\tau_{GD}^{Rx})} \times e^{j(\varphi_{iono}+\varphi_{GD}^{Rx}-\pi\varepsilon_{f_D}T_{int})} \times \mathrm{sinc}(\varepsilon_{f_D}T_{\text{int}})$$

In this expression, the term $R_{c_l,c_l}^{P_k}(\bullet)$ also called $R_{pk}(\bullet)$ in the following represents the correlation function for the pulse shape $p_k$ of the each of the elementary BOC($M_k$,$N_k$)-modulated signal.

The following equation provides the expression of the SBP detector output for the Generalized BOC signals, and obtained with the application of the steps formerly described, and when applying an amplitude multiplexing scheme for the Generalized BOC signals.

## (Equation 62)

$$D^{SBP,K}_{1,GBOC_{AM}}(\Delta\tau,\varepsilon_{f_D}) = \sum_{k=1}^{K}\left(R^{Left}_{P_k}(t)\times R^{Right}_{P_k}(t)\right)$$

$$D^{SBP,K}_{1,GBOC_{AM}}(\Delta\tau,\varepsilon_{f_D}) = \frac{P_{Rx}}{2}e^{j(2(\varphi_{iono}+\varphi^{Rx}_{GD})-2\pi\varepsilon_{f_D}\times T_{int})}\cdot(\mathrm{sinc}(\pi\varepsilon_{f_D}T_{int}))^2\sum_{k=1}^{K}\alpha_k^2\times R_{P_k}(\Delta\tau+\tau_{iono}-\tau^{Rx}_{GD})^2$$

The signification of the other terms and parameters of the (Equation 62) is identical to the (Equation 1) and (Equation 2).

For information, in the case of a Generalized BOC-modulated signal, using amplitude multiplexing scheme, the extension of the Dual Sided Band-Detector (DSB), called now Multiplexed Band Detector (MSB) becomes:

## (Equation 63)

$$D^{MSB,K}_{1,GBOC_{AM}}(\Delta\tau,\varepsilon_{f_D}) = \sum_{k=1}^{K}\left(\left(R^{Left}_{P_k}(t)\right)^2+\left(R^{Right}_{P_k}(t)\right)^2\right)$$

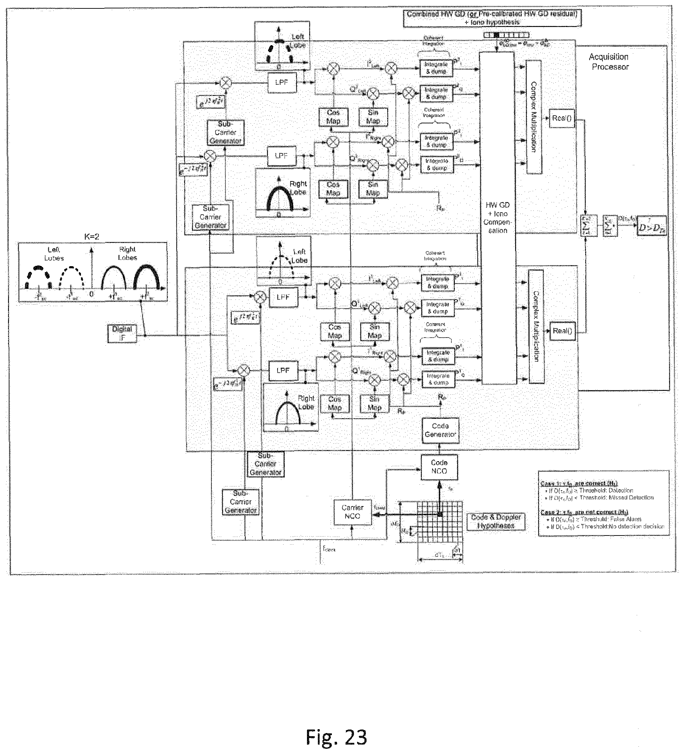

Figure 23 illustrates how the architecture, following conventions of figure 8, for the proposed acquisition scheme applied for a generalized BOC-modulated signal, when K = 2 (for figure 8, K =1).

Another combination of the elementary correlation functions of the elementary BOC($M_k$,$N_k$)-modulated signals can also be proposed in order to yield to a detector which is not sensitive to the ionosphere and hardware group delay. This alternative combination introduces the conjugate operator and can be considered as an extension of the conjugate SBP, $D^{SBP}_{1,Conj}$, introduced earlier for single BOC(M,N)-modulated signal. To illustrate this principle, it is proposed to consider a Generalized BOC signal composed of two elementary BOC($M_k$,$N_k$) signals, $s_1$=BOC($M_1$,$N_1$) and $s_2$=BOC($M_2$,$N_2$) and also with N1=N2 (same chip rate). For such a scenario, the following individual correlations obtained from the left and right side lobes for each of the $s_1$(t) and $s_2$(t) signals can be proposed as follows:

## (Equation 64)

$$R^{Left}_{s_1}(\Delta\tau,\varepsilon_{f_d}) = -\alpha_1\times\sqrt{\frac{P_{Rx}}{2}}\times\left(d_1(t-\tau+\tau_{iono}-\tau^{Rx}_{GD})R^P(\Delta\tau+\tau_{iono}-\tau^{Rx}_{GD})\right)\times e^{-2\pi j f^1_{sc}(-\tau+\tau_{iono}-\tau^{Rx}_{GD})}\times e^{j(\varphi_{iono}+\varphi^{Rx}_{GD}-\pi\varepsilon_{f_D}T_{int})}\times\mathrm{sinc}(\varepsilon_{f_D}T_{int})$$

$$R^{Right}_{s_1}(\Delta\tau,\varepsilon_{f_d}) = -\alpha_1\times\sqrt{\frac{P_{Rx}}{2}}\times\left(d_1(t-\tau+\tau_{iono}-\tau^{Rx}_{GD})R^P(\Delta\tau+\tau_{iono}-\tau^{Rx}_{GD})\right)\times e^{2\pi j f^1_{sc}(-\tau+\tau_{iono}-\tau^{Rx}_{GD})}\times e^{j(\varphi_{iono}+\varphi^{Rx}_{GD}-\pi\varepsilon_{f_D}T_{int})}\times\mathrm{sinc}(\varepsilon_{f_D}T_{int})$$

$$R^{Left}_{s_2}(\Delta\tau,\varepsilon_{f_d}) = -\alpha_2\times\sqrt{\frac{P_{Rx}}{2}}\times\left(d_2(t-\tau+\tau_{iono}-\tau^{Rx}_{GD})R^P(\Delta\tau+\tau_{iono}-\tau^{Rx}_{GD})\right)\times e^{-2\pi j f^2_{sc}(-\tau+\tau_{iono}-\tau^{Rx}_{GD})}\times e^{j(\varphi_{iono}+\varphi^{Rx}_{GD}-\pi\varepsilon_{f_D}T_{int})}\times\mathrm{sinc}(\varepsilon_{f_D}T_{int})$$

$$R^{Right}_{s_2}(\Delta\tau,\varepsilon_{f_d}) = -\alpha_2\times\sqrt{\frac{P_{Rx}}{2}}\times\left(d_2(t-\tau+\tau_{iono}-\tau^{Rx}_{GD})R^P(\Delta\tau+\tau_{iono}-\tau^{Rx}_{GD})\right)\times e^{2\pi j f^2_{sc}(-\tau+\tau_{iono}-\tau^{Rx}_{GD})}\times e^{j(\varphi_{iono}+\varphi^{Rx}_{GD}-\pi\varepsilon_{f_D}T_{int})}\times\mathrm{sinc}(\varepsilon_{f_D}T_{int})$$

In the former expressions, it is considered that each signal $s_1$(t) and $s_2$(t) is modulated with a different value $d_1$(t) and $d_2$(t).

Because the same chip rate, and therefore underlying BPSK(N) primitive pulse shape is applied, the same correlation function $R^P(\Delta\tau)$ appears in all four former equations.

It is then proposed to combine the former correlation outputs as follows to generate the generalized SBP detector output:

(Equation 65)

$$D_{1,Conj,GBOC_{AM}}^{SBP,2}(\Delta\tau,\varepsilon_{f_D}) = \left(R_{s_1}^{Left}(t)\times R_{s_1}^{Right}(t)\right)\times\overline{\left(R_{s_2}^{Left}(t)\times R_{s_2}^{Right}(t)\right)} + \overline{\left(R_{s_1}^{Left}(t)\times R_{s_1}^{Right}(t)\right)}\times\left(R_{s_2}^{Left}(t)\times R_{s_2}^{Right}(t)\right)$$

Where (x) designates the conjugate operator.

The first product, $\left(R_{s_1}^{Left}(t)\times R_{s_1}^{Right}(t)\right)\times\overline{\left(R_{s_2}^{Left}(t)\times R_{s_2}^{Right}(t)\right)}$, can be expressed as follows:

(Equation 66)

$$\left(R_{s_1}^{Left}(t)\times R_{s_1}^{Right}(t)\right)\times\overline{\left(R_{s_2}^{Left}(t)\times R_{s_2}^{Right}(t)\right)} =$$

$$\left(-\alpha_1\times\sqrt{\frac{P_{Rx}}{2}}\times\left(d_1(t-\tau+\tau_{iono}-\tau_{GD}^{Rx})R^p(\Delta\tau+\tau_{iono}-\tau_{GD}^{Rx})\right)\times e^{-2\pi j f_{sc}^1(-\tau+\tau_{iono}-\tau_{GD}^{Rx})}\times e^{j(\varphi_{iono}+\varphi_{GD}^{Rx}-\pi\varepsilon_{f_D}T_{int})}\times \text{sinc}(\varepsilon_{f_D}T_{int})\right)\times$$

$$\left(-\alpha_1\times\sqrt{\frac{P_{Rx}}{2}}\times\left(d_1(t-\tau+\tau_{iono}-\tau_{GD}^{Rx})R^p(\Delta\tau+\tau_{iono}-\tau_{GD}^{Rx})\right)\times e^{2\pi j f_{sc}^1(-\tau+\tau_{iono}-\tau_{GD}^{Rx})}\times e^{j(\varphi_{iono}+\varphi_{GD}^{Rx}-\pi\varepsilon_{f_D}T_{int})}\times \text{sinc}(\varepsilon_{f_D}T_{int})\right)\times$$

$$\overline{\left(-\alpha_2\times\sqrt{\frac{P_{Rx}}{2}}\times\left(d_2(t-\tau+\tau_{iono}-\tau_{GD}^{Rx})R^p(\Delta\tau+\tau_{iono}-\tau_{GD}^{Rx})\right)\times e^{-2\pi j f_{sc}^2(-\tau+\tau_{iono}-\tau_{GD}^{Rx})}\times e^{j(\varphi_{iono}+\varphi_{GD}^{Rx}-\pi\varepsilon_{f_D}T_{int})}\times \text{sinc}(\varepsilon_{f_D}T_{int})\right)}\times$$

$$\overline{\left(-\alpha_2\times\sqrt{\frac{P_{Rx}}{2}}\times\left(d_2(t-\tau+\tau_{iono}-\tau_{GD}^{Rx})R^p(\Delta\tau+\tau_{iono}-\tau_{GD}^{Rx})\right)\times e^{2\pi j f_{sc}^2(-\tau+\tau_{iono}-\tau_{GD}^{Rx})}\times e^{j(\varphi_{iono}+\varphi_{GD}^{Rx}-\pi\varepsilon_{f_D}T_{int})}\times \text{sinc}(\varepsilon_{f_D}T_{int})\right)}$$

The two pairs of products in the former equation reduce as follow, using the same principle of the SBP applied to a simple BOC modulated signal (squared modulated data is one $(d_k)^2=1$ and $e^{-2\pi j f_{sc}^k(-\tau+\tau_{iono}-\tau_{GD}^{Rx})}$ vanishes with $e^{2\pi j \overline{f_{sc}^k}(-\tau+\tau_{iono}-\tau_{GD}^{Rx})}$):

(Equation 67)

$$\left(R_{s_1}^{Left}(t)\times R_{s_2}^{Right}(t)\right)\times\overline{\left(R_{s_1}^{Left}(t)\times R_{s_2}^{Right}(t)\right)} = \left(\alpha_1^2\times\frac{P_{Rx}}{2}\times e^{2j(\varphi_{iono}+\varphi_{GD}^{Rx}-\pi\varepsilon_{f_D}T_{int})}\times \text{sinc}^2(\varepsilon_{f_D}T_{int})\right)\times$$

$$\left(\alpha_2^2\times\frac{P_{Rx}}{2}\times e^{-2j(\varphi_{iono}+\varphi_{GD}^{Rx}-\pi\varepsilon_{f_D}T_{int})}\times \text{sinc}^2(\varepsilon_{f_D}T_{int})\right)$$

(Equation 68)

$$\left(R_{s_1}^{Left}(t)\times R_{s_2}^{Right}(t)\right)\times\overline{\left(R_{s_1}^{Left}(t)\times R_{s_2}^{Right}(t)\right)} = \alpha_1^2\times\alpha_2^2\times\left(\frac{P_{Rx}}{2}\right)^2\times \text{sinc}^4(\varepsilon_{f_D}T_{int})$$

Similarly for the second contribution of the detector output

$$\overline{\left(R_{s_1}^{Left}(t)\times R_{s_2}^{Right}(t)\right)}\times\left(R_{s_1}^{Left}(t)\times R_{s_2}^{Right}(t)\right) = \alpha_1^2\times\alpha_2^2\times\left(\frac{P_{Rx}}{2}\right)^2\times \text{sinc}^4(\varepsilon_{f_D}T_{int})$$

At the end, for the proposed example the following expression for this alternative variant of the SBP detector output becomes.

$$D_{1,Conj,GBOC_{AM}}^{SBP,2}(\Delta\tau,\varepsilon_{f_D}) = 2\times\alpha_1^2\times\alpha_2^2\times\left(\frac{P_{Rx}}{2}\right)^2\times\text{sinc}^4(\varepsilon_{f_D}T_{\text{int}})$$

It can be observed that this detector output is effectively insensitive to the effects of the ionosphere and hardware group delay.

In the case when $s_1(t)$ and $s_2(t)$ share the received power in a balanced way ($\alpha_1^2=\alpha_2^2=1/2$), then

$$D_{1,Conj,GBOC_{AM}}^{SBP,2}(\Delta\tau,\varepsilon_{f_D}) = \frac{P_{Rx}^2}{8}\times\text{sinc}^4(\varepsilon_{f_D}T_{\text{int}})\text{.}$$ For the same example, the expression of the MSB detector would become

## (Equation 69)

$$D_{GBOC_{AM}}^{MSB}(\Delta\tau,\varepsilon_{f_D}) = \sum_{k=1}^{2}\left(\left(R_{P_k}^{Left}(t)\right)^2 + \left(R_{P_k}^{Right}(t)\right)^2\right) = \sum_{k=1}^{2}\left(\frac{P}{4}+\frac{P}{4}\right)\times\text{sinc}^2(\varepsilon_{f_D}T_{\text{int}}) = P\times\text{sinc}^2(\varepsilon_{f_D}T_{\text{int}})$$

Therefore, when compared to a "power detector", such as a MSB detector, the square root of the extended SBP detector has to be taken, yielding to $\sqrt{D_{GBOC}^{GSBP,2}(\Delta\tau,\varepsilon_{f_D})} = \frac{P_{Rx}}{2\sqrt{2}}\times\text{sinc}^2(\varepsilon_{f_D}T_{\text{int}})\text{.}$ It appears the maximal peak power is reduced with a factor $\frac{1}{2\sqrt{2}}$ when compared to the MSB detector and when the correct Doppler and Code hypothesis has been tested ("H1" case).

Now, the performances of detectors depend generally on the relative ratio between the power of the signal to be detected, acquired and the power for the noise contribution to the detector.

Therefore, the individual noise contribution for each of the four complex correlation outputs needs also to be accounted, re-using the notations of (Equation 34), (Equation 35), (Equation 36) and (Equation 37):

## (Equation 70)

$$n_{s_1}^l(t) = \frac{1}{T_{\text{int}}}\int_0^{T_{\text{int}}}(\tilde{n}_c^{left}(u) + j\times\tilde{n}_s^{left}(u))\times c_{s_1}(u-t)du$$

$$n_{s_1}^r(t) = \frac{1}{T_{\text{int}}}\int_0^{T_{\text{int}}}(\tilde{n}_c^{right}(u) + j\times\tilde{n}_s^{right}(u))\times c_{s_1}(u-t)du$$

$$n_{s_2}^l(t) = \frac{1}{T_{\text{int}}}\int_0^{T_{\text{int}}}(\tilde{n}_c^{left}(u) + j\times\tilde{n}_s^{left}(u))\times c_{s_2}(u-t)du$$

$$n_{s_2}^r(t) = \frac{1}{T_{\text{int}}}\int_0^{T_{\text{int}}}(\tilde{n}_c^{right}(u) + j\times\tilde{n}_s^{right}(u))\times c_{s_2}(u-t)du$$

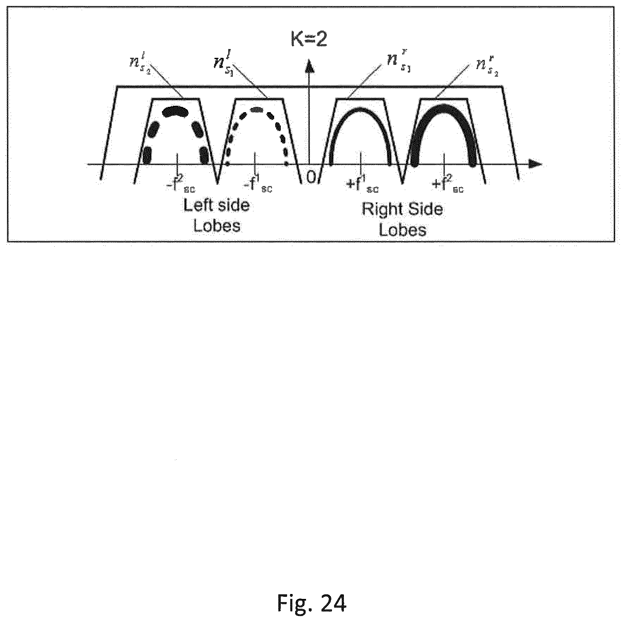

It must be underlined that the four former complex correlations, to be considered as stochastic variables, are Gaussians, centred and also independent between each other since resulting from a filtering of the different spectral contents of the occupation of the G-BOC signal as presented on Figure 24.

Figure 24 schematically illustrates the independency of the four noise contributions involved in the calculation of the generalized SBP detector applicable to a Generalized BOC modulated signal with K=2. It can effectively be verified that the spectral occupation of the four aforementioned noise components are disjoint and enables to better justify their independency as stochastic variable.

Taken again the expression of the extended expression for the SBD of (Equation 65), and considering a wrong hypothesis in code or Doppler ("H0" case), the SBP expression can be simplified by replacing each correlation contribution with the former $n_{s_1}^l(t)$, $n_{s_1}^r(t)$, $n_{s2}^l(t)$ and $n_{s_2}^l(t)$ terms. This yields the following equation:

**(Equation 71)**

$$D_{1,Conj,GBOC_{AM}}^{SBP,2}(\Delta\tau,\varepsilon_{f_D}) = \left(n_{s_1}^l(t) \times n_{s_1}^r(t)\right) \times \overline{\left(n_{s_2}^l(t) \times n_{s_2}^r(t)\right)} + \overline{\left(n_{s_1}^l(t) \times n_{s_1}^r(t)\right)} \times \left(n_{s_2}^l(t) \times n_{s_2}^r(t)\right)$$

Because the four noise contributions are independent pairwise, this property will enable to also strongly reduce the mean and variance of the SBP detector output which is desired.

The average of the extended SBP detector output is given by the following equation.

**(Equation 72)**

$$E\left\{D_{1,Conj,GBOC_{AM}}^{SBP,2}(\Delta\tau,\varepsilon_{f_D})\right\} = E\left\{n_{s_1}^l(t) \times n_{s_1}^r(t)\right) \times \overline{\left(n_{s_2}^l(t) \times n_{s_2}^r(t)\right)} + \overline{\left(n_{s_1}^l(t) \times n_{s_1}^r(t)\right)} \times \left(n_{s_2}^l(t) \times n_{s_2}^r(t)\right)\right\}$$

$$= E\left\{n_{s_1}^l(t)\right\} \times E\left\{n_{s_1}^r(t)\right\} \times \overline{E\left\{n_{s_2}^l(t)\right\} \times E\left\{n_{s_2}^r(t)\right\}} + \overline{E\left\{n_{s_1}^l(t)\right\} \times E\left\{n_{s_1}^r(t)\right\}} \times E\left\{n_{s_2}^l(t)\right\} \times E\left\{n_{s_2}^r(t)\right\} = 0$$

Due to the centered stochastic terms for the noise contribution, the average of the extended SBP detector is therefore null. This is an important advantage w.r.t. the conventional MSB detector whose average depends on the variance of the individual stochastic terms. This additional term could effectively yield to an increase in the PFA for the "H0" hypothesis. This is not the case for the extended SBP detector applied to generalized BOC modulated signals.

The variance of the extended SBP detector output is given by the following equation.

**(Equation 73)**

$$E\left\{D_{1,Conj,GBOC_{AM}}^{SBP,2}(\Delta\tau,\varepsilon_{f_D})^2\right\} = E\left\{\left(\left(n_{s_1}^l(t) \times n_{s_1}^r(t)\right) \times \overline{\left(n_{s_2}^l(t) \times n_{s_2}^r(t)\right)}\right)^2\right\} + E\left\{\left(\overline{\left(n_{s_1}^l(t) \times n_{s_1}^r(t)\right)} \times \left(n_{s_2}^l(t) \times n_{s_2}^r(t)\right)\right)^2\right\}$$

$$+ 2 \times E\left\{\left(n_{s_1}^l(t) \times n_{s_1}^r(t)\right) \times \overline{\left(n_{s_2}^l(t) \times n_{s_2}^r(t)\right)} + \overline{\left(n_{s_1}^l(t) \times n_{s_1}^r(t)\right)} \times \left(n_{s_2}^l(t) \times n_{s_2}^r(t)\right)\right\}$$

The first term can be rewritten as:

**(Equation 74)**

$$E\left\{\left(\left(n_{s_1}^l(t) \times n_{s_1}^r(t)\right) \times \overline{\left(n_{s_2}^l(t) \times n_{s_2}^r(t)\right)}\right)^2\right\} = E\left\{n_{s_1}^l(t) \times n_{s_1}^r(t) \times \overline{n_{s_2}^l}(t) \times \overline{n_{s_2}^r}(t) \times n_{s_1}^l(t) \times n_{s_1}^r(t) \times \overline{n_{s_2}^l}(t) \times \overline{n_{s_2}^r}(t)\right\}$$

Because the stochastic terms ( $n_{s_1}^l(t)$, $n_{s_1}^r(t)$, $n_{s2}^l(t)$ and $n_{s_2}^l(t)$ ) are Gaussian distributed the following theorem for the expectation of a product of Gaussian distributed variables can be applied:

## (Equation 75)

$$E\{n_i \times n_j \times n_k \times n_l\} = \rho_{ij}\rho_{kl} + \rho_{il}\rho_{jk} + \rho_{ik}\rho_{jl}$$

$$E\{n_i \times n_j \times n_k \times n_l \times n_m \times n_n \times n_o \times n_p\} = \sum^{V} \rho_{ij}\rho_{kl}\rho_{mn}\rho_{op}$$

With $\rho_{ij} = E\{n_i \times n_j\}$ and V represents the total number of combinations for the multiplications of four terms of the form $\rho ij$. It is important to note that each index i, j, k, l, m, n, o and p only appears once for each contribution $[\rho_{i,j} \times \rho_{k,l} \times \rho_{m,n} \times \rho_{o,p}]$.

The application of the former theorem to (Equation 74) enables to identify one term which is not zero, over the V=105 individual products of the form $[\rho_{i,j} \times \rho_{k,l} \times \rho_{m,n} \times \rho_{o,p}]$. This term is

$$E\left\{\left(\left(n_{s_1}^l(t) \times n_{s_1}^r(t)\right) \times \overline{\left(n_{s_2}^l(t) \times n_{s_2}^r(t)\right)}\right)^2\right\} = E\left\{\left(n_{s_1}^l(t)\right)^2 \times \left(n_{s_1}^r(t)\right)^2 \times \overline{\left(n_{s_2}^l(t)\right)}^2 \times \overline{\left(n_{s_2}^r(t)\right)}^2\right\}.$$

All other V-1 = 104 terms of the form $[\rho_{i,j} \times \rho_{k,l} \times \rho_{m,n} \times \rho_{o,p}]$ are null since they include at least one expectation of the form $\rho_{ij} = E\{n_i \times n_j\}$ with i≠j which is null due to the independency of terms $n_i$ and $n_j$ for i≠j and this leads to a nulling of the corresponding terms of the form $[\rho_{i,j} \times \rho_{k,l} \times \rho_{m,n} \times \rho_{o,p}]$.

For the same reason of independency between terms $n_i$ and $n_j\}$ for i≠j, and their zero mean,

$$E\left\{\left(n_{s_1}^l(t) \times n_{s_1}^r(t)\right) \times \overline{\left(n_{s_2}^l(t) \times n_{s_2}^r(t)\right)} + \overline{\left(n_{s_1}^l(t) \times n_{s_1}^r(t)\right)} \times \left(n_{s_2}^l(t) \times n_{s_2}^r(t)\right)\right\} = 0.$$

As a conclusion the variance can be reduced to the following

## (Equation 76)

$$E\left\{D_{1,Conj,GBOC_{AM}}^{SBP,2}(\Delta\tau,\varepsilon_{f_D})^2\right\} = E\left\{\left(n_{s_1}^l(t)\right)^2 \times \left(n_{s_1}^r(t)\right)^2 \times \overline{\left(n_{s_2}^l(t)\right)}^2 \times \overline{\left(n_{s_2}^r(t)\right)}^2\right\} + E\left\{\overline{\left(n_{s_1}^l(t)\right)}^2 \times \overline{\left(n_{s_1}^r(t)\right)}^2 \times \left(n_{s_2}^l(t)\right)^2 \times \left(n_{s_2}^r(t)\right)^2\right\}$$

These calculations highlight the benefit of the alternative definition with $D_{1,Conj,GBOC_{Amp}}^{SBP}$ for the extended SBP detector. Even if its equivalent power is reduced with a factor with a factor $\dfrac{1}{2\sqrt{2}}$ when compared to the MSB detector, when the corrector Doppler and Code hypothesis has been tested ("H1" case), the stochastic contribution is also strongly reduced due to the combined effect of independency between terms $n_i$ and $n_j$ for i≠j, and their mean value.

It must be noted that the former derivations of the variance in the "H0" case, can be also applied in the "H1" case, and show again that compared to the conventional power detectors, such as the MSB the contribution of the stochastic contribution onto the extended SBP detector is also reduced due to the combined effect of independency between terms $n_i$ and $n_j\}$ for i≠j, and their mean value.

It must also be remarked that in (Equation 65), a single product can also be considered to define the acquisition detector, as shown on the following equation, and shall not impact the ratio between the signal and noise power of the extended detector SBP detector, and therefore the detection performances.

## (Equation 77)

$$D_{1,Conj^*,GBOC_{AM}}^{SBP,2}(\Delta\tau,\varepsilon_{f_D}) = \left(R_{s_1}^{Left}(t) \times R_{s_1}^{Right}(t)\right) \times \overline{\left(R_{s_2}^{Left}(t) \times R_{s_2}^{Right}(t)\right)}$$

The former equation can also be expressed as

## (Equation 78)

$$D_{1,Conj*,GBOC_{AM}}^{SBP,2}(\Delta\tau,\varepsilon_{f_D}) = \left(R_{s_1}^{Left}(t) \times \overline{R_{s_2}^{Right}(t)}\right) \times \left(\overline{R_{s_2}^{Left}(t)} \times R_{s_1}^{Right}(t)\right)$$

This equation enables to understand that the alternative detector definition of (Equation 65) applied in the case of K ≥2 sub-carriers is a generalization of the detector obtained with the complex conjugate multiplication when K =1 of (Equation 28).

The former derivations and benefit justifications for the introduction of the alternative definition of an SBP detector to be applied to a Generalized BOC modulated signal, in the case of K=2 can be generalized for any K as follows:

## (Equation 79)

$$D_{1,Conj,GBOC_{AM}}^{SBP,K}(\Delta\tau,\varepsilon_{f_D}) = \sum_{u=1}^{\binom{K}{2}}\left\{\left(R_{s_i}^{Left}(t) \times R_{s_i}^{Right}(t)\right) \times \overline{\left(R_{s_j}^{Left}(t) \times R_{s_j}^{Right}(t)\right)} + \overline{\left(R_{s_i}^{Left}(t) \times R_{s_i}^{Right}(t)\right)} \times \left(R_{s_j}^{Left}(t) \times R_{s_j}^{Right}(t)\right)\right\}_{\{s_i,s_j\}}$$

In the former equation $\binom{K}{2}$ represents the binomial coefficient for a combination and is equal to number of pairs of distinct elements in a group of K. The index of each pair is called u in the former equation, and u varies from 1 to $\binom{K}{2}$. For each identified pair of signals $s_i$ and $s_j$, also written $\{s_i,s_j\}$, the equation (Equation 65) is applied.

Here again it is possible to add non-coherently different SBP detectors using the computed on successive coherent integration times yielding:

## (Equation 80)

$$D_{NC,Conj,GBOC_{AM}}^{SBP,K}(\Delta\tau,\varepsilon_{f_D}) = \sum^{N_{NC}}\left\|D_{1,Conj,GBOC_{AM}}^{SBP,K}(\Delta\tau,\varepsilon_{f_D})\right\|^2$$

It has to be noted that the following variants of the equation (Equation 79) can be proposed to define the extended SBP detector:

## (Equation 81)

$$D_{1,Conj,GBOC_{AM}}^{SBP,K,norm}(\Delta\tau,\varepsilon_{f_D}) = \frac{1}{\binom{K}{2}}\sum_{u=1}^{\binom{K}{2}}\left\{\left(R_{s_i}^{Left}(t) \times R_{s_i}^{Right}(t)\right) \times \overline{\left(R_{s_j}^{Left}(t) \times R_{s_j}^{Right}(t)\right)} + \overline{\left(R_{s_i}^{Left}(t) \times R_{s_i}^{Right}(t)\right)} \times \left(R_{s_j}^{Left}(t) \times R_{s_j}^{Right}(t)\right)\right\}_{\{s_i,s_j\}}$$

## (Equation 82)

$$D_{1,Conj*,GBOC_{AM}}^{SBP,K}(\Delta\tau,\varepsilon_{f_D}) = \sum_{u=1}^{\binom{K}{2}}\left\{\left(R_{s_i}^{Left}(t) \times R_{s_i}^{Right}(t)\right) \times \overline{\left(R_{s_j}^{Left}(t) \times R_{s_j}^{Right}(t)\right)}\right\}_{\{s_i,s_j\}}$$

In (Equation 81) the normalization with the combination number $\binom{K}{2}$ is proposed and in (Equation 82) only a single product is considered, but this shall not impact the ratio between the signal and noise power of the extended detector SBP detector.

In the case of a Generalized BOC-modulated signal using the time multiplexing scheme, the definition of the SBP-Detector comprises multiplying the correlator outputs for the left side lobe with the correlator outputs for the right side lobe for each elementary BOC($M_k$,$N_k$)-modulated signal. The corresponding products are summed up to generate the aggregate detector output (SBP detector) for the Generalized BOC-modulated signal constituted of the K elementary BOC-modulated signals. The expression for the aggregate detector output is presented.

The (Equation 83) provides the expression of the correlator output for the left $\left( R_{p_k}^{Left}(t) \right)$ and right $\left( R_{p_k}^{Right}(t) \right)$ side lobes, for the elementary BOC($M_k$,$N_k$)-modulated signal in the case of a time multiplexing scheme. In comparison to the amplitude multiplexing scheme, for the time multiplexing scheme it is necessary to account on top the time interval when each elementary BOC($M_k$,$N_k$)-modulated is active.

## (Equation 83)

$$R_{p_k}^{Left}(\Delta\tau, \varepsilon_{f_d}) = -\sqrt{\frac{P_{Rx}}{2}} \times d_l(t - \tau + \tau_{iono} - \tau_{GD}^{Rx}) \times e^{-2\pi j f_{sc}(-\tau + \tau_{iono} - \tau_{GD}^{Rx})} \times e^{j(\varphi_{iono} + \varphi_{GD}^{Rx} - \pi\varepsilon_{f_D}T_{int})} \times$$

$$\sum_{u=1}^{U^k} \beta_k \times e^{j(2\pi\varepsilon_{f_D} \times T_{u,k}^c)} \times \mathrm{sinc}(\varepsilon_{f_D}T_{k,u}) \times R_{c_l,c_l}^{p_k}(\Delta\tau + \tau_{iono} - \tau_{GD}^{Rx})^2$$

$$R_{p_k}^{Right}(\Delta\tau, \varepsilon_{f_d}) = -\sqrt{\frac{P_{Rx}}{2}} \times d_l(t - \tau + \tau_{iono} - \tau_{GD}^{Rx}) \times e^{2\pi j f_{sc}(-\tau + \tau_{iono} - \tau_{GD}^{Rx})} \times e^{j(\varphi_{iono} + \varphi_{GD}^{Rx} - \pi\varepsilon_{f_D}T_{int})} \times$$

$$\sum_{u=1}^{U^k} \beta_k \times e^{j(2\pi\varepsilon_{f_D} \times T_{u,k}^c)} \times \mathrm{sinc}(\varepsilon_{f_D}T_{k,u}) \times R_{c_l,c_l}^{p_k}(\Delta\tau + \tau_{iono} - \tau_{GD}^{Rx})^2$$

For the derivation of (Equation 83) it was necessary to take into account the centre of the corresponding time intervals, $T^c_{k,u}$, with the exponential $e^{j(2\pi\varepsilon_{f_D} \times T_{u,k}^c)}$ and the duration of each time interval with $T_{k,u}$ with the $\mathrm{sinc}(\varepsilon_{f_D}T_{k,u})$ contribution, using a similar derivation as for (Equation 14).

Furthermore, in the derivation of the former equation (Equation 83), the coherent integration time used to compute the K partials correlations corresponding to the K elementary BOC($M_k$,$N_k$)-modulated signals equals $T_{int}$ as shown on Figure 22, and therefore each correlation is weighted with the coefficient $\beta_k$ introduced in (Equation 60).

The following equation provides the expression of the SBP detector output obtained with the application of the steps formerly described, and when applying a time multiplexing scheme for the Generalized BOC signals.

## (Equation 84)

$$D_{1,GBOC_{TM}}^{SBP,K}(\Delta\tau, \varepsilon_{f_D}) = \sum_{k=1}^{K} \left( R_{p_k}^{Left}(t) \times R_{p_k}^{Right}(t) \right)$$

$$D_{1,GBOC_{TM}}^{SBP,K}(\Delta\tau, \varepsilon_{f_D}) = \frac{P_{Rx}}{2} e^{j(2(\varphi_{iono} + \varphi_{GD}^{Rx}) - 2\pi\varepsilon_{f_D} \times T_{int})} \cdot \sum_{k=1}^{K} \beta_k \times R_{p_k}(\Delta\tau + \tau_{iono} - \tau_{GD}^{Rx})^2 \left( \sum_{u=1}^{U^k} e^{j(2\pi\varepsilon_{f_D} \times T_{u,k}^c)} \times \mathrm{sinc}(\varepsilon_{f_D}T_{k,u}) \right)^2$$

In a similar manner to the definition of the alternative definition of SBP detector output introducing the conjugate operation and applied for a generalized BOC modulated signal with an amplitude modulation scheme, it is also possible to propose an alternative definition for a SBP detector output introducing the conjugate operation for a generalized BOC modulated signal with a time modulation scheme as shown below

(Equation 85)

$$D_{1,Conj,GBOC_{TM}}^{SBP,K}(\Delta\tau,\varepsilon_{f_D}) = \sum_{u=1}^{\binom{2}{K}}\left\{\left(R_{s_i}^{Left}(t)\times R_{s_i}^{Right}(t)\right)\times\overline{\left(R_{s_j}^{Left}(t)\times R_{s_j}^{Right}(t)\right)}+\overline{\left(R_{s_i}^{Left}(t)\times R_{s_i}^{Right}(t)\right)}\times\left(R_{s_j}^{Left}(t)\times R_{s_j}^{Right}(t)\right)\right\}_{\{s_i,s_j\}}$$

Again, other variants of the proposed SBP definition similar to (Equation 81) and (Equation 82) can be also introduced in the case of a time multiplexing scheme.

Here again it is possible to improve the acquisition performances by adding non-coherently different SBP detectors using the computed on successive coherent integration times yielding:

(Equation 86)

$$D_{NC,Conj,GBOC_{TM}}^{SBP,K}(\Delta\tau,\varepsilon_{f_D}) = \sum_{}^{N_{NC}}\left\|D_{1,Conj,GBOC_{TM}}^{SBP,K}(\Delta\tau,\varepsilon_{f_D})\right\|^2$$

A further extension of the Side Band Product detector covers the case of a G-BOC for which the lower and upper sideband signal do not contain obligatory the same symbol or data for each of the elementary BOC($M_k$,$N_k$)-modulated signals. This type of G-BOC is called G-BOC signal with asymmetrical data modulation and will be called G-BOC[AS] signal in the present disclosure. Hence instead of being composed with K sub-carriers this variant of the G-BOC is composed of I carrier frequencies, with I=2K.

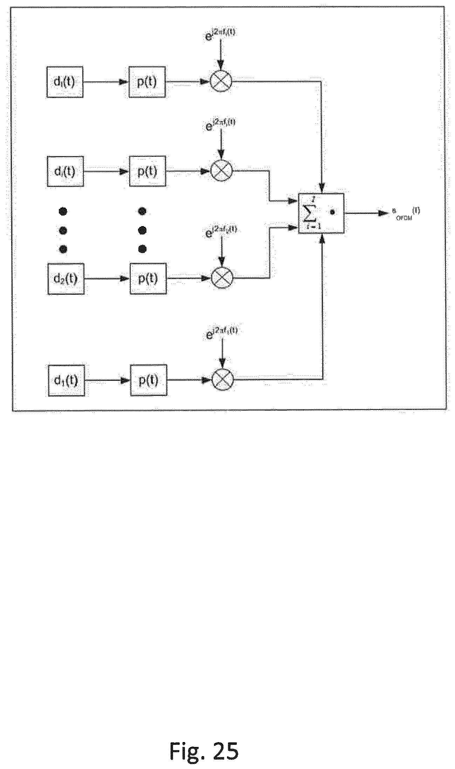

Figure 25 schematically illustrates the generation of a G-BOC[AS] signal.

The following equation provides the generic expression for a G-BOC signal with asymmetrical data modulation at baseband:

(Equation 87)

$$s_{GBOC^{AS}}(t) = \sqrt{P_{Rx}}\sum_{i=1}^{I}d_i(t)\times\alpha_i\times\exp(j\varphi_i)\times\exp(2\pi jf_it)\times p_i(t)$$

In this expression, I represents the number of carrier frequencies. $f_i$ represents each carrier frequency. $p_i(t)$ is a pulse shape which modulates each carrier frequency. $d_i(t)$ is a data or symbol applied to each carrier frequency. In the present disclosure, the term data is used generically and can either correspond to symbols, when a coding scheme such as a Convolutional or a Turbo encoder is used to transform data into symbols, or to data when no encoder is applied. The complex factor $\alpha_i\times e^{j(\varphi i)}$ has the same signification and purpose as for the G-BOC-modulated signal.

Due to the usage of the exponential term, $\exp(2\pi f_it)$ in (Equation 87) applicable for the G-BOC with asymmetrical data modulation case, instead of the cosine term, $\cos(2\pi f_{sc,k}t)$, as proposed in the equation (Equation 57) for the G-BOC case, and illustrated on Figure 25, it is possible to modulate a different data on each of the I individual carrier frequencies, $f_i$. In contrast, in the case of the G-BOC the same data is modulated on both carriers $+f_{sc,k}$ and $-f_{sc,k}$, decomposing the cosine term $\cos(2\pi f_{sc,k}t)$ as $(\exp(2\pi jf_it) + \exp(-2\pi jf_it)) / 2$. The same justification would hold if a sinus function $\sin(2\pi f_{sc,k}t)$ is applied in place of the cosine function in (Equation 57). It has to be noted that expression (Equation 87) can also represent the general class of the Orthogonal Frequency Division Multiplexing (OFDM) signals. The equation (Equation 87) is again an extension of the G-BOC signal introduced in the frame of the acquisition of such signals.

Usually, a practical implementation for the generation (i.e. modulation of the I data $d_i(t)$) comprises having, the I carrier frequencies $\{f_i\}_{1\le i\le I}$ uniformly spaced

(Equation 88)

$$f_i = \frac{1}{2} \times (-I + 2 \times i - 1) \times f_u$$

Where $f_u$ is a reference frequency used for the generation of the I elementary frequencies.

Furthermore, if I takes the form of I=$2^V$ it is possible to generate the G-BOC$^{AS}$ signal $s_{GBOCAS}(t_k)$ at epoch $t_k$, and modulate the I data $d_i(t_k)$ by using a Discrete Fourier Transform (DFT). Similarly from the G-BOC$^{AS}$ signal $s_{GBOCAS}(t_k)$, it is possible to retrieve or demodulate the I data using an Inverse Discrete Fourier Transform. Hence, at each time epoch $t_k$ the I data can be modulated (resp. demodulated) simultaneously when using a DFT (resp. IDFT).

In order to apply to the G-BOC$^{AS}$ signals the principle of the Sided Band Product, firstly introduced to the cases of BOC and Generalized BOC-modulated signals some constraints need to be imposed to the G-BOC$^{AS}$ signal structure, and especially to the data modulation.

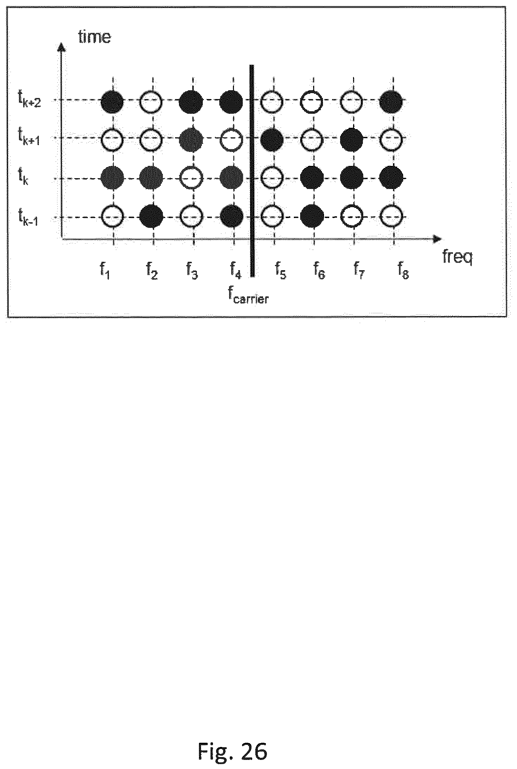

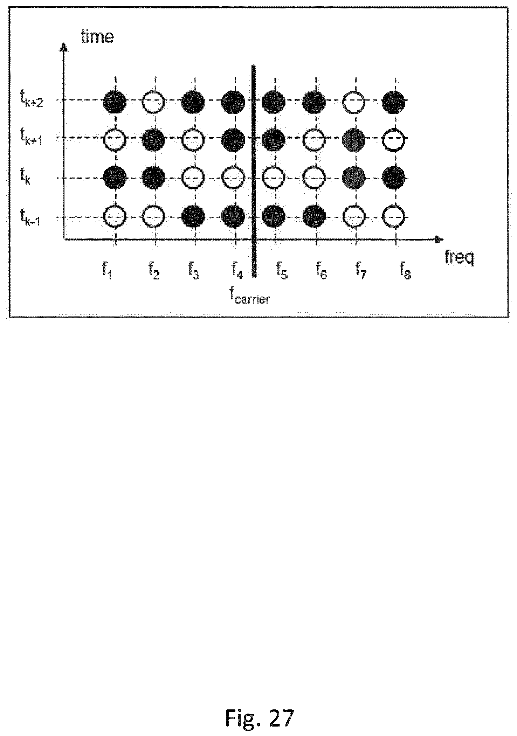

Figure 26 schematically illustrates a Time-Frequency Domain Pattern of modulated data of a G-BOC$^{AS}$ signal. Figure 26 shows the case for I =8 (=$2^3$ and V=3) carriers. This representation considers that the signal is sampled at a uniform frequency, $f_s$, equal to the inverse of sampling interval, $T_s$. Two sampling epochs $t_k$ and $t_{k+1}$ are therefore spaced by $T_s$. At each epoch $t_k$, 8 data are modulated and represented with a white circle for a binary value of 0 and a black circle for the binary value of 1. Here the pulse shape $p_i(t_k)$ and the corresponding spectral occupancy are not represented for sake of clarity. In order to adapt the present invention for such a G-BOC$^{AS}$ signal it is necessary to ensure "symmetry" of the data modulated on each of the I carriers with respect to a central frequency, usually the carrier frequency. The corresponding modified Time-Frequency Domain Pattern of the G-BOC$^{AS}$ signal is represented on figure 27.

Figure 27 schematically illustrates a Time-Frequency Domain Pattern of Modulated Data of a G-BOC$^{AS}$ signal according to an embodiment of the present invention. Figure 27 shows an arrangement of data for the application of the SBP Detector during acquisition. The arrangement of data in the Time-Frequency Domain Pattern is symmetrical to the carrier frequency considered as central frequency. G-BOC$^{AS}$ processing is usually based on a Discrete Fourier Transform (DFT). To recover the data or symbol, the DFT of the G-BOC$^{AS}$ signal is calculated (DFT($2^3$) in the example of figure 27), and the values of the I Fourier components, DFT($s_{GBOCAS}(t_k)$,i), provide the values for the I data. For acquisition, it is also possible to apply the DFT operation. Using the analogy to the DSB acquisition scheme applicable for the BOC signal, the sum of squared absolute values of the I Fourier components is calculated, yielding to a Multi-Side Band (MSB) acquisition detector:

(Equation 89)

$$D_{1,GBOC^{AS}}^{MSB}(t_k) = \sum_{i=1}^{I} \left| DFT(s_{GBOC^{AS}}(t_k),i) \right|^2$$

As for the DSB acquisition approach, the square operation is necessary to be immune against the data or symbol signs.

In order to generate a detector which shall not suffer from the effect of the data or symbol signs, it is proposed to form the following alternative detector, equivalent to the SBP detector for BOC signals:

(Equation 90)

$$D_{1,GBOC^{AS}}^{SBP}(t_k) = \sum_{i=I/2+1}^{I} \left( DFT(s_{GBOC^{AS}}(t_k),I-i+1) \times DFT(s_{GBOC^{AS}}(t_k),i) \right)$$

In this expression, each DFT($s_{GBOCAS}(t_k)$,i) component is multiplied with its symmetrical component DFT($s_{GBOCAS}(t_k)$,I-i+1) with respect to the central frequency, i.e. carrier frequency.

Here again it is possible to improve the acquisition performances by adding non-coherently different detectors computed on successive coherent integration times yielding:

## (Equation 91)

$$D^{SBP}_{NC,GBOC^{AS}}(t_k) = \sum^{N_{NC}} \left\| D^{SBP}_{1,GBOC^{AS}}(t_k) \right\|^2$$

Due to the independence of the noise contribution in each Fourier component DFT($s_{GBOCAS}(t_k)$,i), each of the I/2 products in the former expression is centred, and therefore the sum of the 1/2 products too. Hence the distribution for the $D^{SBP}_{GBOC^{AS}}(t)$ detector is centred. As a consequence, the advantages (and drawbacks) identified in the case of the application of the SBP detector for the BOC, and Generalized BOC signal acquisition can be re-applied here too. One constraint is that by imposing a spectral symmetry of the data modulated onto the G-BOC$^{AS}$ signal, the effective symbol or data rate is reduced by a factor of 2, when compared to a G-BOC$^{AS}$ signal which would not be suited for the SBP acquisition scheme.

If the symmetry between pairs of data modulated on different carriers is not ensured at each epoch $t_k$, but at two different epochs $t_k$ and $t_{k+l}$, it is still possible to multiply the corresponding components DFT($s_{GBOCAS}(t_k)$,i) and DFT($s_{GBOCAS}(t_{k+l})$,I-i+1), but the phase delay between the two identical data transmitted on symmetrical frequency needs to be compensated. The expression of the modified detector output accounting for data which are time-differed within the pairs is following

## (Equation 92)

$$D^{SBP}_{1,GBOC^{AS}}(t_k) = \sum^{I}_{i=I/2+1} \left( DFT(s_{GBOC^{AS}}(t_k), I-i+1) \times DFT(s_{GBOC^{AS}}(t_k), i) \times \varphi(f_i(t_k), \delta t^i(t_k)) \right)$$

Here, the correction factor $\varphi(f_i(t_k),\delta t_i(t_k))$ which enables to compensate for the differed time between identical data within each pair of components is given by the following expression:

## (Equation 93)

$$\varphi(f_i(t_k), \delta t^i(t_k)) = \exp(-2\pi j f_i(t_k) \delta t^i(t_k))$$

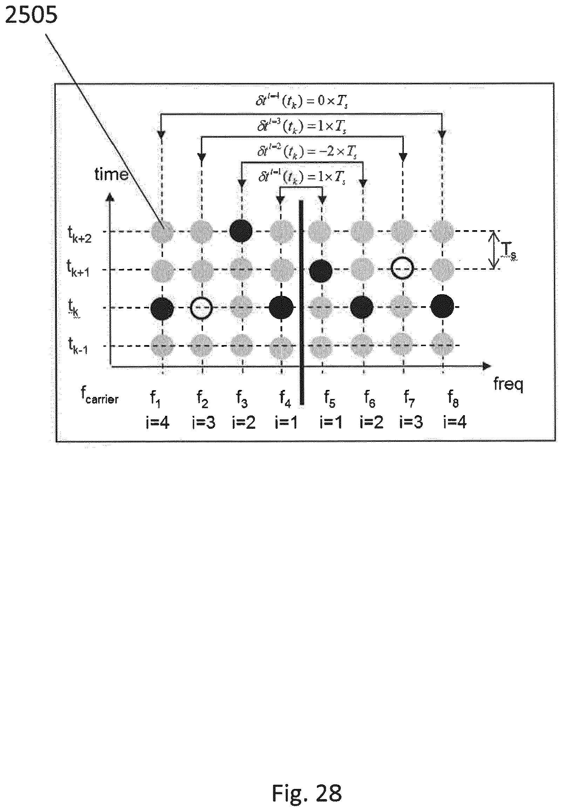

Here $\delta t^i(t_k)$ represents the time delay between two identical data transmitted on symmetrical frequencies which depend on the component index i and epoch $t_k$ as indicated on Figure 28.

The main difference w.r.t. the case when the data pattern has been symmetrized is that each data corresponding to a frequency i and epoch $t_k$ has to be involved only once in expression (Equation 92).

Here again it is possible to improve the acquisition performances by adding non-coherently different detectors computed on successive coherent integration times yielding:

## (Equation 94)

$$D^{SBP}_{NC,GBOC^{AS}}(t_k) = \sum^{N_{NC}} \left\| D^{SBP}_{1,GBOC^{AS}}(t_k) \right\|^2$$

Figure 28 schematically illustrates a Time-Frequency Domain Pattern of Modulated data of a G-BOC$^{AS}$ signal according to an embodiment of the present invention. Figure 28 shows an arrangement of data for epoch $t_k$ for the application of the SBP detector for the acquisition of a G-BOC$^{AS}$ signals when identical data belonging to two symmetrical components are differed. For each pair of components (i=1, 2, 3 and 4), the time offset $\delta t^i(t_k)$ is represented for each

pair of components $f_i$. The data which are not part of the calculation of the detector output $D_{GBOC^{AS}}^{SBP}(t_k)$ for epoch $t_k$ are represented with 2505. The sampling interval $T_s$ is also represented.

## Claims

1. A method for signal acquisition of a Generalized Binary Offset Carrier, G-BOC, modulated signal comprising K elementary BOC($M_k$,$N_k$)-modulated signals, the method comprising:

retrieving, for each of the K elementary BOC($M_k$,$N_k$)-modulated signals, a lower sideband signal and an upper sideband signal by respectively up-converting and down-converting the respective elementary BOC($M_k$,$N_k$)-modulated signal under use of a sub-carrier frequency $f_{sc,k}$ corresponding to the respective elementary BOC($M_k$,$N_k$)-modulated signal and by respectively low-pass filtering the respective up-converted and down-converted elementary BOC($M_k$,$N_k$)-modulated signal;
respectively correlating a replica modulated with the primitive pulse shape involved in the generation of the BOC($M_k$,$N_k$)-modulated signal such as a binary phase shift keying, BPSK, pulse shape with the retrieved lower and upper sideband signals, wherein the replica has a chip rate and a spreading sequence according to the respective elementary BOC($M_k$,$N_k$)-modulated signal and the replica is generated on the basis of a code delay hypothesis and a Doppler frequency hypothesis;
applying either step (a) or step (b), where step (a) comprises:

multiplying the respective correlation results with each other by complex or complex conjugate multiplication;
generating a first detector output by adding the corresponding K complex or K complex conjugate multiplications and/or generating a second detector output by adding $N_{NC}$ successive detector outputs, each being the sum of the K complex or K complex conjugate multiplications; and step (b) comprises:
for pairs of distinct elements in a group of K, for each identified pair of signals si and sj, multiplying the correlating results derived from the retrieved lower sideband signal of si, $R_{si}^{left}(t)$ with the correlation result derived from the upper sideband signal si, $R_{si}^{right}(t)$, by complex multiplication and multiplying the correlating result derived from the retrieved lower sideband signal of sj, $R_{sj}^{left}(t)$, with the correlation result derived from the upper sideband signal sj, $R_{sj}^{right}(t)$, by complex multiplication; when K=2, a first detector output is generated as

$$D_{1,Conj*,GBOC_{AM}}^{SBP,2}(\Delta\tau,\varepsilon_{f_D}) = \left(R_{s_1}^{Left}(t) \times R_{s_1}^{Right}(t)\right) \times \overline{\left(R_{s_2}^{Left}(t) \times R_{s_2}^{Right}(t)\right)}$$

when K> = 2, a second detector output is generated as

$$D_{1,Conj,GBOC_{AM}}^{SBP,K}(\Delta\tau,\varepsilon_{f_D}) =$$

$$\sum_{u=1}^{\binom{K}{2}}\left\{\left(R_{s_i}^{Left}(t) \times R_{s_i}^{Right}(t)\right) \times \overline{\left(R_{s_j}^{Left}(t) \times R_{s_j}^{Right}(t)\right)} + \overline{\left(R_{s_i}^{Left}(t) \times R_{s_i}^{Right}(t)\right)} \times \left(R_{s_j}^{Left}(t) \times R_{s_j}^{Right}(t)\right)\right\}_{\{s_i,s_j\}}$$

acquiring the G-BOC-modulated signal corresponding to the code delay hypothesis and Doppler frequency hypothesis, when the first and/or second detector output being compared to a detection threshold indicates detection.

2. The method according to claim 1, wherein the detection threshold is set to a probability of false alarm or a probability of missed detection.

3. The method according to any one of the foregoing claims, wherein correlating comprises a coherent integration, wherein the coherent integration is performed over a time duration being equal or lower than a symbol duration, when symbols or data are included in data modulated on the G-BOC-modulated signal.

4. The method according to claim 3, wherein the time duration for the coherent integration time is based on a dynamic of a link between a transmitter and a receiver.

5. The method according to any one of the foregoing claims, wherein a hardware group delay and/or a carrier delay is estimated and included in the complex or complex conjugate multiplication, wherein the carrier delay is based on an ionospheric effect.

6. The method according to any one of the foregoing claims, wherein only the real part of the detector output indicates detection.

7. The method according to claim 6, wherein only a positive detector output is compared to the detection threshold and a negative detector output is discarded or ignored.

8. The method according to any one of the foregoing claims, wherein the G-BOC-modulated signal comprises K sub-carriers, wherein K is an integer number, wherein the K sub-carriers are multiplexed either with an amplitude or a time multiplexing scheme, wherein each of the K sub-carriers is modulated with data or not.

9. The method according to claim 8, wherein, in particular when the G-BOC-modulated signal is modulated with symbols, a number of symbols is $I=2\times K$ corresponding to the number of carriers I, and a time-frequency domain pattern of the I symbols is symmetrical or is not symmetrical to a central carrier of the G-BOC-modulated signal.

10. The method according to claims 8 or 9, wherein the I symbols correspond to I Fourier components forming a symmetrical time-frequency pattern and are determined by a Discrete or Fast Fourier Transform, and wherein the step of combining comprises complex multiplication of the Fourier components.

11. The method according to claims 8 or 9, wherein the I symbols correspond to I Fourier components forming an asymmetrical time-frequency pattern determined by a Discrete or Fast Fourier Transform, and wherein the step of combining comprises:

  selecting pairs of the I symbols over time such that their values is identical and their frequencies are symmetrical to the central carrier of the G-BOC-modulated signal,
  multiplying the selected pairs with a correction factor accounting for the time offset between each of the selected pairs, and
  complex multiplying the corrected I Fourier components.

12. A computer program which when carried out on a processor of a device for signal acquisition of a Generalized Binary Offset Carrier, G-BOC, causes the processor to carry out the method of any one of the foregoing claims.

13. A storage device storing a computer program according to claim 12.

14. A device for signal acquisition of a Generalized Binary Offset Carrier, G-BOC, modulated signal comprising K elementary $BOC(M_k,N_k)$-modulated signals, comprising:

  an up-converter and a low-pass filter adapted to retrieve, for each of the K elementary $BOC(M_k,N_k)$-modulated signals, a lower sideband signal by up-converting the respective elementary $BOC(M_k,N_k)$-modulated signal under use of a sub-carrier frequency $f_{sc,k}$ corresponding to the respective elementary $BOC(M_k,N_k)$-modulated signal and by low-pass filtering the respective up-converted elementary $BOC(M_k,N_k)$-modulated signal;
  a down-converter and a low-pass filter adapted to retrieve, for each of the K elementary $BOC(M_k,N_k)$-modulated signals an upper sideband signal by down-converting the respective elementary $BOC(M_k,N_k)$-modulated signal under use of the sub-carrier frequency $f_{sc,k}$ corresponding to the respective elementary $BOC(M_k,N_k)$-modulated signal and by low-pass filtering the respective down-converted elementary $BOC(M_k,N_k)$-modulated signal;
  a correlating unit adapted to respectively correlate a replica modulated with the primitive pulse shape involved in the generation of the $BOC(M_k,N_k)$-modulated signal such as a binary phase shift keying, BPSK, pulse shape with the retrieved lower and upper sideband signals, wherein the replica has a chip rate and a spreading sequence according to the respective elementary $BOC(M_k,N_k)$-modulated signal and the replica is generated on the basis of a code delay hypothesis and a Doppler frequency hypothesis;
  a detecting unit adapted to either (a):
  multiply the respective correlation results with each other by complex or complex conjugate multiplication and to generate a detector output by adding the corresponding K complex or K complex conjugate multiplications and/or by adding $N_{NC}$ successive detector outputs, each being the sum of the K complex or K complex conjugate multiplications or (b):

for pairs of distinct elements in a group of K, for each identified pair of signals si and sj, multiplying the correlating results derived from the retrieved lower sideband signal of si, $R_{si}^{left}(t)$ with the correlation result derived from the upper sideband signal si, $R_{si}^{right}(t)$, by complex multiplication and multiplying the correlating results derived from the retrieved lower sideband signal of sj, $R_{sj}^{left}(t)$, with the correlation result derived from the upper sideband signal sj, $R_{sj}^{right}(t)$, by complex multiplication; when K=2, a detector output is generated as

$$D_{1,Conj*,GBOC_{AM}}^{SBP,2}\left(\Delta\tau,\varepsilon_{f_D}\right)=\left(R_{s_1}^{Left}(t)\times R_{s_1}^{Right}(t)\right)\times\overline{\left(R_{s_2}^{Left}(t)\times R_{s_2}^{Right}(t)\right)}$$

when K> = 2, a detector output is generated as

$$D_{1,Conj,GBOC_{AM}}^{SBP,K}\left(\Delta\tau,\varepsilon_{f_D}\right)=$$

$$\sum_{u=1}^{\binom{K}{2}}\left\{\left(R_{s_i}^{Left}(t)\times R_{s_i}^{Right}(t)\right)\times\overline{\left(R_{s_j}^{Left}(t)\times R_{s_j}^{Right}(t)\right)}+\overline{\left(R_{s_i}^{Left}(t)\times R_{s_i}^{Right}(t)\right)}\times\left(R_{s_j}^{Left}(t)\times R_{s_j}^{Right}(t)\right)\right\}_{\{s_i,s_j\}}$$

and

an acquisition unit adapted to acquire the G-BOC-modulated signal corresponding to the code delay hypothesis and the Doppler frequency hypothesis, when the detector output being compared to a detection threshold indicates detection.

## Patentansprüche

1. Verfahren zur Signalerfassung eines Generalized Binary Offset Carrier, G-BOC, modulierten Signals umfassend K elementare BOC(Mk,Nk) modulierte Signale, wobei das Verfahren umfasst:

Erhalten eines unteren Seitenbandsignals und eines oberen Seitenbandsignals für jedes der K elementaren BOC(Mk,Nk) modulierten Signale durch jeweilige Aufwärts- und Abwärtskonvertierung des jeweiligen elementaren BOC(Mk,Nk) modulierten Signals unter Verwendung einer Hilfsträgerfrequenz $fsc_{,K}$, die dem jeweiligen elementaren BOC(Mk,Nk) modulierten Signal entspricht, und durch jeweilige Tiefpaßfilterung des jeweiligen auf- und abwärtskonvertierten elementaren BOC(Mk,Nk) modulierten Signals;

jeweiliges Korrelieren einer Kopie, die mit der primitiven Pulsform moduliert ist, die an der Erzeugung des BOC(Mk,Nk) modulierten Signals beteiligt ist, wie beispielsweise eine binäre Phasenumtastung, BPSK, -Pulsform, mit den erhaltenen unteren und oberen Seitenbandsignalen, wobei die Kopie eine Chiprate und eine Spreizsequenz entsprechend dem jeweiligen elementaren BOC(Mk,Nk) modulierten Signal aufweist und die Kopie auf der Grundlage einer Codeverzögerungshypothese und einer Dopplerfrequenzhypothese erzeugt wird;

entweder Schritt (a) oder Schritt (b) anzuwenden, wobei Schritt (a) umfasst:

Multiplizieren der jeweiligen Korrelationsergebnisse miteinander durch komplexe oder komplexe konjugierte Multiplikation;

Erzeugen eines ersten Detektorausgangs durch Addieren der entsprechenden K komplexen oder K konjugiert komplexen Multiplikationen und/oder Erzeugen eines zweiten Detektorausgangs durch Addieren von $N_{NC}$ aufeinanderfolgenden Detektorausgängen, wobei jeder die Summe der K komplexen oder K konjugiert komplexen Multiplikationen ist; und Schritt (b) umfaßt:

für Paare von distinkten Elementen in einer Gruppe von K, für jedes identifizierte Paar von Signalen si und sj, Multiplizieren der Korrelationsergebnisse, die aus dem erhaltenen unteren Seitenbandsignal von si, $R_{si}^{left}(t)$, abgeleitet wurden, mit dem Korrelationsergebnis, das aus dem oberen Seitenbandsignal si, $R_{si}^{right}(t)$, abgeleitet wurde durch komplexe Multiplikation und Multiplizieren des Korrelationsergebnisses, das aus dem erhaltenen unteren Seitenbandsignal von sj, $R_{sj}^{left}(t)$, abgeleitet wurde, mit dem Korrelationsergebnis, das aus dem oberen Seitenbandsignal sj, $R_{sj}^{right}(t)$ abgeleitet wurde durch komplexe Multiplikation abgeleitet wurde; wenn K=2, wird eine erste Detektorausgabe erzeugt als

$$D_{1,Conj*,GBOC_{AM}}^{SBP,2}\left(\Delta\tau,\varepsilon_{f_D}\right) = \left(R_{s_1}^{Left}(t) \times R_{s_1}^{Right}(t)\right) \times \overline{\left(R_{s_2}^{Left}(t) \times R_{s_2}^{Right}(t)\right)}$$

wenn K>=2, wird eine zweite Detektorausgabe erzeugt als

$$D_{1,Conj,GBOC_{AM}}^{SBP,K}\left(\Delta\tau,\varepsilon_{f_D}\right) =$$

$$\sum_{u=1}^{\binom{K}{2}}\left\{\left(R_{s_i}^{Left}(t) \times R_{s_i}^{Right}(t)\right) \times \overline{\left(R_{s_j}^{Left}(t) \times R_{s_j}^{Right}(t)\right)} + \overline{\left(R_{s_i}^{Left}(t) \times R_{s_i}^{Right}(t)\right)} \times \left(R_{s_j}^{Left}(t) \times R_{s_j}^{Right}(t)\right)\right\}_{\{s_i,s_j\}}$$

Erfassen des G-BOC modulierten Signals, das der Code-Verzögerungshypothese und der Dopplerfrequenzhypothese entspricht, wenn der erste und/oder zweite Detektorausgang mit einer Detektionsschwelle verglichen wird, die eine Detektion anzeigt.

2. Verfahren nach Anspruch 1, bei dem die Detektionsschwelle auf eine Wahrscheinlichkeit eines Fehlalarms oder eine Wahrscheinlichkeit einer versäumten Erfassung eingestellt wird.

3. Verfahren nach einem der vorstehenden Ansprüche, wobei Korrelieren eine kohärente Integration umfasst, wobei die kohärente Integration über eine Zeitdauer durchgeführt wird, die gleich oder kleiner als eine Symboldauer ist, wenn Symbole oder Daten in Daten enthalten sind, die auf das G-BOC modulierte Signal moduliert sind.

4. Verfahren nach Anspruch 3, wobei die Zeitdauer für die kohärente Integrationszeit auf einer Dynamik einer Verbindung zwischen einem Sender und einem Empfänger basiert.

5. Verfahren nach einem der vorstehenden Ansprüche, wobei eine Hardwaregruppenverzögerung und/oder eine Trägerverzögerung geschätzt und in die komplexe oder konjugiert komplexe Multiplikation einbezogen wird, wobei die Trägerverzögerung auf einem ionosphärischen Effekt beruht.

6. Verfahren nach einem der vorstehenden Ansprüche, wobei nur der Realteil der Detektorausgabe die Detektion anzeigt.

7. Verfahren nach Anspruch 6, wobei dem nur ein positiver Detektorausgang mit der Detektionsschwelle verglichen wird und ein negativer Detektorausgang verworfen oder ignoriert wird.

8. Verfahren nach einem der vorstehenden Ansprüche, wobei das G-BOC modulierte Signal K Unterträger umfasst, wobei K eine ganze Zahl ist, wobei die K Unterträger entweder mit einem Amplituden- oder einem Zeitmultiplexschema gemultiplext werden, wobei jeder der K Unterträger mit Daten moduliert wird oder nicht.

9. Verfahren nach Anspruch 8, wobei, insbesondere dann, wenn das G-BOC modulierte Signal mit Symbolen moduliert wird, eine Anzahl von Symbolen I=2xK entsprechend der Anzahl von Trägern I ist, und ein Zeit-Frequenz-Domänenmuster von I-Symbolen symmetrisch oder nicht symmetrisch zu einem zentralen Träger des G-BOC modulierten Signals ist.

10. Verfahren nach Anspruch 8 oder 9, wobei die I-Symbole I-Fourier-Komponenten entsprechen, die ein symmetrisches Zeit-Frequenz-Muster bilden und durch eine diskrete oder schnelle Fourier-Transformation bestimmt werden, und wobei der Schritt des Kombinierens eine komplexe Multiplikation der Fourier-Komponenten umfasst.

11. Verfahren nach Anspruch 8 oder 9, wobei die I-Symbole I-Fourier-Komponenten entsprechen, die ein asymmetrisches Zeit-Frequenz-Muster bilden, das durch eine diskrete oder schnelle Fourier-Transformation bestimmt wird, und wobei der Schritt des Kombinierens umfasst:

Auswählen von Paaren der I-Symbole über der Zeit, so dass ihre Werte identisch sind und ihre Frequenzen symmetrisch zu dem zentralen Träger des G-BOC modulierten Signals sind,
Multiplizieren der ausgewählten Paare mit einem Korrekturfaktor, der den Zeitversatz zwischen jedem der ausgewählten Paare berücksichtigt, und
komplexes Multiplizieren der korrigierten I-Fourier-Komponenten.

12. Computerprogramm, das, wenn es auf einem Prozessor einer Vorrichtung zur Signalerfassung eines Generalized Binary Offset Carriers, G-BOC, ausgeführt wird, den Prozessor veranlasst, das Verfahren nach einem der vorstehenden Ansprüche auszuführen.

13. Speichergerät, das ein Computerprogramm nach Anspruch 12 speichert.

14. Vorrichtung zur Signalerfassung eines Generalized Binary Offset Carrier, G-BOC, modulierten Signals umfassend K elementare BOC(Mk,Nk) modulierte Signale, umfassend:

einen Aufwärtsumsetzer und einen Tiefpassfilter, die ausgebildet sind, für jedes der K elementaren BOC(Mk,Nk) modulierten Signale ein unteres Seitenbandsignals zu erhalten durch Aufwärtsumsetzen des jeweiligen elementaren BOC(Mk,Nk) modulierten Signals unter Verwendung einer Unterträgerfrequenz $f_{sc,k}$, die dem jeweiligen elementaren BOC(Mk,Nk) modulierten Signal entspricht, und durch Tiefpassfilterung des jeweiligen aufwärtsumgesetzten elementaren BOC(Mk,Nk) modulierten Signals;

einen Abwärtsumsetzer und einen Tiefpassfilter, die ausgebildet sind, für jedes der K elementaren BOC(Mk,Nk) modulierten Signale ein oberes Seitenbandsignal zu erhalten durch Abwärtsumsetzen des jeweiligen elementaren BOC(Mk,Nk) modulierten Signals unter Verwendung der Unterträgerfrequenz $f_{sc,k}$, die dem jeweiligen elementaren BOC(Mk,Nk)-modulierten Signal entspricht, und durch Tiefpassfilterung des jeweiligen abwärtsumgesetzten elementaren BOC(Mk,Nk)-modulierten Signals;

eine Korrelationseinheit, die ausgebildet ist, jeweils eine Kopie, die mit der primitiven Pulsform moduliert ist, die an der Erzeugung des BOC(Mk,Nk) modulierten Signals beteiligt ist, wie beispielsweise eine binäre Phasenumtastung, BPSK, Pulsform, mit den erhaltenen unteren und oberen Seitenbandsignalen zu korrelieren, wobei die Kopie eine Chiprate und eine Spreizsequenz gemäß dem jeweiligen elementaren BOC(Mk,Nk) modulierten Signal aufweist und die Kopie auf der Grundlage einer Codeverzögerungshypothese und einer Dopplerfrequenzhypothese erzeugt wird;

eine Detektoreinheit, die ausgebildet ist, entweder (a):
die jeweiligen Korrelationsergebnisse miteinander durch komplexe oder konjugiert komplexe Multiplikation zu multiplizieren und einen Detektorausgang durch Addition der entsprechenden K komplexen oder K konjugiert komplexen Multiplikationen und/oder durch Addition von $N_{NC}$ aufeinanderfolgenden Detektorausgaben zu erzeugen, wobei jeder die Summe der K komplexen oder K konjugiert komplexen Multiplikationen ist, oder (b):
für Paare von distinkten Elementen in einer Gruppe von K, für jedes identifizierte Paar von Signalen si und sj, die Korrelationsergebnisse, die aus dem erhaltenen unteren Seitenbandsignal von si, $R_{si}^{left}(t)$, abgeleitet wurden, mit dem Korrelationsergebnis zu multiplizieren, das aus dem oberen Seitenbandsignal si, $R_{si}^{right}(t)$, abgeleitet wurde durch komplexe Multiplikation und die Korrelationsergebnisse, die aus dem erhaltenen unteren Seitenbandsignal von sj, $R_{sj}^{left}(t)$, abgeleitet wurden, mit dem Korrelationsergebnis zu multiplizieren, das aus dem oberen Seitenbandsignal sj, $R_{sj}^{right}(t)$, abgeleitet wurde durch komplexe Multiplikation; wenn K=2, ein Detektorausgang erzeugt wird als

$$D_{1,Conj*,GBOC_{AM}}^{SBP,2}\left(\Delta\tau,\varepsilon_{f_D}\right)=\left(R_{s_1}^{Left}(t)\times R_{s_1}^{Right}(t)\right)\times\overline{\left(R_{s_2}^{Left}(t)\times R_{s_2}^{Right}(t)\right)}$$

wenn K>=2, ein Detektorausgang erzeugt wird als

$$D_{1,Conj,GBOC_{AM}}^{SBP,K}\left(\Delta\tau,\varepsilon_{f_D}\right)=$$

$$\sum_{u=1}^{\binom{K}{2}}\left\{\left(R_{s_i}^{Left}(t)\times R_{s_i}^{Right}(t)\right)\times\overline{\left(R_{s_j}^{Left}(t)\times R_{s_j}^{Right}(t)\right)}+\overline{\left(R_{s_i}^{Left}(t)\times R_{s_i}^{Right}(t)\right)}\times\left(R_{s_j}^{Left}(t)\times R_{s_j}^{Right}(t)\right)\right\}_{\{s_i,s_j\}}$$

und

EP 3 454 090 B1

eine Erfassungseinheit, die ausgebildet ist, das G-BOC modulierte Signal zu erfassen, das der Code-Verzögerungshypothese und der Dopplerfrequenzhypothese entspricht, wenn der Detektorausgang mit einer Detektionsschwelle verglichen wird, die eine Detektion anzeigt.

**Revendications**

1. Procédé d'acquisition de signaux d'un signal modulé de porteuse décalée binaire généralisée, G-BOC, comprenant des signaux modulés BOC($M_k$,$N_k$) élémentaires K, le procédé consistant à :

à récupérer, pour chacun des signaux modulés BOC($M_k$,$N_k$) élémentaires K, un signal de bande latérale inférieure et un signal de bande latérale supérieure par respectivement, conversion ascendante et conversion descendante du signal modulé BOC($M_k$,$N_k$) élémentaire respectif à l'aide d'une fréquence de sous-porteuse $f_{sc,k}$ correspondant au signal modulé BOC($M_k$,$N_k$) élémentaire respectif et par filtrage passe-bas, respectivement, du signal modulé BOC($M_k$, $N_k$) élémentaire respectif converti vers le haut et converti vers le bas;
corréler respectivement une réplique modulée avec la forme d'impulsion primitive impliquée dans la génération du signal modulé BOC($M_k$, $N_k$) telle qu'une forme d'impulsion de modulation par déplacement binaire de phase, BPSK, avec les signaux de bande latérale inférieure et supérieure extraits, la réplique ayant un débit des éléments et une séquence d'étalement selon le signal modulé BOC($M_k$, $N_k$) élémentaire respectif et la réplique étant générée sur la base d'une hypothèse de retard de code et d'une hypothèse de fréquence Doppler ;
appliquer soi l'étape (a) soit l'étape (b) l'étape (a) consistant à :

multiplier les résultats de corrélation respectifs par multiplication conjuguée complexe ou multiplication complexe ;
générer une première sortie de détecteur par l'ajout des multiplications conjuguées complexes K ou complexes K correspondantes et/ou générer une seconde sortie de détecteur par l'ajout de N sorties de détecteur successives $N_{NC}$, chacune étant la somme des multiplications conjuguées complexes K ou complexes K ;
et l'étape (b) consistant à :
pour les paires d'éléments distincts dans un groupe de K, pour chaque paire identifiée de signaux si et sj, multiplier les résultats de corrélation dérivés du signal de bande latérale inférieure récupéré de si, $R_{si}^{left}(t)$ par le résultat de corrélation dérivé par le signal de bande latérale supérieure si, $R_{si}^{right}(t)$, par multiplication complexe et multiplier le résultat de corrélation dérivé du signal de bande latérale inférieure de sj, $R_{sj}^{left}(t)$, avec le résultat de corrélation dérivé du signal de bande latérale supérieure sj, $R_{sj}^{right}(t)$, par multiplication complexe ; si K=2, une première sortie de détecteur est généré comme suit :

$$D_{1,Conj*,GBOC_{AM}}^{SBP,2}\left(\Delta\tau,\varepsilon_{f_D}\right) = \left(R_{s_1}^{Left}(t) \times R_{s_1}^{Right}(t)\right) \times \overline{\left(R_{s_2}^{Left}(t) \times R_{s_2}^{Right}(t)\right)}$$

si K>=2, une seconde sortie de détecteur est générée comme suit :

$$D_{1,Conj,GBOC_{AM}}^{SBP,K}\left(\Delta\tau,\varepsilon_{f_D}\right) =$$

$$\sum_{u=1}^{\binom{K}{2}} \left\{ \left(R_{s_i}^{Left}(t) \times R_{s_i}^{Right}(t)\right) \times \overline{\left(R_{s_j}^{Left}(t) \times R_{s_j}^{Right}(t)\right)} + \overline{\left(R_{s_i}^{Left}(t) \times R_{s_i}^{Right}(t)\right)} \times \left(R_{s_j}^{Left}(t) \times R_{s_j}^{Right}(t)\right) \right\}_{\{s_i,s_j\}}$$

acquérir le signal modulé G-BOC-correspondant à l'hypothèse de retard de code et à l'hypothèse de fréquence Doppler lorsque le premier et/ou le second détecteur étant comparé à un seuil de détection indique la détection.

2. Procédé selon la revendication 1, le seuil de détection étant fixé à une probabilité de fausse alarme ou une probabilité de détection manquée

3. Procédé selon l'une quelconque des revendications précédentes, la corrélation comprenant une intégration cohérente, l'intégration cohérente étant effectuée sur une durée temporelle inférieure ou égale à une durée de symbole, lorsque les symboles ou les données sont compris(es) dans les données modulées sur le signal modulé G-BOC.

4. Procédé selon la revendication 3, la durée temporelle pour le temps d'intégration cohérente étant basée sur une dynamique d'une liaison entre un émetteur et un récepteur.

5. Procédé selon l'une quelconque des revendications précédentes, un retard de groupe matériel et/ou un retard de porteuse étant estimé et inclus dans la multiplication conjuguée complexe ou la multiplication complexe, le retard de porteuse étant basé sur un effet ionosphérique.

6. Procédé selon l'une quelconque des revendications précédentes, seule la partie réelle de la sortie de détecteur indiquant la détection.

7. Procédé selon la revendication 6, seule une sortie de détecteur positive étant comparée au seuil de détection et une sortie de détecteur négative étant supprimée ou ignorée.

8. Procédé selon l'une quelconque des revendications précédentes, le signal modulé G-BOC comprenant des sous-porteuses K, K étant un nombre entier, les sous-porteuses K étant multiplexées soit par multiplexage temporel soit par amplitude, chacune des sous-porteuse K étant modulées avec les données ou non.

9. Procédé selon la revendication 8, lorsque le signal modulé G-BOC est modulé avec des symboles, un nombre de symbole étant I=2xK correspondant au nombre de porteuses I, et un motif de domaine temps-fréquence des symboles I étant symétrique ou étant non symétrique à une porteuse centrale du signal modulé G-BOC.

10. Procédé selon la revendication 8 ou la revendication 9, les symboles I correspondant à des composantes de Fourier I formant un motif temps-fréquence symétrique et étant déterminées par une transformée de Fourier rapide ou discrète, et l'étape de combinaison consistant à multiplier les composantes de Fourier par multiplication complexe.

11. Procédé selon la revendication 8 ou la revendication 9, les symboles I correspondant aux composantes de Fourier I Fourier formant un motif de temps-fréquence asymétrique déterminé par transformée de Fourier rapide ou discrète, l'étape de combinaison consistant à :

   sélectionner les paires de symboles I dans le temps de sorte que leurs valeurs soit identique et leurs fréquences soient symétriques à la porteuse centrale du signal modulé G-BOC,
   multiplier les paires sélectionnées par un facteur de correction représentant le décalage temporel entre chacune des paires sélectionnées, et
   procéder à la multiplication complexe des composantes de I Fourier.

12. Programme informatique qui, lorsqu'il est exécuté sur un processeur d'un dispositif pour l'acquisition de signaux d'une porteuse de décalage binaire généralisée, G-BOC, amenant le processeur à exécuter le procédé selon l'une quelconque des revendications précédentes.

13. Mémoire mémorisant un programme informatique selon la revendication 12.

14. Dispositif pour acquérir d'acquisition de signaux d'un signal modulé de porteuse décalée binaire généralisée, G-BOC, comprenant des signaux modulés $BOC(M_k,N_k)$ élémentaires K, comprenant :

   un convertisseur ascendant et un filtre passe-bas conçu pour récupérer, pour chacun des signaux modulés $BOC(M_k,N_k)$ élémentaires K, un signal de bande latérale inférieure par conversion ascendante du signal modulé $BOC(M_k,N_k)$ élémentaire respectif à l'aide d'une fréquence de sous-porteuse $f_{sc,k}$ correspondant au signal modulé $BOC(M_k,N_k)$ élémentaire respectif et par filtrage passe-bas du signal modulé $BOC(M_k, N_k)$ élémentaire respectif converti vers le haut ;
   un convertisseur descendant et un filtre passe-bas pour récupérer pour chacun des signaux modulés $BOC(M_k,N_k)$ élémentaires K, un signal de bande latérale supérieure par conversion descendante du signal modulé $BOC(M_k,N_k)$ élémentaire respectif à l'aide d'une fréquence de sous-porteuse $f_{sc,k}$ correspondant au signal modulé $BOC(M_k,N_k)$ élémentaire respectif et par filtrage passe-bas du signal modulé $BOC(M_k, N_k)$ élémentaire respectif converti vers le bas ,
   une unité de corrélation conçue pour corréler respectivement une réplique modulée avec la forme d'impulsion primitive impliquée dans la génération du signal modulé $BOC(M_k, N_k)$ telle qu'une forme d'impulsion de modulation par déplacement binaire de phase, BPSK, avec les signaux de bande latérale inférieure et supérieure extraits, la réplique ayant un débit des éléments et une séquence d'étalement selon le signal modulé BOC($M_k$, $N_k$) élémentaire respectif et la réplique étant générée sur la base d'une hypothèse de retard de code et d'une hypothèse de fréquence Doppler ;

une unité de détection conçue soit pour (a) :

multiplier les résultats de corrélation respectifs par multiplication conjuguée complexe ou multiplication complexe et pour générer une première sortie de détecteur par l'ajout des multiplications conjuguées complexes K ou complexes K correspondantes et/ou générer une seconde sortie de détecteur par l'ajout de N sorties de détecteur successives $N_{NC}$, chacune étant la somme des multiplications conjuguées complexes K ou complexes K ; soit pour (b) :

pour les paires d'éléments distincts dans un groupe de K, pour chaque paire identifiée de signaux si et sj, multiplier les résultats de corrélation dérivés du signal de bande latérale inférieure récupéré de si, $R_{si}^{left}(t)$ par le résultat de corrélation dérivé par le signal de bande latérale supérieure si, $R_{si}^{right}(t)$, par multiplication complexe et multiplier le résultat de corrélation dérivé du signal de bande latérale inférieure de sj, $R_{sj}^{left}(t)$, avec le résultat de corrélation dérivé du signal de bande latérale supérieure sj, $R_{sj}^{right}(t)$, par multiplication complexe ; si K=2, une première sortie de détecteur est généré comme suit :

$$D_{1,Conj*,GBOC_{AM}}^{SBP,2}\left(\Delta\tau,\varepsilon_{f_D}\right) = \left(R_{s_1}^{Left}(t) \times R_{s_1}^{Right}(t)\right) \times \overline{\left(R_{s_2}^{Left}(t) \times R_{s_2}^{Right}(t)\right)}$$

si K>=2, une sortie de détecteur est générée comme suit :

$$D_{1,Conj,GBOC_{AM}}^{SBP,K}\left(\Delta\tau,\varepsilon_{f_D}\right) =$$

$$\sum_{u=1}^{\binom{K}{2}}\left\{\left(R_{s_i}^{Left}(t) \times R_{s_i}^{Right}(t)\right) \times \overline{\left(R_{s_j}^{Left}(t) \times R_{s_j}^{Right}(t)\right)} + \overline{\left(R_{s_i}^{Left}(t) \times R_{s_i}^{Right}(t)\right)} \times \left(R_{s_j}^{Left}(t) \times R_{s_j}^{Right}(t)\right)\right\}_{\{s_i,s_j\}}$$

et

une unité d'acquisition pour acquérir le signal modulé G-BOC-correspondant à l'hypothèse de retard de code et à l'hypothèse de fréquence Doppler lorsque le premier et/ou le second détecteur étant comparé à un seuil de détection indique la détection.

100

122

130

105

110 115

120 180

Antenna

AGC

Digital
Receiver
Channel Q

Digital
Receiver
el 3

Digital
Receiver
el 2

Pre-amp

Down-
Converter

Analog IF

A/D
Converter

Blanker

Digital
Receiver
Channel 1

Reference
Oscillator

Frequency
Synthetizer

Receiver
Processing

Navigation
/Processing

User
Interface

135

112 113

140

145

Fig. 1

Fig. 2

Fig. 3

Fig. 4

Auto-Correlation Function of the BOC(5,2.5)

Fig. 5

Fig. 6

Fig. 7

Fig. 8

Fig. 9

**Squarring Losses for the BOC(1,1) ($T_{ref,int}$=4ms) (PD=0.90,PFA=1.0e-3))**

Legend:
- $T_{int}$: 8ms (SBP) vs. 4ms (DSB)
- $T_{int}$: 20ms (SBP) vs. 4ms (DSB)
- $T_{int}$: 40ms (SBP) vs. 4ms (DSB)
- $T_{int}$: 60ms (SBP) vs. 4ms (DSB)
- $T_{int}$: 80ms (SBP) vs. 4ms (DSB)
- $T_{int}$: 100ms (SBP) vs. 4ms (DSB)
- $T_{int}$: 200ms (SBP) vs. 4ms (DSB)

Y-axis: Squarring Losses [dB]
X-axis: Dwell Time [s]

Fig. 10

Fig. 11

Fig. 12

Fig. 13

Fig. 14

Fig. 15

Fig. 16

Fig. 17

Fig. 18A

Fig. 18B

Fig. 19A

Fig. 19B

Fig. 20A

Fig. 20B

Fig. 21

Fig. 22

# EP 3 454 090 B1

Fig. 23

Fig. 24

Fig. 25

Fig. 26

EP 3 454 090 B1

Fig. 27

77

Fig. 28

**REFERENCES CITED IN THE DESCRIPTION**

**Patent documents cited in the description**

- US 2004071200 A1